# EUROPEAN PATENT APPLICATION

(11) **EP 4 721 579 A1**
(43) Date of publication of application: **08.04.2026**
(21) Application number: 25151053.3
(22) Date of filing: 09.01.2025
(51) Int. Cl.: A23L 2/54, A23L 2/56, C12C 7/26, C12C 7/28, C12C 12/04

(54) **BEER-FLAVOURED NON-ALCOHOLIC BEVERAGES AND METHODS OF MAKING**

(30) Priority: 02.10.2024 EP 24204377; 14.11.2024 EP 24212937
(71) Applicant: MFG Capital GmbH, 55122 Mainz (DE)
(72) Inventor: MANNWEILER, Holger, 55131 Mainz (DE)
(74) Representative: Fuchs Patentanwälte Partnerschaft mbB

(57) **Abstract**

This disclosure relates to non-alcoholic beverages with a beer like flavour and method of making such beverages. In particular, the beverage mimics flavour, appearance, and mouthfeel of beer without including any fermentation processes during its production.

## Description

This disclosure relates to non-alcoholic beverages with a beer like flavour and methods of making such beverages. In particular, the beverage mimics flavour, appearance, and mouthfeel of beer without including any fermentation processes during its production.

### Background of the Disclosure

Beer is an alcoholic beverage with a rich history dating back thousands of years and is universally enjoyed at a large scale. The culture of beer brewing in Germany is deeply rooted in its history and traditions, playing a significant role in the country's social and cultural fabric. Germany's beer brewing culture is renowned worldwide, characterized by a deep respect for tradition, quality, and variety.

Germany's beer brewing history dates back to ancient times, but it was during the Middle Ages that brewing began to take on a professional structure, with monasteries and abbeys playing a key role in its development. By the 16th century, brewing had become a significant part of German economy and culture.

One of the most defining elements of German beer culture is the Reinheitsgebot, or the Beer Purity Law, which was first enacted in 1516 in Bavaria. This law originally stipulated that beer could only be made from water, barley, and hops. The law remains a testament to the German commitment to quality and natural ingredients in beer brewing.

In recent years, Germany has seen a surge in the craft beer movement, with new breweries ex-perimenting with traditional methods and ingredients to create innovative and modern flavors. This movement has introduced more variety to the German beer landscape, embracing global brewing techniques while still holding strong to the foundational principles of the Reinheitsgebot.

Modern German breweries also emphasize sustainability, with many using organic ingredients and implementing energy-efficient processes to minimize environmental impact. This commitment to sustainability reflects the broader values of German society.

In summary, German beer culture is a blend of deep-rooted traditions, strict quality standards, and a continuous drive for sustainability. Whether through enjoying a classic Pilsner or a modern craft IPA (India Pale Ale), the culture of beer brewing in Germany offers a rich tapestry that reflects the nation's history, craftsmanship, and communal spirit.

In view of the multiple health benefits brought about by reduced alcohol consumption, the number of consumers opting for non-alcoholic refreshing beverages is increasing.

As an alternative to beer, non-alcoholic beer-flavored beverages are generally obtainable today by one of three main production methods:
i) *Stopped fermentation.* This method implies prematurely inhibiting the fermentation process, stopping the alcohol production of the fermenting micro-organisms before the alcohol reaches a concentration of 0.5%. The incomplete fermentation of sugars however could pose a disadvantage, as the result is a product with increased sweetness. Reducing the amount of malt as a source of saccharides is not a suitable solution, having a negative effect on the overall taste. Furthermore, pregnant consumers do not accept consuming beverages produced by this type of method.
ii) *Dealcoholization.* This method is based on the extraction of alcohol after the brewing process, e.g. through reverse osmosis. Primarily used by large industrial breweries, this method involves substantial energy consumption: the energy required to extract the alcohol from the beer adds up to the high amount of energy required to produce the beer. Costly and highly energy-demanding, this method is coupled to a negative environmental impact and leaves few opportunities for smaller breweries. Moreover, due to the high temperatures involved in the dealcoholization process, beverages produced by this method include burnt flavors that are perceived as unpleasant by the consumers.
iii) *Modified yeast strains.* This method uses patented, genetically modified yeast strains for the fermentation process. The yeast strains involved are modified so that the fermentation product is different from alcohol. Because of the high costs involved in providing said yeast strains, the strict conditions required during the production process (e.g. regarding temperature settings), and consumers' skepticism towards modified organisms, this method is rarely applied.

Thus, there is a need for a non-alcoholic beverage with beer-like flavor that overcomes at least some of the drawbacks summarized above. Importantly, it should have a taste that closely resembles that of a (craft) beer.

In particular, it would be useful to have a beverage that has zero alcohol, requires low additional investment in equipment, uses only small amounts of energy, and does not rely on genetically modified organisms. Further, it would be desirable for the beverage to be producible in small craft beer breweries and use only the ingredients listed in the Reinheitsgebot.

### Brief Summary of the Disclosure

The present disclosure aims to provide a method for obtaining a non-alcoholic refreshing beer-flavored beverage made from water, hops malt, and optionally yeast, as well as a non-alcohol beer-flavored refreshing beverage containing extracts of hops malt, and optionally yeast.

In a first aspect, this disclosure provides a method of making a beverage comprising
A. preparing a mash comprising malt (and/or malt extract) and water,
B. holding the mash at a temperature range of from 20°C to 90°C,
C. separating liquid fraction from the mash to obtain a wort,
D. thermal treating the wort at a temperature of at least 90°C, such as of from 90°C to 110°C, and subsequently cooling the wort,
wherein the method comprises
- optionally adding yeast to the wort at a temperature of >90°C,
- adding high temperature hops (and/or high temperature hops extract) to the wort after step D. at a wort temperature in a range of from 35°C to 90°C,
- cooling the wort to a temperature of at most 25°C after adding the high temperature hops,
- adding low temperature hops (and/or low temperature hops extract) after cooling,
- optionally holding the wort after adding the low temperature hops (and/or low temperature hops extract) at a holding temperature of at most 25°C for a holding time of at least 12 hours,
- obtaining the beverage.

It was found that the steps outlined above contribute to a beverage that has excellent flavor and extremely low alcohol levels. The optional step of adding the yeast to the wort at a high temperature immediately inactivates the yeast and disintegrates the yeast cells thereby contributing to a good mouthfeel of the beverage. Adding hops (and/or hops extract) at a lower wort temperature reduces evaporation of aromatic ingredients of the hops, e.g. terpenes. This method ensures that the desirable influence of hops and optionally yeast are present in the beverage without causing alcohol formation so that a balanced beverage may be obtained.

The terms "high temperature hops" (HT hops) and "low temperature hops" (LT hops) are used herein to differentiate between the hops added at elevated temperatures (high temperature hops) and the hops added at lower temperatures (low temperature hops) as described herein. In some embodiments, hops varieties with higher content of alpha acids (bittering hops) are used as HT hops, and hops varieties with higher content of essential oils (aromatic hops) as LT hops. In some embodiments, aromatic hops are used both as HT hops and as LT hops.

In a second aspect, this disclosure relates to a method of making a beverage, comprising
- preparing a mash comprising malt (and/or malt extract) and water,
- holding the mash at a temperature range of from 20°C to 90°C,
- separating liquid fraction from the mash to obtain a wort,
- thermal treating the wort at a temperature of at least 90°C such as from 90°C to 110°C,
- optionally adding yeast to the wort at a temperature of >90°C,
- adding high temperature hops (and/or high temperature hops extract) to the wort, the high temperature hops having an alpha acid content of at least 5.0 wt.-% (based on total dried weight),
- cooling the wort to a temperature of at most 25°C after adding the high temperature hops,
- adding low temperature hops (and/or low temperature hops extract) after cooling, the low temperature hops (and/or low temperature hops extract) having an essential oil content of at least 0.1 ml/100g,
- optionally holding the wort after adding the low temperature hops (and/or low temperature hops extract) at a holding temperature of at most 25°C for a holding time of at least 12 hours, and
- obtain the beverage.

The method of this second aspect provides for high essential oil content derived from the hops (in particular myrcene) by choosing low temperature hops or low temperature hops extract with high essential oil contents, in particular with high myrcene content. It was found that high essential oil contents help mask any residual mash aroma in the beverage.

In a third aspect, this disclosure relates to a method of making a beverage, comprising
- preparing a mash comprising malt (and/or malt extract) and water,
- holding the mash at a temperature range of from 20°C to 90°C,
- separating liquid fraction from the mash to obtain a wort,
- thermal treating the wort at a temperature of at least 90°C such as from 90°C to 110°C,
- optionally adding yeast to the wort at a temperature of >90°C,
- adding high temperature hops (and/or high temperature hops extract) to the wort,
- cooling the wort to a temperature of at most 25°C after adding the high temperature hops,
- adding low temperature hops (and/or low temperature hops extract) after cooling,
- optionally holding the wort after adding the low temperature hops (and/or low temperature hops extract) at a holding temperature of at most 25°C for a holding time of at least 12 hours, and
- obtain the beverage,
wherein high temperature hops and low temperature hops are chosen such that the beverage is characterized in that a ratio of a total amount of iso-alpha acids (in mg/L) to a total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0.

In a fourth aspect, this disclosure relates to a method of making a beverage concentrate, the method comprising
- making a wort concentrate,
- making a low temperature hops concentrate,
- mixing the wort concentrate and the low temperature hops concentrate.

Making a wort concentrate may comprise
A. preparing a mash comprising malt (and/or malt extract) and water,
B. holding the mash at a temperature range of from 20°C to 90°C,
C. separating liquid fraction from the mash to obtain a wort,
D. thermal treating the wort at a temperature of at least 90°C such as of from 90°C to 110°C, and subsequently cooling the wort,
wherein the making a wort concentrate comprises
- optionally adding yeast to the wort at a temperature of >90°C,
- adding high temperature hops (and/or high temperature hops extract) to the wort after step D. at a wort temperature in a range of from 35°C to 90°C,
- a concentrating step, in particular to obtain the wort concentrate.

The concentrating step includes water removal from the wort. The wort can be concentrated by various means, for example by vacuum evaporation. Making the wort concentrate does in particular not comprise the step addition of low temperature hops. The reason is that the essential oils provided by the low temperature hops may get lost during concentrating the wort. Optionally, solids are removed prior to the concentrating step, for example by filtration. The concentrating step may be done such that the water content of the wort concentrate is at most 80 vol.-%, for example at most 75 vol.-%, at most 50 vol.-%, at most 25 vol.-%, at most 15 vol.-%, at most 10 vol.-%, at most 7.5 vol.-%, or at most 5.0 vol.-%. The water content may for example be at least 0.1 vol.-%, at least 0.2 vol.-%, at least 0.5 vol.-%, at least 1.0 vol.-%, at least 1.5 vol.-%, at least 2.0 vol.-%, at least 2.5 vol.-%, or at least 3.0 vol.-%. The water content may for example be in a range of from 0.1 to 80 vol.-%, from 0.2 to 75 vol.-%, from 0.5 to 50 vol.-%, from 1.0 to 25 vol.-%, from 1.5 to 15 vol.-%, from 2.0 to 10 vol.-%, from 2.5 to 7.5 vol.-%, or from 3.0 to 5.0 vol.-%.

Making a low temperature hops concentrate may comprise
- incubating low temperature hops in an extracting agent at a holding temperature of at most 25°C for a holding time of at least 12 hours,
- optionally a concentrating step, in particular to obtain the low temperature hops concentrate.

The extracting agent may for example be water, ethylene glycol, or the like, or mixtures thereof. The incubation step may in particular be done such that the content of the extracting agent is at most 80 vol.-%, for example at most 75 vol.-%, at most 50 vol.-%, at most 25 vol.-%, at most 15 vol.-%, at most 10 vol.-%, at most 7.5 vol.-%, or at most 5.0 vol.-%. The content of the extracting agent may for example be at least 0.1 vol.-%, at least 0.2 vol.-%, at least 0.5 vol.-%, at least 1.0 vol.-%, at least 1.5 vol.-%, at least 2.0 vol.-%, at least 2.5 vol.-%, or at least 3.0 vol.-%. The content of the extracting agent may for example be in a range of from 0.1 to 80 vol.-%, from 0.2 to 75 vol.-%, from 0.5 to 50 vol.-%, from 1.0 to 25 vol.-%, from 1.5 to 15 vol.-%, from 2.0 to 10 vol.-%, from 2.5 to 7.5 vol.-%, or from 3.0 to 5.0 vol.-%. In other words, the low temperature hops concentrate is prepared by incubating an proportion of low temperature hops relative to the extraction agent that is very high compared to the production method that does not rely on concentrates. Thus, the preparation of the low temperature hops concentrate does not require a concentrating step as the essential oil content is high due to the proportion of hops vs. extracting agent.

In a fifth aspect, this disclosure relates to a beverage concentrate comprising
- less than 0.02% ethanol (v/v), and
- water,
wherein the beverage concentrate is characterized in that a ratio of a total amount of iso-alpha acids (in mg/L) to a total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage concentrate is at most 15.0; or
wherein the beverage concentrate is characterized in that a ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage concentrate is in a range of from 50 to 75,000, or
wherein the beverage concentrate is characterized in that a ratio of the sugar content (in g/L) and the total amount of iso-alpha acids (in g/L) in the beverage concentrate is in a range of from 10 to 100,000, or from 100 to 10,000, or
wherein the beverage concentrate is characterized in that it is essentially free of fermentation by-products, such as esters of acetic acid, succinic acid, malic acid, lactic acid and/or diacetyl, e.g. comprising less than 100 ppm (w/w) or less than 100 mg/L of esters of acetic acid, succinic acid, malic acid, lactic acid and/or diacetyl.

The beverage concentrate may in particular be obtained by the method of the fourth aspect.

The water content of the beverage concentrate may for example be in a range of from 0.1 to 80 vol.-%, from 0.2 to 75 vol.-%, from 0.5 to 50 vol.-%, from 1.0 to 25 vol.-%, from 1.5 to 15 vol.-%, from 2.0 to 10 vol.-%, from 2.5 to 7.5 vol.-%, or from 3.0 to 5.0 vol.-%. The water content of the beverage concentrate may for example be at least 0.1 vol.-%, at least 0.2 vol.-%, at least 0.5 vol.-%, at least 1.0 vol.-%, at least 1.5 vol.-%, at least 2.0 vol.-%, at least 2.5 vol.-%, or at least 3.0 vol.-%. The water content of the beverage concentrate may for example be at most 80 vol.-%, at most 75 vol.-%, at most 50 vol.-%, at most 25 vol.-%, at most 15 vol.-%, at most 10 vol.-%, at most 7.5 vol.-%, or at most 5.0 vol.-%.

In a sixth aspect, this disclosure relates to a method of making a beverage comprising
- mixing the beverage concentrate of the fifth aspect with water.

In the mixing step, the volume ratio of water to beverage concentrate may for example be in a range of from 1.0 to 100, from 2.0 to 75, from 5.0 to 50, from 10 to 35, from 15 to 30, or from 20 to 25. The volume ratio of water to beverage concentrate may for example be at least 1.0, at least 2.0, at least 5.0, at least 10, at least 15, or at least 20. The volume ratio of water to beverage concentrate may for example be at most 100, at most 75, at most 50, at most 35, at most 30, or at most 25.

The mixture may be carbonated such that a concentration of carbon dioxide in the mixture of at least 3 g/l, or at least 5 g/l, or at least 7 g/l and at most 10 g/l is reached. In some embodiments, the amount of carbon dioxide is in a range of from 1.0 g/L to 10 g/L, for example from 2.0 g/L to 8.0 g/L, from 3.0 g/L to 7.5 g/L, from 4.0 to 7.0 g/L, or from 4.5 g/L to 6.5 g/L. In some embodiments, the amount of carbon dioxide is at least 1.0 g/L, for example at least 2.0 g/L, at least 3.0 g/L, at least 4.0 g/L, or at least 4.5 g/L. In some embodiments, the amount of carbon dioxide is at most 10 g/L, for example at most 8.0 g/L, at most 7.5 g/L, at most 7.0 g/L, or at most 6.5 g/L. Additionally or alternatively, the beverage concentrate may be mixed with water containing carbon dioxide such that the desired CO₂ concentrations of the beverage are obtained.

The method of the sixth aspect is particularly advantageous regarding saving resources. Transporting the beverage concentrate substantially reduces the transportation costs as compared to transportation of the beverage as such. The concentrate may be delivered to restaurants or bars which can produce the beverage of the invention on site avoiding energy-consuming transport of the beverage.

In a seventh aspect, this disclosure relates to a beverage, optionally obtainable by a method according to the first, second, third or sixth aspect, the beverage comprising
- less than 0.02% ethanol (v/v),
- carbon dioxide,
- water,
wherein the beverage is characterized in that a ratio of a total amount of iso-alpha acids (in mg/L) to a total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0.

In an eighth aspect, this disclosure relates to a beverage, optionally obtainable by a method according to the first, second, third or sixth aspect, the beverage comprising
- less than 0.02% ethanol (v/v),
- carbon dioxide,
- water,
wherein the beverage is characterized in that a ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 50 to 75,000.

In a ninth aspect, this disclosure relates to a beverage, optionally obtainable by a method according to the first, second, third or sixth aspect, the beverage comprising
- less than 0.02% ethanol (v/v),
- carbon dioxide,
- water,
wherein the beverage is characterized in that a ratio of the sugar content (in g/L) and the total amount of iso-alpha acids (in g/L) in the beverage is in a range of from 10 to 100,000, or from 100 to 10,000.

In a tenth aspect, this disclosure relates to a beverage, optionally obtainable by a method according to the first, second, third or sixth aspect, the beverage comprising
- less than 0.02% ethanol (v/v),
- carbon dioxide,
- water,
wherein the beverage is characterized in that the beverage is essentially free of fermentation by-products, such as esters of acetic acid, succinic acid, malic acid, lactic acid and/or diacetyl, e.g. comprising less than 100 ppm (w/w) or less than 100 mg/L of esters of acetic acid, succinic acid, malic acid, lactic acid and/or diacetyl.

The beverage may in particular have a pH of from 3.0 to 6.0.

The beverage according to the seventh to tenth aspect has a combination of ingredients that is obtainable using the methods described herein. In particular, the amount of essential oil derived from hops is high, while the proportion of iso-alpha acid remains low.

The essential oils derived from hops represent hop-based flavoring agents that provide the beverage with characteristic hop-based beer flavors. Such hop-based flavoring agents may comprise essential oils such as myrcene, linalool, humulene, and others described herein.

In addition to the hop-based flavoring agents, the beverage contains iso-alpha acids derived from the hops. Iso-alpha acids are bittering agents.

It is a particular advantage of the present disclosure to provide a beverage that has a comparably high proportion of hop-based flavoring agents and a comparably low proportion of iso-alpha acids. This provides the beverage with a particularly pleasant taste which is characterized by pronounced hop-based flavor with only moderate bitterness. On the other hand, a certain amount of iso-alpha acids in the beverage is desired for masking unpleasant flavors from the mash.

The present disclosure provides a cost-efficient and an energy-efficient method for obtaining a non-alcoholic refreshing beer-flavored beverage made from hops and malt (and/or extracts thereof), and optionally yeast, which is comparable or superior in taste to non-alcoholic beer obtained by conventional production methods.

In contrast to conventionally produced non-alcoholic beers, the beverages of the present invention are produced without any fermentation process. Fermentation produces fermentation by-products, such as esters of acetic acid, succinic acid, malic acid, lactic acid and/or diacetyl.

### Brief Description of the Drawings

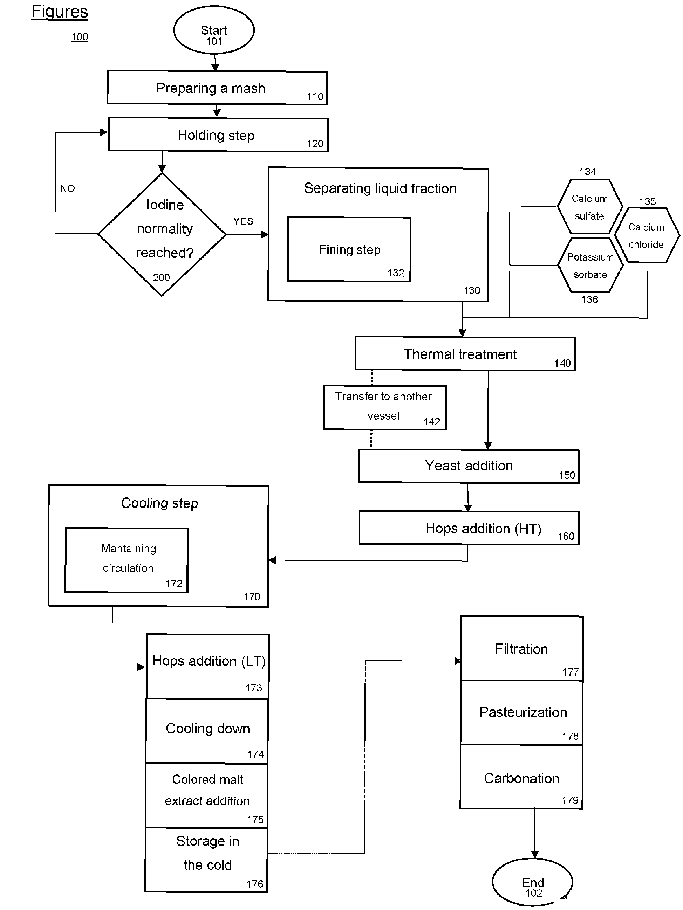

Figure 1 shows a flow chart of a method of making a beverage according to this disclosure.

### Detailed Description of the Disclosure

When compared to non-alcoholic beer obtained by conventional production methods, the beverage of the present disclosure is equal or superior in taste and the energy required for its production is reduced significantly. The method of the present disclosure efficiently overcomes the problem of excessive energy consumption by effectively reducing the amount of energy as compared to the energy required to produce a conventional beer. Furthermore, hops and malt and the processing thereof as described herein are chosen such that beverages having the properties described herein are obtained.

The method of this disclosure comprises preparing a mash comprising malt (and/or malt extract) and water. The mash is prepared by combining malt (and/or malt extract) and water. Malt (and/or malt extract) and water may be mixed, for example using appropriate mixing techniques such as stirrers, or other forms of agitation. The malt may be milled and/or crushed e.g. prior to preparing the mash. Milling and crushing serves to set free the malt components in the mash, e.g. starch.

In addition or as an alternative to the malt, another grain may be used to prepare the mash. For example, corn, rice, and/or oats (and/or respective extracts thereof) can also be added to the mash or be used instead of the malt (and/or malt extract).

The malt may be chosen from base malts (e.g. barley malts, wheat malt, rye malt), high-kilned malts (e.g. Munich malt, Vienna malt), caramel malts, crystal malts and combinations thereof.

In one embodiment, the malt may be chosen from barley malt, sour malt, pointed malt, wheat malt or roasted malt or a combination of two or more thereof. Pointed malt is advantageous for obtaining a particular stable foam. The choice of malts depends in particular on the type of beverage to be produced. The method of the disclosure is for example suitable for producing non-alcoholic IPA, non-alcoholic Pilsner, non-alcoholic dark lager, non-alcoholic Weizen beer, or non-alcoholic stout.

In some embodiments, the water has a pH in a range of from 6.0 to 9.5, for example from 6.5 to 9.0, from 7.0 to 8.5, or from 7.5 to 8.0. In some embodiments, the water has a pH of at least 6.0, for example at least 6.5, at least 7.0, or at least 7.5. In some embodiments, the water has a pH of at most 9.5, for example at most 9.0, at most 8.5, or at most 8.0.

In some embodiments, the water has an electrical conductivity at 25°C in a range of from 25 to 2500 µS/cm, for example from 50 to 1250 µS/cm, from 100 to 600 µS/cm, from 150 to 450 µS/cm, or from 200 to 300 µS/cm. In some embodiments, the water has an electrical conductivity at 25°C of at least 25 µS/cm, for example at least 50 µS/cm, at least 100 µS/cm, at least 150 µS/cm, or at least 200 µS/cm. In some embodiments, the water has an electrical conductivity at 25°C of at most 2500 µS/cm, for example at most 1250 µS/cm, at most 600 µS/cm, at most 450 µS/cm, or at most 300 µS/cm.

In some embodiments, the total hardness of the water is in a range of from 0.5 to 25 °dH (German degrees), for example from 1.0 to 20 °dH, from 2.0 to 15 °dH, from 3.0 to 10 °dH, from 4.0 to 8.0 °dH, or from 5.0 to 7.0 °dH. In some embodiments, the total hardness of the water is at least 0.5 °dH, for example at least 1.0 °dH, at least 2.0 °dH, at least 3.0 °dH, at least 4.0 °dH, or at least 5.0 °dH. In some embodiments, the total hardness of the water is at most 25 °dH, for example at most 20 °dH, at most 15 °dH, at most 10 °dH, at most 8.0 °dH, or at most 7.0 °dH.

In some embodiments, the total hardness of the water (measured as the total concentration of magnesium ions and calcium ions) is in a range of from 0.1 to 6.0 mmol/l, for example from 0.2 to 4.0 mmol/l or from 0.5 to 2.0 mmol/l. In some embodiments, the total hardness of the water (measured as the total concentration of magnesium ions and calcium ions) is at least 0.1 mmol/l, for example at least 0.2 mmol/l, or at least 0.5 mmol/l. In some embodiments, the total hardness of the water (measured as the total concentration of magnesium ions and calcium ions) is at most 6.0 mmol/l, for example at most 4.0 mmol/l or at most 2.0 mmol/l.

In some embodiments, the total concentration of calcium in the water is in a range of from 10 mg/l to 100 mg/l, for example from 15 to 75 mg/l, from 20 to 50 mg/I, or from 30 to 40 mg/l. In some embodiments, the total concentration of calcium in the water is at least 10 mg/l, for example at least 15 mg/l, at least 20 mg/I, or at least 30 mg/l. In some embodiments, the total concentration of calcium in the water is at most 100 mg/I, for example at most 75 mg/I, at most 50 mg/I, or at most 40 mg/l.

In some embodiments, the calcium hardness of the water is in a range of from 0.5 to 20 °dH, for example from 1.0 to 15 °dH, from 2.0 to 10 °dH, from 3.0 to 7.5 °dH, or from 4.0 to 5.5 °dH. In some embodiments, the calcium hardness of the water is at least 0.5 °dH, for example at least 1.0 °dH, at least 2.0 °dH, at least 3.0 °dH, or at least 4.0 °dH. In some embodiments, the calcium hardness of the water is a most 20 °dH, for example at most 15 °dH, at most 10 °dH, at most 7.5 °dH, or at most 5.5 °dH.

In some embodiments, the ratio of total malt to water is in a range of from 1.0 kg/hl to 25 kg/hl, for example from 2.0 to 15 kg/hl, from 3.0 to 10 kg/hl, or from 4.0 to 8.0 kg/hl. In some embodiments, the ratio of total malt to water is at least 1.0 kg/hl, for example at least 2.0 kg/hl, at least 3.0 kg/hl, or at least 4.0 kg/hl. In some embodiments, the ratio of total malt to water is at most 25 kg/hl, at most 15 kg/hl, at most 10 kg/hl, or at most 8.0 kg/hl.

In some embodiments, the ratio of pointed malt to water is in a range of from 0 to 2.5 kg/hl, for example from 0.01 to 2.0 kg/hl, from 0.02 to 1.5 kg/hl, from 0.05 to 1.0 kg/hl, from 0.10 to 0.75 kg/hl, or from 0.25 to 0.50 kg/hl. In some embodiments, the ratio of pointed malt to water is at least 0.01 kg/hl, for example at least 0.02 kg/hl, at least 0.05 kg/hl, at least 0.10 kg/hl, or at least 0.25 kg/hl. In some embodiments, the ratio of pointed malt to water is at most 2.5 kg/hl, for example at most 2.0 kg/hl, at most 1.5 kg/hl, at most 1.0 kg/hl, at most 0.75 kg/hl, or at most 0.50 kg/hI.

In some embodiments, the weight ratio of pointed malt to total malt is in a range of from 0.5% to 25%, for example from 1.0 % to 15%, from 2.0% to 12%, from 3.0% to 10%, or from 4.0% to 9.0%. In some embodiments, the weight ratio of pointed malt to total malt is at least 0.5%, for example at least 1.0%, at least 2.0%, at least 3.0%, or at least 4.0%. In some embodiments, the weight ratio of pointed malt to total malt is at most 25%, for example at most 15%, at most 12%, at most 10%, or at most 9.0%.

Holding the mash at increased temperature is performed for the purpose of breaking down long chain carbohydrates, e.g. starch, into shorter chain carbohydrates, such as mono and disaccharides.

In embodiments, the mash is held at a holding temperature for a holding time. The holding temperature may be chosen such that enzymes present in the mash work efficiently. The holding time starts when the mash is prepared or when it reaches the holding temperature. It ends when the mash leaves the holding temperature, or when the liquid fraction is separated from the solids.

In an embodiment, the holding temperature is at least 20°C, at least 40°C, at least 50°C, or at least 60°C. It may range up to 90°C, up to 80°C or up to 75°C. In certain embodiments, the holding temperature is about 70°C. Optionally, the holding temperature may range from 20°C to 90°C, from 40°C to 80°C, or from 60°C to 75°C.

In an embodiment, the holding time is at least 12 minutes, at least 15 minutes, at least 20 minutes, at least 30 min, at least 60 minutes, or at least 90 minutes. Optionally, the holding time may range up to 240 minutes, up to 180 minutes, up to 150 minutes, up to 120 minutes, up to 100 minutes, or up to 95 minutes. Optionally, the holding time may be 15 to 45 minutes or 20 to 40 minutes such as about 30 minutes. For example, holding time may range from 12 minutes to 240 minutes, from 15 minutes to 180 minutes, from 20 minutes to 150 minutes, from 30 minutes to 120 minutes, from 60 to 100 minutes, or from 90 to 95 minutes.

Natural enzymes from the malt, e.g. amylases, break down long chain carbohydrates, e.g. starch, into shorter chain carbohydrates, such as mono and disaccharides, adding a sweetness to the mixture.

The test of iodine normality is used to determine whether the starch has been sufficiently converted to short chain sugars in a test solution. If the starch has been sufficiently broken down, then the test solution will show substantially no change in color after addition of iodine. If upon adding the iodine, the color changes to dark red, purple, or black, there is still undigested starch in the solution. Iodine normality is reached when the test solution shows no change in color after the addition of the iodine.

In some embodiments of the present disclosure, the test of iodine normality is used to determine whether the mash can pass from the holding step to the step of thermal treatment after a wort has been obtained by separating liquid fraction from the mash. It is not desirable that relevant amounts of undigested starch be present in the wort during the thermal treatment.

In an embodiment, the holding time ends with the moment the mash reaches iodine normality.

After the mash was held for a sufficient amount of time, liquids and solids are separated. The liquid fraction contains water soluble ingredients that entered the water from the malt, the so-called "extract". The solid fraction is not used in the further process.

In one embodiment of the disclosure, the wort has an original gravity in a range of from 0.5 to 10 °P, for example from 1.0 to 8.0 °P, from 2.0 to 6.0 °P, from 2.5 to 5.5 °P, from 3.0 to 5.0 °P, from 3.5 to 4.5 °P, or from 3.5 to 4.0 °P. In some embodiments, the wort has an original gravity of at least 0.5 °P, for example at least 1.0 °P, at least 1.5 °P, at least 2.0 °P, at least 2.5 °P, at least 3.0 °P, or at least 3.5 °P. In some embodiments, the wort has an original gravity of at most 10 °P, for example at most 8.0 °P, at most 6.0 °P, at most 5.5 °P, at most 5.0 °P, at most 4.5 °P, or at most 4.0 °P.

In some embodiments of the disclosure, the wort is subject to thermal treatment at temperatures of at least 90°C. Optionally, the thermal treatment may be done at a temperature of at least 95°C. In some embodiments, this temperature is up to 120°C, up to 110°C or up to 100°C. Optionally, this temperature reaches from 90°C to 110°C. Thermal treatment contributes to denaturing enzymes of the malt and stops them from converting sugars. Thermal treatment also has a sterilizing effect.

In some embodiments of the disclosure, thermal treatment of the wort is performed for at least 5 minutes, or at least 10 minutes, or at least 20 minutes, or at least 25 minutes. In some embodiments, thermal treatment of the wort is done for up to 240 minutes, up to 180 mintues, up to 120 minutes or up to 60 minutes. In some embodiments, this thermal treatment is done for about 30 minutes. For examples, thermal treatment may be for 5 to 240 minutes, 10 to 180 minutes, 20 to 120 minutes or from 25 to 60 minutes.

In some embodiments of the disclosure, the wort may optionally be transferred to another vessel after thermal treatment. In one embodiment of the disclosure, calcium sulfate is added to the mixture, e.g. during the thermal treating step or before the thermal treating step. Calcium sulfate contributes to more pronounced perception of hop-based flavors by the consumers. Additionally, or alternatively, CaCl₂ and/or MgSO₄ may be used in some embodiments.

In some embodiments of the disclosure, the wort, e.g. after the thermal treating step, contains calcium sulfate in an amount of from 0.02 to 2.00 g/l, for example from 0.05 to 1.00 g/l, from 0.10 to 0.50, or from 0.15 to 0.25 g/l. In some embodiments, the amount of calcium sulfate is at least 0.02 g/l, for example at least 0.05 g/l, at least 0.10 g/l, or at least 0.15 g/l. In some embodiments, the amount of calcium sulfate is at most 2.00 g/l, for example at most 1.00 g/l, at most 0.50 g/l, or at most 0.25 g/l.

In some embodiments of the disclosure, the wort, e.g. after the thermal treating step, contains calcium chloride in an amount of from 0.02 to 2.00 g/l, for example from 0.05 to 1.00 g/l, from 0.10 to 0.50, or from 0.15 to 0.25 g/l. In some embodiments, the amount of calcium chloride is at least 0.02 g/l, for example at least 0.05 g/l, at least 0.10 g/l, or at least 0.15 g/l. In some embodiments, the amount of calcium chloride is at most 2.00 g/l, for example at most 1.00 g/l, at most 0.50 g/l, or at most 0.25 g/l.

In some embodiments of the disclosure, the wort, e.g. after the thermal treating step, contains magnesium sulfate in an amount of from 0.02 to 2.00 g/l, for example from 0.05 to 1.00 g/l, from 0.10 to 0.50, or from 0.15 to 0.25 g/l. In some embodiments, the amount of magnesium sulfate is at least 0.02 g/l, for example at least 0.05 g/l, at least 0.10 g/l, or at least 0.15 g/l. In some embodiments, the amount of magnesium sulfate is at most 2.00 g/l, for example at most 1.00 g/l, at most 0.50 g/l, or at most 0.25 g/l.

In some embodiments of the disclosure, the wort, e.g. after the thermal treating step, contains a total amount of calcium sulfate, calcium chloride and magnesium sulfate of from 0.02 to 2.00 g/l, for example from 0.05 to 1.00 g/l, from 0.10 to 0.50, or from 0.15 to 0.25 g/l. In some embodiments, the total amount of calcium sulfate, calcium chloride and magnesium sulfate is at least 0.02 g/l, for example at least 0.05 g/l, at least 0.10 g/l, or at least 0.15 g/l. In some embodiments, the total amount of calcium sulfate, calcium chloride and magnesium sulfate is at most 2.00 g/l, for example at most 1.00 g/l, at most 0.50 g/l, or at most 0.25 g/l.

In one embodiment of the disclosure, potassium sorbate is added to the wort, e.g. during the thermal treating step or before the thermal treating step. Potassium sorbate is a food preservative that increases shelf-life. Additionally or alternatively, calcium sorbate and/or ascorbic acid may be used.

In one embodiment of the disclosure, the wort, e.g. after the thermal treating step, contains potassium sorbate in an amount from 0.02 to 2.00 g/l, for example from 0.05 to 1.00 g/l, from 0.10 to 0.50, or from 0.15 to 0.25 g/l. In some embodiments, the amount of potassium sorbate is at least 0.02 g/l, for example at least 0.05 g/l, at least 0.10 g/l, or at least 0.15 g/l. In some embodiments, the amount of potassium sorbate is at most 2.00 g/l, for example at most 1.00 g/l, at most 0.50 g/l, or at most 0.25 g/l.

In one embodiment of the disclosure, the wort, e.g. after the thermal treating step, contains calcium sorbate in an amount from 0.02 to 2.00 g/l, for example from 0.05 to 1.00 g/l, from 0.10 to 0.50, or from 0.15 to 0.25 g/l. In some embodiments, the amount of calcium sorbate is at least 0.02 g/l, for example at least 0.05 g/l, at least 0.10 g/l, or at least 0.15 g/l. In some embodiments, the amount of calcium sorbate is at most 2.00 g/l, for example at most 1.00 g/l, at most 0.50 g/l, or at most 0.25 g/l.

In one embodiment of the disclosure, the wort, e.g. after the thermal treating step, contains ascorbic acid in an amount from 0.02 to 2.00 g/l, for example from 0.05 to 1.00 g/l, from 0.10 to 0.50, or from 0.15 to 0.25 g/l. In some embodiments, the amount of ascorbic acid is at least 0.02 g/l, for example at least 0.05 g/l, at least 0.10 g/l, or at least 0.15 g/l. In some embodiments, the amount of ascorbic acid is at most 2.00 g/l, for example at most 1.00 g/l, at most 0.50 g/l, or at most 0.25 g/l.

In one embodiment of the disclosure, the wort, e.g. after the thermal treating step, contains a total amount of potassium sorbate, calcium sorbate and ascorbic acid from 0.02 to 2.00 g/l, for example from 0.05 to 1.00 g/l, from 0.10 to 0.50, or from 0.15 to 0.25 g/l. In some embodiments, the total amount of potassium sorbate, calcium sorbate and ascorbic acid is at least 0.02 g/l, for example at least 0.05 g/l, at least 0.10 g/l, or at least 0.15 g/l. In some embodiments, the total amount of potassium sorbate, calcium sorbate and ascorbic acid is at most 2.00 g/l, for example at most 1.00 g/l, at most 0.50 g/l, or at most 0.25 g/l.

In order to avoid alcohol in the final product, commonly used methods for preparing a non-alcoholic refreshing beer-flavored beverage employ the dealcoholization technique, which involves extracting the alcohol from the mixture after the brewing process, e.g. by reverse osmosis.

Unfavorably, in addition to the high energy demands, an identified disadvantage of conventional dealcoholization methods is that a significant amount of essential oils is extracted together with the alcohol. The method of the present disclosure helps maintain a high level of essential oils in a beverage substantially free of alcohol.

Alcohol is the result of fermentation by microorganisms such as yeasts. A further aspect of the present disclosure may relate to the absence of fermentation.

Some components derived from yeast cells contribute to the overall aroma of a beer-flavored beverage. That is why the method of the present disclosure optionally involves adding yeast to the wort used for preparing the non-alcoholic beer-flavored beverage, but immediately removing any chance for them to produce alcohol. This may be achieved by adding yeast to the wort when the wort has a temperature of >90°C. As a result, the beverage of the present disclosure attains an improved taste in comparison to comparative non-alcoholic beer-flavored beverages.

In one embodiment of the present disclosure, the yeast strain is selected from *Saccharomyces cerevisiae, Saccharomyces pastorianus, Brettanomyces, Pichia pastoris and Kluyveromyces lactis.*

In one embodiment of the disclosure, the yeast is added to the wort during the step of thermal treatment of the wort when the wort has a temperature of above 90°C. In one embodiment of the disclosure, the yeast is added to the wort when the wort has a temperature of above 90°C, or of above 100°C and/or of 110°C or below. Adding the yeast to the wort when the wort has a high temperature deactivates the yeast and inhibits fermentation immediately.

In some embodiments, the amount of yeast added to the wort is in a range of from 0 to 50 g/L, for example from 0.001 to 10 g/L, from 0.01 to 5.0 g/L, or from 0.1 to 1.0 g/L. In some embodiments, the amount of yeast added to the wort is at least 0.001 g/L, for example at least 0.01 g/L or 0.1 g/L. In some embodiments, the amount of yeast added to the wort is at most 50 g/L, for example at most 10 g/L, at most 5.0 g/L, or at most 1.0 g/L.

In embodiments of the present disclosure, the content of ethanol in the wort after adding the yeast is of from 0.00% to 0.02% (v/v).

As one of the main components of beer and beer-flavored beverages, hops contain alpha acids and essential oils, contributing primarily to the bitterness and flavor of the beverage.

Iso-alpha acids are the main bittering agents in beer. They balance out the sweetness caused by the malt and mask unwanted flavors from the mash. However, the taste of the beverage is negatively impacted if the amount of the iso-alpha acids is too high.

Different varieties of hops also contain different varieties of essential oils, conferring floral, citrusy, piney, or tropical aromas to the beverage.

Examples of essential oils found in the hops (and/or hops extract) of the present disclosure and released into the beverage of the present disclosure comprise myrcene, humulene, linalool, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol.

Generally, two hop varieties can be distinguished: aromatic hops and bittering hops. Aromatic hops are used because of their high level of essential oils and added towards the end of the brewing process (addition at lower temperatures, LT hops). Bittering hops provide bitterness to the beer and contain a high level of alpha acids. They are typically added towards the beginning of the brewing process and boiled for a longer period of time (addition at higher temperatures, HT hops).

At elevated temperatures, alpha acids are extracted from the hops and converted into iso-alpha acids by isomerization. As is familiar to the skilled person, alpha acids include humulone, adhumulone, cohumulone, posthumulone, and/or prehumulone. Iso-alpha acids include isohumulone. Alpha acids are primarily present in the hops (and/or hops extracts) and to some extent in the beverage, whereas the beverage comprises predominantly iso-alpha acids due to the isomerization. The amount of alpha acids, iso-alpha acids and humilinone can be determined using the standard method EBC9:47/ICS-14/ICE-4 in the version valid on November 1, 2024.

In some embodiments of the present disclosure, the LT hops (and/or LT hops extracts) contain a total amount of essential oils in an amount of from 0.1 to 8.0 ml/100g, for example from 0.2 to 5.0 ml/100g, from 0.5 to 2.5 ml/100g, or from 0.7 to 1.2 ml/100g. In some embodiments, the total amount of essential oils in the LT hops (and/or LT hops extracts) is at least 0.1 ml/100g, for example at least 0.2 ml/100g, at least 0.5 ml/100g, or at least 0.7 ml/100g. In some embodiments, the total amount of essential oils in the LT hops (and/or LT hops extracts) is at most 8.0 ml/100g, for example at most 5.0 ml/100g, at most 2.5 ml/100g, or at most 1.2 ml/100g.

In the present disclosure, the total amount of essential oils can be measured by gas chromatography-mass spectrometry (GC-MS), in particular by GC-MS/MS (GC-tandem MS).

In some embodiments of the present disclosure, the HT hops (and/or HT hops extracts) contain a total amount of alpha acids in a range of from 5.0 to 15 wt.-% (based on total dried weight), for example from 6.0 to 14 wt.-% or from 8.0 to 12 wt.-%. In some embodiments, the HT hops (and/or HT hops extracts) contain a total amount of alpha acids of at least 5.0 wt.-%, for example at least 6.0 wt.-% or at least 8.0 wt.-%. In some embodiments, the HT hops (and/or HT hops extracts) contain a total amount of alpha acids of at most 15 wt.-%, for example at most 14 wt.-% or at most 12 wt.-%.

In the present disclosure, the total amount of alpha acids can be measured by spectrophotometry.

In the present disclosure, the hops (HT hops and/or LT hops) can be selected from hops extracts, pellets, granules, solution, flowers (seed cones or strobiles), fresh wet hop cones, whole leaf dried hop cones, compressed dried hop plugs and hop hash. Moreover, hops extracts can be used as well. Concentrated hops can also be used, in particular concentrated hops pellets. Concentration processes may for example include cryogenic technologies such as treatment with liquid nitrogen. Concentrated hops may in particular comprise or consist of concentrated lupulin. The holding time of holding the wort after adding the low temperature hops (and/or low temperature hops extract) at a holding temperature of at most 25°C can be substantially reduced upon usage of concentrated hops.

In some embodiments, when adding the HT hops (and/or HT hops extracts), the wort has a temperature of less than 100°C, or less than 90°C, or less than 80°C, or less than 70°C. In some embodiments, the temperature is in a range of from 35°C to 100°C, for example from 40°C to 90°C, from 50°C to 80°C, or from 60°C to 70°C. In some embodiments, the temperature is at least 35°C, for example at least 40°C, at least 50°C, or at least 60°C.

In some embodiments, HT hops are added to the wort in an amount of from 1.0 to 250 g/L, for example from 2.0 to 125 g/L, from 5.0 to 100 g/L, from 10 to 75 g/L, from 15 to 50 g/L, or from 20 to 35 g/L. In some embodiments, HT hops are added to the wort in an amount of at least 1.0 g/L, for example at least 2.0 g/L, at least 5.0 g/L, at least 10 g/L, at least 15 g/L, or at least 20 g/L. In some embodiments, HT hops are added to the wort in an amount of at most 250 g/L, for example at most 125 g/L, at most 100 g/L, at most 75 g/L, at most 50 g/L, or at most 35 g/L.

Alpha acids are set free easier and in greater amounts at higher temperatures. Adding the HT hops (and/or HT hops extracts) to the wort after the wort has reached a temperature of less than 100°C, or less than 90°C, or less than 80°C, or less than 70°C may reduce the amount of alpha acids set free by the hops in the mixture.

In some embodiments of the disclosure, the HT hops (and/or HT hops extracts) are added to the wort when the wort has a temperature of less than 90°C, or less than 80°C, or less than 70°C.

In some embodiments, the temperature is kept below 90°C, below 80°C, or below 70°C after adding the HT hops (and/or HT hops extracts). In particular, there is no additional thermal treatment in presence of the HT hops (and/or HT hops extracts), in particular no thermal treatment as in step D or comparable. Thus, it is avoided that the HT hops (and/or HT hops extracts) is subjected to any temperatures of 90°C or more, 80°C or more, or 70°C or more. Finalizing high temperatures treatments such as pasteurization are done after filtration or other steps in which HT hops is removed.

Of course, this (avoiding thermal treatment) is valid even more so after addition of the LT hops (and/or LT hops extracts). In particular, it is avoided that the LT hops (and/or LT hops extracts) is subjected to any temperatures above 25°C after its addition (see also section below).

In some embodiments, after adding the HT hops (and/or HT hops extracts), the wort is held for a time period of at least 5 minutes, or at least 10 minutes, in particular for at least 20 minutes prior to cooling the wort. In some embodiments, after adding the HT hops (and/or HT hops extracts), the wort is held for a time period of at most 120 minutes, or at most 90 minutes, in particular for at most 45 minutes prior to cooling the wort. In some embodiments, after adding the HT hops (and/or HT hops extracts), the wort is held for a time period of from 5 to 120 minutes, or from 10 to 90 minutes, in particular from 20 to 45 minutes prior to cooling the wort.

In some embodiments of the disclosure, ascorbic acid is added to the wort, e.g. after the thermal treating step or during the cooling step.

In some embodiments of the disclosure, the wort, e.g. after the thermal treating or after the cooling step, contains ascorbic acid in an amount from 10 g/hl to 1000 g/hl, for example from 20 g/hl to 500 g/hl, from 50 g/hl to 200 g/hl, or from 75 g/hl to 150 g/hl. In some embodiments, the amount of ascorbic acid is at least 10 g/hl, for example at least 20 g/hl, at least 50 g/hl, or at least 75 g/hl. In some embodiments, the amount of ascorbic acid is at most 1000 g/hl, for example at most 500 g/hl, at most 200 g/hl, or at most 150 g/hl. In some embodiments, the amount of ascorbic acid is at most 100 g/hl, for example at most 50 g/hl, at most 10 g/hl, or at most 1 g/hl. In particular, addition of ascorbic acid may be avoided in some embodiments so that the wort and the beverage are essentially free of ascorbic acid. Avoiding ascorbic acid may be advantageous for the foam of the beverage.

In one embodiment of the disclosure, lactic acid is added to the wort, e.g. after the thermal treating step.

In one embodiment of the disclosure, the wort has a pH value of from 3.0 to 6.0.

As used herein "cooling" to room temperature includes passively letting the wort acquire room temperature or actively cooling the wort to room temperature using cooling means, such as a refrigerator, or one or more cooling agents. "Cooling to room temperature" does not exclude that wort or beverage is cooled further to temperatures below room temperature.

In one embodiment, the cooling step is performed until the wort reaches a temperature of from 10°C to 30°C, in particular at most 25°C.

In one embodiment of the disclosure, in addition to adding hops (and/or hops extract) to the mixture when the mixture has a temperature of 90°C or less (high temperature hops, HT hops), hops (and/or hops extract) are also added to the mixture after the cooling step (low temperature hops, LT hops).

In some embodiments, LT hops are added to the wort in an amount of from 0.1 to 30 g/L, for example from 0.2 to 25 g/L, from 0.5 to 15 g/L, from 1.0 to 10 g/L, from 2.0 to 7.5 g/L, or from 3.0 to 5.0 g/L. In some embodiments, LT hops are added to the wort in an amount of at least 0.1 g/L, for example at least 0.2 g/L, at least 0.5 g/L, at least 1.0 g/L, at least 2.0 g/L, or at least 3.0 g/L. In some embodiments, LT hops are added to the wort in an amount of at most 30 g/L, for example at most 25 g/L, at most 15 g/L, at most 10 g/L, at most 7.5 g/L, or at most 5.0 g/L.

In some embodiments of the disclosure, the LT hops (and/or LT hops extracts) contain essential oils in an amount of 0.1 to 8.0 ml/100g, for example from 0.2 to 5.0 ml/100g, from 0.5 to 2.5 ml/100g, or from 0.7 to 1.2 ml/100g. In some embodiments, the total amount of essential oils in the LT hops (and/or LT hops extracts) is at least 0.1 ml/100g, for example at least 0.2 ml/100g, at least 0.5 ml/100g, or at least 0.7 ml/100g. In some embodiments, the total amount of essential oils in the LT hops (and/or LT hops extracts) is at most 8.0 ml/100g, for example at most 5.0 ml/100g, at most 2.5 ml/100g, or at most 1.2 ml/100g.

In some embodiments of the disclosure, the LT hops (and/or LT hops extracts) contain essential oil myrcene in an amount of 40 to 4000 µl/100g, for example from 80 to 2000 µl/100g, from 150 to 1000 µl/100g, or from 250 to 500 µl/100g. In some embodiments, the total amount of myrcene in the LT hops (and/or LT hops extracts) is at least 40 µl/100g, for example at least 80 µl/100g, at least 150 µl/100g, or at least 250 µl/100g. In some embodiments, the total amount of myrcene in the LT hops (and/or LT hops extracts) is at most 4000 µl/100g, for example at most 2000 µl/100g, at most 1000 µl/100g, or at most 500 µl/100g.

In some embodiments of the disclosure, the LT hops (and/or LT hops extracts) contain essential oil linalool in an amount of 1.0 to 100 µl/100g, for example from 2.0 to 50 µl/100g, from 5.0 to 25 µl/100g, or from 7.5 to 12.5 µl/100g. In some embodiments, the total amount of linalool in the LT hops (and/or LT hops extracts) is at least 1.0 µl/100g, for example at least 2.0 µl/100g, at least 5.0 µl/100g, or at least 7.5 µl/100g. In some embodiments, the total amount of linalool in the LT hops (and/or LT hops extracts) is at most 100 µl/100g, for example at most 50 µl/100g, at most 25 µl/100g, or at most 12.5 µl/100g.

In some embodiments of the disclosure, the LT hops (and/or LT hops extracts) contain essential oil caryophyllene in an amount of 5.0 to 500 µl/100g, for example from 10 to 250 µl/100g, from 20 to 100 µl/100g, or from 30 to 50 µl/100g. In some embodiments, the total amount of caryophyllene in the LT hops (and/or LT hops extracts) is at least 5.0 µl/100g, for example at least 10 µl/100g, at least 20 µl/100g, or at least 30 µl/100g. In some embodiments, the total amount of caryophyllene in the LT hops (and/or LT hops extracts) is at most 500 µl/100g, for example at most 250 µl/100g, at most 100 µl/100g, or at most 50 µl/100g.

In some embodiments of the disclosure, the LT hops (and/or LT hops extracts) contain essential oil humulene in an amount of 15 to 1500 µl/100g, for example from 30 to 750 µl/100g, from 60 to 400 µl/100g, or from 80 to 250 µl/100g. In some embodiments, the total amount of humulene in the LT hops (and/or LT hops extracts) is at least 15 µl/100g, for example at least 30 µl/100g, at least 60 µl/100g, or at least 80 µl/100g. In some embodiments, the total amount of humulene in the LT hops (and/or LT hops extracts) is at most 1500 µl/100g, for example at most 750 µl/100g, at most 400 µl/100g, or at most 250 µl/100g.

In some embodiments of the disclosure, the LT hops (and/or LT hops extracts) contain essential oil farnesene in an amount of 1.0 to 100 µl/100g, for example from 2.0 to 50 µl/100g, from 5.0 to 25 µl/100g, or from 7.5 to 12.5 µl/100g. In some embodiments, the total amount of farnesene in the LT hops (and/or LT hops extracts) is at least 1.0 µl/100g, for example at least 2.0 µl/100g, at least 5.0 µl/100g, or at least 7.5 µl/100g. In some embodiments, the total amount of farnesene in the LT hops (and/or LT hops extracts) is at most 100 µl/100g, for example at most 50 µl/100g, at most 25 µl/100g, or at most 12.5 µl/100g.

Adding the LT hops (and/or LT hops extracts) after the cooling step may increase the amount of essential oils present in the wort. Aroma components derived from hops, like essential oils, are volatile. Upon thermal treatment (heating), a significant portion of essential oils may leave the mixture. The method of the present disclosure avoids this issue.

So far, the community was convinced that extracting essential oils from hops into the wort at low temperatures required presence of ethanol so that such a step was not considered applicable for the production of non-alcoholic beverages. However, the present inventors found that extraction at low temperatures was effective even in absence of ethanol, thereby making this step accessible for the production of non-alcoholic beverages.

In some embodiments, after adding the low temperature hops (and/or low temperature hops extract) the wort is held at a holding temperature of at most 25°C (or below 10°C) for a holding time of at least 12 hours, for example from 24 hours to 50 days, from 36 hours to 35 days, or from 48 hours to 28 days. In some embodiments, the holding is least 12 hours, at least 24 hours, at least 36 hours, or at least 48 hours. In some embodiments, the holding time is at most 50 days, for example at most 35 days or at most 28 days.

The holding time may in particular depend on whether the wort is held at rest or in circulation after adding the LT hops (and/or LT hops extract). Generally, the holding time may be lower upon circulation whereas a higher holding time may be applied when the wort is held at rest. Circulating the wort through the hops increases the speed of extraction of essential oils from the hops into the wort. Circulation may for example be achieved with a so-called hop gun.

In some embodiments in which the wort is held at rest after adding the LT hops (and/or LT hops extract), the holding time may be in a range of from 12 hours to 12 weeks, for example from 5 days to 75 days, from 7 days to 70 days, from 10 days to 50 days, from 12 days to 35 days, or from 14 days to 28 days. In some embodiments in which the wort is held at rest after adding the LT hops (and/or LT hops extract), the holding time may be at least 12 hours, for example at least 5 days, at least 7 days, at least 10 days, at least 12 days, or at least 14 days. In some embodiments in which the wort is held at rest after adding the LT hops (and/or LT hops extract), the holding time may be at most 12 weeks, for example at most 75 days, at most 70 days, at most 50 days, at most 35 days, or at most 28 days.

In some embodiments in which the wort is circulated after adding the LT hops (and/or LT hops extract), the holding time may be in a range of from 12 hours to 12 days, for example from 18 hours to 10 days, from 24 hours to 7 days, from 30 hours to 6 days, from 36 hours to 5 days, or from 48 hours to 4 days. In some embodiments in which the wort is circulated after adding the LT hops (and/or LT hops extract), the holding time may be at least 12 hours, for example at least 18 hours, at least 24 hours, at least 30 hours, at least 36 hours, or at least 48 hours. In some embodiments in which the wort is circulated after adding the LT hops (and/or LT hops extract), the holding time may be at most 12 days, for example at most 10 days, at most 7 days, at most 6 days, at most 5 days, or at most 4 days.

In some embodiments of the disclosure, after the cooling step, circulation of the wort in a tank is maintained for at least 3 days, or at least 5 days, or at least 7 days.

In one embodiment of the disclosure, after the cooling step, the wort is further cooled down until it reaches a temperature below 10°C with a cooling rate of about 1 K per day, or of about 2 K per day, or of about 3 K per day, or of about 4 K per day, or of about 5 K per day, or of about 6 K per day, or of about 7 K per day, or of about 8 K per day, or of about 9 K per day, or of about 10 K per day, wherein "about" means ± 10% of the indicated value, or with a cooling rate of 1-10 K per day. In some embodiments, the cooling rate is in a range of from 1 to 10 K per day, for example at least 1 K per day, at least 2 K per day, at least 3 K per day, or at least 4 K per day, such as about 5 K per day.

In one embodiment of the disclosure, colored malt extract is added to the wort when it has a temperature of below 10°C.

In one embodiment of the disclosure, after reaching the temperature of below 10°C and after optionally adding the colored malt extract, the mixture is stored at below 10°C for a time period of at least 1 week and/or at most 10 weeks.

In one embodiment of the disclosure, the wort is filtered and/or pasteurized and/or carbonated as a further step after the storage at below 10°C.

In one embodiment of the disclosure, the wort is filtered, such that after filtration the mixture is substantially free of undissolved proteins, unfermentable sugars, undissolved yeast, microbes, bacteria, and/or plant fibers. Isinglass fining may be used as an alternative to filtration.

In some embodiments of the disclosure, the wort is carbonated such that a concentration of carbon dioxide in the mixture of at least 3 g/l, or at least 5 g/l, or at least 7 g/l and at most 10 g/l is reached. In some embodiments, the amount of carbon dioxide is in a range of from 1.0 g/L to 10 g/L, for example from 2.0 g/L to 8.0 g/L, from 3.0 g/L to 7.5 g/L, from 4.0 to 7.0 g/L, or from 4.5 g/L to 6.5 g/L. In some embodiments, the amount of carbon dioxide is at least 1.0 g/L, for example at least 2.0 g/L, at least 3.0 g/L, at least 4.0 g/L, or at least 4.5 g/L. In some embodiments, the amount of carbon dioxide is at most 10 g/L, for example at most 8.0 g/L, at most 7.5 g/L, at most 7.0 g/L, or at most 6.5 g/L.

In some embodiments, the wort is treated with one or more foam stabilizers such as nitrogen. Foam stabilizers may also be based on extracts from hops comprising tetra iso-alpha acids and/or hexa iso-alpha acids.

In some embodiments, the method of the disclosure comprises adding essential oils (top notes) to the wort, in particular hop-based flavoring agents that provide the beverage with characteristic hop-based beer flavors. Such hop-based flavoring agents may comprise essential oils such as myrcene, linalool, humulene, and others described herein. However, in some embodiments, no top notes are added as it is one of the advantages of the method of this disclosure to provide excellent flavor and aroma even without addition of top notes.

This disclosure also relates to a method of making a beverage concentrate, the method comprising
- making a wort concentrate,
- making a low temperature hops concentrate,
- mixing the wort concentrate and the low temperature hops concentrate.

Making a wort concentrate in particular comprises
A. preparing a mash comprising malt (and/or malt extract) and water,
B. holding the mash at a temperature range of from 20°C to 90°C,
C. separating liquid fraction from the mash to obtain a wort,
D. thermal treating the wort at a temperature of at least 90°C such as of from 90°C to 110°C, and subsequently cooling the wort,
wherein the making a wort concentrate comprises
- optionally adding yeast to the wort at a temperature of >90°C,
- adding high temperature hops (and/or high temperature hops extract) to the wort after step D. at a wort temperature in a range of from 35°C to 90°C,
- a concentrating step, in particular to obtain the wort concentrate.

The wort can be concentrated by various means, for example by vacuum evaporation. Making the wort concentrate does in particular not comprise the step addition of low temperature hops. The reason is that the essential oils provided by the low temperature hops may get lost during concentrating the wort. Optionally, solids are removed prior to the concentrating step, for example by filtration. The concentrating step may in particular be done such that the water content of the wort concentrate is at most 80 vol.-%, for example at most 75 vol.-%, at most 50 vol.-%, at most 25 vol.-%, at most 15 vol.-%, at most 10 vol.-%, at most 7.5 vol.-%, or at most 5.0 vol.-%. The water content may for example be at least 0.1 vol.-%, at least 0.2 vol.-%, at least 0.5 vol.-%, at least 1.0 vol.-%, at least 1.5 vol.-%, at least 2.0 vol.-%, at least 2.5 vol.-%, or at least 3.0 vol.-%. The water content may for example be in a range of from 0.1 to 80 vol.-%, from 0.2 to 75 vol.-%, from 0.5 to 50 vol.-%, from 1.0 to 25 vol.-%, from 1.5 to 15 vol.-%, from 2.0 to 10 vol.-%, from 2.5 to 7.5 vol.-%, or from 3.0 to 5.0 vol.-%.

Making a low temperature hops concentrate in particular comprises
- incubating low temperature hops in an extracting agent at a holding temperature of at most 25°C for a holding time of at least 12 hours,
- an optional concentrating step, in particular to obtain the low temperature hops concentrate.

The extracting agent may for example be water, ethylene glycol, or the like, or mixtures thereof. The concentrating step may in particular be done such that the content of the extracting agent in the low temperature hops concentrate is at most 80 vol.-%, for example at most 75 vol.-%, at most 50 vol.-%, at most 25 vol.-%, at most 15 vol.-%, at most 10 vol.-%, at most 7.5 vol.-%, or at most 5.0 vol.-%. The content of the extracting agent may for example be at least 0.1 vol.-%, at least 0.2 vol.-%, at least 0.5 vol.-%, at least 1.0 vol.-%, at least 1.5 vol.-%, at least 2.0 vol.-%, at least 2.5 vol.-%, or at least 3.0 vol.-%. The content of the extracting agent may for example be in a range of from 0.1 to 80 vol.-%, from 0.2 to 75 vol.-%, from 0.5 to 50 vol.-%, from 1.0 to 25 vol.-%, from 1.5 to 15 vol.-%, from 2.0 to 10 vol.-%, from 2.5 to 7.5 vol.-%, or from 3.0 to 5.0 vol.-%.

This disclosure relates to a beverage concentrate. The beverage concentrate may in particular be obtained by the method of making a beverage concentrate as described herein.

The water content of the beverage concentrate may for example be in a range of from 0.1 to 80 vol.-%, from 0.2 to 75 vol.-%, from 0.5 to 50 vol.-%, from 1.0 to 25 vol.-%, from 1.5 to 15 vol.-%, from 2.0 to 10 vol.-%, from 2.5 to 7.5 vol.-%, or from 3.0 to 5.0 vol.-%. The water content of the beverage concentrate may for example be at least 0.1 vol.-%, at least 0.2 vol.-%, at least 0.5 vol.-%, at least 1.0 vol.-%, at least 1.5 vol.-%, at least 2.0 vol.-%, at least 2.5 vol.-%, or at least 3.0 vol.-%. The water content of the beverage concentrate may for example be at most 80 vol.-%, at most 75 vol.-%, at most 50 vol.-%, at most 25 vol.-%, at most 15 vol.-%, at most 10 vol.-%, at most 7.5 vol.-%, or at most 5.0 vol.-%.

This disclosure relates to a method of making a beverage comprising
- mixing the beverage concentrate of the invention with water.

In the mixing step, the volume ratio of water to beverage concentrate may for example be in a range of from 1.0 to 100, from 2.0 to 75, from 5.0 to 50, from 10 to 35, from 15 to 30, or from 20 to 25. The volume ratio of water to beverage concentrate may for example be at least 1.0, at least 2.0, at least 5.0, at least 10, at least 15, or at least 20. The volume ratio of water to beverage concentrate may for example be at most 100, at most 75, at most 50, at most 35, at most 30, or at most 25.

The mixture may be carbonated such that a concentration of carbon dioxide in the mixture of at least 3 g/l, or at least 5 g/l, or at least 7 g/l and at most 10 g/l is reached. In some embodiments, the amount of carbon dioxide is in a range of from 1.0 g/L to 10 g/L, for example from 2.0 g/L to 8.0 g/L, from 3.0 g/L to 7.5 g/L, from 4.0 to 7.0 g/L, or from 4.5 g/L to 6.5 g/L. In some embodiments, the amount of carbon dioxide is at least 1.0 g/L, for example at least 2.0 g/L, at least 3.0 g/L, at least 4.0 g/L, or at least 4.5 g/L. In some embodiments, the amount of carbon dioxide is at most 10 g/L, for example at most 8.0 g/L, at most 7.5 g/L, at most 7.0 g/L, or at most 6.5 g/L. Additionally or alternatively, the beverage concentrate may be mixed with water containing carbon dioxide such that the desired CO₂ concentrations of the beverage are obtained.

Preparing the beverage based on a beverage concentrate is particularly advantageous regarding saving resources. Transporting the beverage concentrate substantially reduces the transportation costs as compared to transportation of the beverage as such. The concentrate may be delivered to restaurants or bars which can produce the beverage of the invention on site avoiding energy-consuming transport of the beverage.

In some embodiments, the beverage concentrate comprises one or more hop-based flavoring agents, in particular at least 2, at least 3, at least 4, at least 5, at least 6, at least 7, at least 8, at least 9, at least 10, at least 11, at least 12, at least 13, at least 14, at least 15, at least 16, at least 17, at least 18, at least 19, or at least 20 hop-based flavoring agents. A high number of hop-based flavoring agents contributes to a rich and complex taste appreciated by the consumers. Moreover, this complexity contributes to masking undesired bitterness or sweetness of the beverage concentrate. In some embodiments, the beverage concentrate comprises 1 to 28 hop-based flavoring agents, for example 3 to 27, 6 to 26, 9 to 25, 12 to 24, 15 to 23, 17 to 22, or 19 to 21 hop-based flavoring agents. In some embodiments, the beverage concentrate comprises at most 28 hop-based flavoring agents, for example at most 27, at most 26, at most 25, at most 24, at most 23, at most 22, or at most 21 hop-based flavoring agents.

In some embodiments, the beverage concentrate comprises one or more hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol.

In some embodiments, the beverage concentrate comprises at least 1, at least 2, at least 3, at least 4, at least 5, at least 6, at least 7, at least 8, at least 9, at least 10, at least 11, at least 12, at least 13, at least 14, at least 15, at least 16, at least 17, at least 18, at least 19, or at least 20 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol. In some embodiments, the beverage concentrate comprises 1 to 28, 3 to 27, 6 to 26, 9 to 25, 12 to 24, 15 to 23, 17 to 22, or 19 to 21 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol. In some embodiments, the beverage concentrate comprises at most 28, at most 27, at most 26, at most 25, at most 24, at most 23, at most 22, or at most 21 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate, and citronellol.

In some embodiments, the beverage concentrate comprises one or more hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, methyl geranate, 2-undecanone, 2-decanone, 2-nonanone, 6-methyl-5-hepten-2-one, methyl nonanoate, beta-limonene, terpinolene, terpineol, and nerol.

In some embodiments, the beverage concentrate comprises at least 1, at least 2, at least 3, at least 4, at least 5, at least 6, at least 7, at least 8, at least 9, at least 10, at least 11, at least 12, at least 13, at least 14, at least 15, at least 16, at least 17, at least 18, at least 19, or at least 20 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, methyl geranate, 2-undecanone, 2-decanone, 2-nonanone, 6-methyl-5-hepten-2-one, methyl nonanoate, beta-limonene, terpinolene, terpineol, and nerol.

In some embodiments, the beverage concentrate comprises one or more hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, methyl geranate, 2-undecanone, 2-decanone, 2-nonanone, and beta-limonene.

In some embodiments, the beverage concentrate comprises at least 1, at least 2, at least 3, at least 4, at least 5, at least 6, at least 7, at least 8, at least 9, at least 10, at least 11, at least 12, at least 13, at least 14, or at least 15 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, methyl geranate, 2-undecanone, 2-decanone, 2-nonanone, and beta-limonene.

In some embodiments, the beverage concentrate comprises one or more hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, methyl geranate, 2-undecanone, and beta-limonene.

In some embodiments, the beverage concentrate comprises at least 1, at least 2, at least 3, at least 4, at least 5, at least 6, at least 7, at least 8, at least 9, at least 10, at least 11, at least 12, or at least 13 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, methyl geranate, 2-undecanone, and beta-limonene.

In some embodiments, the beverage concentrate comprises one or more hop-based flavoring agents selected from the group consisting of myrcene, linalool, humulene, beta-pinene, and 2-methylbutyl isobutyrate.

In some embodiments, the beverage concentrate comprises at least 1, at least 2, at least 3, at least 4, or at least 5 hop-based flavoring agents selected from the group consisting of myrcene, linalool, humulene, beta-pinene, and 2-methylbutyl isobutyrate.

In some embodiments, the beverage concentrate comprises one or more hop-based flavoring agents selected from the group consisting of myrcene, linalool, and humulene.

In some embodiments, the beverage concentrate comprises at least 1, at least 2, or at least 3 hop-based flavoring agents selected from the group consisting of myrcene, linalool, and humulene.

In some embodiments, the total concentration of myrcene, linalool and humulene in the beverage concentrate is in a range of from 25% to 100% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage concentrate, for example from >50% to 95%, from 65% to 90%, or from 75% to 85%. In some embodiments, the total concentration of myrcene, linalool and humulene in the beverage concentrate is at least 25% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage concentrate, for example more than 50%, at least 65%, or at least 75%. In some embodiments, the total concentration of myrcene, linalool and humulene in the beverage concentrate is at most 95% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage concentrate, for example at most 90%, or at most 85%. In some embodiments, the total concentration of myrcene, linalool and humulene in the beverage concentrate is 100% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage concentrate. In some embodiments myrcene, linalool and humulene are the only hop-based flavoring agents in the beverage concentrate.

In some embodiments, the ratio of the sugar content (in g/L) and the total concentration of hop-based flavoring agents (in g/L) in the beverage concentrate is in a range of from 50 to 75,000, for example from 100 to 50,000, from 200 to 40,000, from 500 to 35,000, from 1,000 to 30,000, from 2,000 to 25,000, from 3,000 to 20,000, from 4,000 to 15,000, or from 5,000 to 10,000. In some embodiments, the ratio of the sugar content (in g/L) and the total concentration of hop-based flavoring agents (in g/L) in the beverage concentrate is at least 50, for example at least 100, at least 200, at least 500, at least 1,000, at least 2,000, at least 3,000, at least 4,000, or at least 5,000. In some embodiments, the ratio of the sugar content (in g/L) and the total concentration of hop-based flavoring agents (in g/L) in the beverage concentrate is at most 75,000, for example at most 60,000, at most 50,000, at most 45,000, at most 40,000, at most 35,000, at most 30,000, at most 25,000, at most 20,000, at most 15,000, or at most 10,000.

In some embodiments, the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage concentrate is in a range of from 50 to 75,000, for example from 100 to 50,000, from 200 to 40,000, from 500 to 35,000, from 1,000 to 30,000, from 2,000 to 25,000, from 3,000 to 20,000, from 4,000 to 15,000, or from 5,000 to 10,000. In some embodiments, the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage concentrate is at least 50, for example at least 100, at least 200, at least 500, at least 1,000, at least 2,000, at least 3,000, at least 4,000, or at least 5,000. In some embodiments, the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage concentrate is at most 75,000, for example at most 60,000, at most 50,000, at most 45,000, at most 40,000, at most 35,000, at most 30,000, at most 25,000, at most 20,000, at most 15,000, or at most 10,000.

In some embodiments, the ratio of the sugar content (in g/L) and the total concentration of myrcene, linalool and humulene (in g/L) in the beverage concentrate is in a range of from 100 to 75,000, for example from 200 to 50,000, from 500 to 45,000, from 1,000 to 40,000, from 2,000 to 35,000, from 3,000 to 30,000, from 4,000 to 25,000, from 5,000 to 20,000, or from 6,000 to 12,000. In some embodiments, the ratio of the sugar content (in g/L) and the total concentration of myrcene, linalool and humulene (in g/L) in the beverage concentrate is at least 100, for example at least 200, at least 500, at least 1,000, at least 2,000, at least 3,000, at least 4,000, at least 5,000, or at least 6,000. In some embodiments, the ratio of the sugar content (in g/L) and the total concentration of myrcene, linalool and humulene (in g/L) in the beverage concentrate is at most 75,000, for example at most 60,000, at most 55,000, at most 50,000, at most 45,000, at most 40,000, at most 35,000, at most 30,000, at most 25,000, at most 20,000, at most 15,000, or at most 12,000.

In some embodiments, the ratio of the total amount of iso-alpha acids (in mg/L) to the total amount of hop-based flavoring agents (in mg/L) in the beverage concentrate is in a range of from 0.1 to 15.0, for example from 0.2 to 10.0, from 0.3 to 5.0, from 0.4 to 2.5, from 0.5 to 1.5, from 0.6 to 1.0, or from 0.7 to 0.9. In some embodiments, the ratio of the total amount of iso-alpha acids (in mg/L) to the total amount of hop-based flavoring agents (in mg/L) in the beverage concentrate is at least 0.1, for example at least 0.2, at least 0.3, at least 0.4, at least 0.5, at least 0.6, or at least 0.7. In some embodiments, the ratio of the total amount of iso-alpha acids (in mg/L) to the total amount of hop-based flavoring agents (in mg/L) in the beverage concentrate is at most 15.0, for example at most 12.5, at most 10.0, at most 7.5, at most 6.0, at most 5.0, at most 4.5, at most 2.5, at most 1.5, at most 1.0, or at most 0.9.

In some embodiments, the ratio of the total amount of alpha acids (in mg/L) to the total amount of hop-based flavoring agents (in mg/L) in the beverage concentrate is in a range of from 0.05 to 7.50, for example from 0.10 to 5.00, from 0.15 to 2.50, from 0.20 to 1.25, from 0.25 to 0.75, from 0.30 to 0.50, or from 0.35 to 0.45. In some embodiments, the ratio of the total amount of alpha acids (in mg/L) to the total amount of hop-based flavoring agents (in mg/L) in the beverage concentrate is at least 0.05, for example at least 0.10, at least 0.15, at least 0.20, at least 0.25, at least 0.30, or at least 0.35. In some embodiments, the ratio of the total amount of alpha acids (in mg/L) to the total amount of hop-based flavoring agents (in mg/L) in the beverage concentrate is at most 150, for example at most 125, at most 100, at most 75, at most 50, at most 40, at most 35, at most 7.50, at most 5.00, at most 2.50, at most 1.25, at most 0.75, at most 0.50, or at most 0.45.

In some embodiments, the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage concentrate is in a range of from 0.1 to 15.0, for example from 0.2 to 10.0, from 0.3 to 5.0, from 0.4 to 2.5, from 0.5 to 1.5, from 0.6 to 1.0, or from 0.7 to 0.9. In some embodiments, the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage concentrate is at least 0.1, for example at least 0.2, at least 0.3, at least 0.4, at least 0.5, at least 0.6, or at least 0.7. In some embodiments, the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage concentrate is at most 15.0, for example at most 12.5, at most 10.0, at most 7.5, at most 6.0, at most 5.0, at most 4.5, at most 2.5, at most 1.5, at most 1.0, or at most 0.9.

In some embodiments, the ratio of the total amount of alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage concentrate is in a range of from 0.05 to 7.50, for example from 0.10 to 5.00, from 0.15 to 2.50, from 0.20 to 1.25, from 0.25 to 0.75, from 0.30 to 0.50, or from 0.35 to 0.45. In some embodiments, the ratio of the total amount of alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage concentrate is at least 0.05, for example at least 0.10, at least 0.15, at least 0.20, at least 0.25, at least 0.30, or at least 0.35. In some embodiments, the ratio of the total amount of alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage concentrate is at most 150, for example at most 125, at most 100, at most 75, at most 50, at most 40, at most 35, at most 7.50, at most 5.00, at most 2.50, at most 1.25, at most 0.75, at most 0.50, or at most 0.45.

In some embodiments, the ratio of the total amount of iso-alpha acids (in mg/L) to the total amount of myrcene, linalool and humulene (in mg/L) in the beverage concentrate is in a range of from 0.1 to 15.0, for example from 0.2 to 10.0, from 0.3 to 7.0, from 0.4 to 5.0, from 0.5 to 2.5, from 0.6 to 1.5, or from 0.8 to 1.1. In some embodiments, the ratio of the total amount of iso-alpha acids (in mg/L) to the total amount of hop-based flavoring agents (in mg/L) in the beverage concentrate is at least 0.1, for example at least 0.2, at least 0.3, at least 0.4, at least 0.5, at least 0.6, or at least 0.8. In some embodiments, the ratio of the total amount of iso-alpha acids (in mg/L) to the total amount of hop-based flavoring agents (in mg/L) in the beverage concentrate is at most 15.0, for example at most 12.5, at most 10.0, at most 8.0, at most 7.0, at most 6.0, at most 5.0, at most 2.5, at most 1.5, or at most 1.1.

In some embodiments, the ratio of the total amount of alpha acids (in mg/L) to the total amount of myrcene, linalool and humulene (in mg/L) in the beverage concentrate is in a range of from 0.05 to 7.50, for example from 0.10 to 5.0, from 0.15 to 3.50, from 0.20 to 2.50, from 0.25 to 1.25, from 0.30 to 0.75, or from 0.40 to 0.55. In some embodiments, the ratio of the total amount of alpha acids (in mg/L) to the total amount of hop-based flavoring agents (in mg/L) in the beverage concentrate is at least 0.05, for example at least 0.10, at least 0.15, at least 0.20, at least 0.25, at least 0.30, or at least 0.40. In some embodiments, the ratio of the total amount of alpha acids (in mg/L) to the total amount of hop-based flavoring agents (in mg/L) in the beverage concentrate is at most 7.50, for example at most 5.00, at most 3.50, at most 2.50, at most 1.25, at most 0.75, or at most 0.55.

In some embodiments, the ratio of the sugar content (in g/L) and the total amount of iso-alpha acids (in g/L) in the beverage concentrate is in a range of from 100 to 100,000, for example from 500 to 50,000, from 1,000 to 40,000, from 2,000 to 30,000, from 3,500 to 20,000, from 5,000 to 15,000, or from 7,000 to 12,000. In some embodiments, the ratio of the sugar content (in g/L) and the total amount of iso-alpha acids (in g/L) in the beverage concentrate is at least 100, for example at least 200, at least 500, at least 1,000, at least 2,000, at least 2,750, at least 3,500, at least 5,000, or at least 7,000. In some embodiments, the ratio of the sugar content (in g/L) and the total amount of iso-alpha acids (in g/L) in the beverage concentrate is at most 100,000, for example at most 50,000, at most 40,000, at most 30,000, at most 20,000, at most 15,000, or at most 12,000.

In some embodiments, the ratio of the sugar content (in g/L) and the total amount of alpha acids (in g/L) in the beverage concentrate is in a range of from 200 to 200,000, for example from 1,000 to 100,000, from 2,000 to 75,000, from 5,000 to 50,000, from 7,500 to 35,000, from 10,000 to 30,000, or from 15,000 to 25,000. In some embodiments, the ratio of the sugar content (in g/L) and the total amount of alpha acids (in g/L) in the beverage concentrate is at least 10, for example at least 20, at least 50, at least 100, at least 200, at least 325, at least 450, at least 1,000, at least 2,000, at least 5,000, at least 7,500, at least 10,000, or at least 15,000. In some embodiments, the ratio of the sugar content (in g/L) and the total amount of alpha acids (in g/L) in the beverage concentrate is at most 200,000, for example at most 100,000, at most 75,000, at most 50,000, at most 35,000, at most 30,000, or at most 25,000.

In some embodiments, the ratio of the total amount of humilinone (in mg/L) and the total amount of iso-alpha acids (in mg/L) in the beverage concentrate is in a range of from 0.1 to 100, for example from 0.2 to 50, from 0.5 to 25, from 1.0 to 20, from 2.0 to 15, from 3.0 to 10, from 4.0 to 8.5, or from 5.0 to 7.5. In some embodiments, the ratio of the total amount of humilinone (in mg/L) and the total amount of iso-alpha acids (in mg/L) in the beverage concentrate is at least 0.1, for example at least 0.2, at least 0.5, at least 1.0, at least 2.0, at least 3.0, at least 4.0, or at least 5.0. In some embodiments, the ratio of the total amount of humilinone (in mg/L) and the total amount of iso-alpha acids (in mg/L) in the beverage concentrate is at most 100, for example at most 50, at most 25, at most 20, at most 15, at most 10, at most 8.5, or at most 7.5.

In some embodiments, the ratio of the total amount of humilinone (in mg/L) and the total amount of alpha acids (in mg/L) in the beverage concentrate is in a range of from 0.5 to 100, for example from 1.0 to 75, from 2.0 to 50, from 5.0 to 25, from 7.5 to 20, or from 10 to 15. In some embodiments, the ratio of the total amount of humilinone (in mg/L) and the total amount of alpha acids (in mg/L) in the beverage concentrate is at least 0.5, for example at least 1.0, at least 2.0, at least 5.0, at least 7.5, or at least 10. In some embodiments, the ratio of the total amount of humilinone (in mg/L) and the total amount of alpha acids (in mg/L) in the beverage concentrate is at most 100, for example at most 75, at most 50, at most 25, at most 20, or at most 15.

In some embodiments, the ratio of the total amount of iso-alpha acids (in mg/L) and the total amount of alpha acids (in mg/L) in the beverage concentrate is in a range of from 0.1 to 25, for example from 0.2 to 15, from 0.5 to 10, from 1.0 to 5.0, or from 1.5 to 3.0. In some embodiments, the ratio of the total amount of iso-alpha acids (in mg/L) and the total amount of alpha acids (in mg/L) in the beverage concentrate is at least 0.1, for example at least 0.2, at least 0.5, at least 1.0, or at least 1.5. In some embodiments, the ratio of the total amount of iso-alpha acids (in mg/L) and the total amount of alpha acids (in mg/L) in the beverage concentrate is at most 25, for example at most 15, at most 10, at most 5.0, or at most 3.0.

The beverage concentrates of the disclosure comprise less than 0.02% ethanol (v/v), in particular less than 0.01% ethanol (v/v). In some embodiments, the beverage concentrates are essentially free of ethanol.

In some embodiments, the beverage concentrate is essentially free of fermentation by-products, such as esters of acetic acid, succinic acid, malic acid, lactic acid and/or diacetyl. In some embodiments, the concentration of one or more of esters of acetic acid, succinic acid, malic acid, lactic acid and diacetyl in the beverage concentrate is less than 100 ppm (w/w). In some embodiments, the concentration of each of esters of acetic acid, succinic acid, malic acid, lactic acid and diacetyl in the beverage concentrate is less than 100 ppm (w/w). In some embodiments, the concentration of one or more of esters of acetic acid, succinic acid, malic acid, lactic acid and diacetyl in the beverage concentrate is less than 0.1 mg/L. In some embodiments, the concentration of each of esters of acetic acid, succinic acid, malic acid, lactic acid and diacetyl in the beverage concentrate is less than 0.1 mg/L.

In some embodiments, the concentration of esters of acetic acid in the beverage concentrate is less than 0.1 mg/L or less than 100 ppm (w/w). In some embodiments, the concentration of succinic acid in the beverage concentrate is less than 0.1 mg/L or less than 100 ppm (w/w). In some embodiments, the concentration of malic acid in the beverage concentrate is less than 0.1 mg/L or less than 100 ppm (w/w). In some embodiments, the concentration of lactic acid in the beverage concentrate is less than 0.1 mg/L or less than 100 ppm (w/w). In some embodiments, the concentration of diacetyl in the beverage concentrate is less than 0.1 mg/L or less than 100 ppm (w/w).

In some embodiments, the concentration of vicinal dicarbonyls in the beverage concentrate is less than 1.50 mg/kg, in particular less than 1.00 mg/kg, less than 0.50 mg/kg, less than 0.15 mg/kg, less than 0.10 mg/kg, less than 0.08 mg/kg, at most 0.07 mg/kg, or at most 0.06 mg/kg. In some embodiments, the concentration of diacetyl in the beverage concentrate is less than 1.50 mg/kg, in particular less than 1.00 mg/kg, less than 0.50 mg/kg, less than 0.15 mg/kg, less than 0.10 mg/kg, less than 0.08 mg/kg, at most 0.07 mg/kg, or at most 0.06 mg/kg. In some embodiments, the concentration of 2,3-pentanedione in the beverage concentrate is less than 1.50 mg/kg, in particular less than 1.00 mg/kg, less than 0.50 mg/kg, less than 0.15 mg/kg, less than 0.10 mg/kg, less than 0.08 mg/kg, at most 0.07 mg/kg, or at most 0.06 mg/kg. In some embodiments, the concentration of diacetyl and/or 2,3-pentanedione in the beverage concentrate is less than 1.50 mg/kg, in particular less than 1.00 mg/kg, less than 0.50 mg/kg, less than 0.15 mg/kg, less than 0.10 mg/kg, less than 0.08 mg/kg, at most 0.07 mg/kg, or at most 0.06 mg/kg. In some embodiments, the total concentration of diacetyl and 2,3-pentanedione in the beverage concentrate is less than 1.50 mg/kg, in particular less than 1.00 mg/kg, less than 0.50 mg/kg, less than 0.15 mg/kg, less than 0.10 mg/kg, less than 0.08 mg/kg, at most 0.07 mg/kg, or at most 0.06 mg/kg. In some embodiments, the concentration of each of diacetyl and 2,3-pentanedione in the beverage concentrate is less than 1.50 mg/kg, in particular less than 1.00 mg/kg, less than 0.50 mg/kg, less than 0.15 mg/kg, less than 0.10 mg/kg, less than 0.08 mg/kg, at most 0.07 mg/kg, or at most 0.06 mg/kg. The concentration of vicinal dicarbonyls such as diacetyl and 2,3-pentanedione can be determined by using standard EBC method Mebak Volume II 2.23.

In some embodiments, the concentration of malic acid and/or lactic acid in the beverage concentrate is at most 0.10 g/100ml, in particular at most 0.08 g/100ml, at most 0.06 g/100ml, at most 0.04 g/100ml, at most 0.02 g/100ml, or at most 0.01 g/100ml. In some embodiments, the concentration of malic acid in the beverage concentrate is at most 0.10 g/100ml, in particular at most 0.08 g/100ml, at most 0.06 g/100ml, at most 0.04 g/100ml, at most 0.02 g/100ml, or at most 0.01 g/100ml. In some embodiments, the concentration of lactic acid in the beverage concentrate is at most 0.10 g/100ml, in particular at most 0.08 g/100ml, at most 0.06 g/100ml, at most 0.04 g/100ml, at most 0.02 g/100ml, or at most 0.01 g/100ml. In some embodiments, the total concentration of malic acid and lactic acid in the beverage concentrate is at most 0.10 g/100ml, in particular at most 0.08 g/100ml, at most 0.06 g/100ml, at most 0.04 g/100ml, at most 0.02 g/100ml, or at most 0.01 g/100ml. In some embodiments, the concentration of each of malic acid and lactic acid in the beverage concentrate is at most 0.10 g/100ml, in particular at most 0.08 g/100ml, at most 0.06 g/100ml, at most 0.04 g/100ml, at most 0.02 g/100ml, or at most 0.01 g/100ml. The concentration of malic acid and lactic acid can be determined by using standard methods, in particular enzymatically with a test system by R-Biopharm.

The present disclosure also provides a beverage, optionally obtainable by the method provided by the present disclosure, comprising:
- less than 0.02% ethanol (v/v),
- carbon dioxide,
- water.

In some embodiments, the beverage comprises deactivated yeast.

In some embodiments, the beverage comprises one or more sugars in a total amount of at most 10 wt.-%.

In some embodiments, the beverage comprises one or more hop-based flavoring agents, in particular at least 2, at least 3, at least 4, at least 5, at least 6, at least 7, at least 8, at least 9, at least 10, at least 11, at least 12, at least 13, at least 14, at least 15, at least 16, at least 17, at least 18, at least 19, or at least 20 hop-based flavoring agents. A high number of hop-based flavoring agents contributes to a rich and complex taste appreciated by the consumers. Moreover, this complexity contributes to masking undesired bitterness or sweetness of the beverage. In some embodiments, the beverage comprises 1 to 28 hop-based flavoring agents, for example 3 to 27, 6 to 26, 9 to 25, 12 to 24, 15 to 23, 17 to 22, or 19 to 21 hop-based flavoring agents. In some embodiments, the beverage comprises at most 28 hop-based flavoring agents, for example at most 27, at most 26, at most 25, at most 24, at most 23, at most 22, or at most 21 hop-based flavoring agents.

In some embodiments, the total concentration of hop-based flavoring agents in the beverage is in a range of from 0.1 to 20 mg/L, for example from 0.2 to 15 mg/L, from 0.5 to 10 mg/L, from 1.0 to 7.5 mg/L, from 1.2 to 5.0 mg/L, from 1.5 to 4.0 mg/L, from 1.7 to 3.5 mg/L, from 1.9 to 3.0 mg/L, or from 2.0 to 2.4 mg/L. In some embodiments, the total concentration of hop-based flavoring agents in the beverage is at least 0.1 mg/L, for example at least 0.2 mg/L, at least 0.5 mg/L, at least 1.0 mg/L, at least 1.2 mg/L, at least 1.5 mg/L, at least 1.7 mg/L, at least 1.9 mg/L, or at least 2.0 mg/L. In some embodiments, the total concentration of hop-based flavoring agents in the beverage is at most 20 mg/L, for example at most 15 mg/L, at most 10 mg/L, at most 7.5 mg/L, at most 5.0 mg/L, at most 4.0 mg/L, at most 3.5 mg/L, at most 3.0 mg/L, or at most 2.4 mg/L.

In some embodiments, the beverage comprises one or more hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol.

In some embodiments, the beverage comprises at least 1, at least 2, at least 3, at least 4, at least 5, at least 6, at least 7, at least 8, at least 9, at least 10, at least 11, at least 12, at least 13, at least 14, at least 15, at least 16, at least 17, at least 18, at least 19, or at least 20 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol. In some embodiments, the beverage comprises 1 to 28, 3 to 27, 6 to 26, 9 to 25, 12 to 24, 15 to 23, 17 to 22, or 19 to 21 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol. In some embodiments, the beverage comprises at most 28, at most 27, at most 26, at most 25, at most 24, at most 23, at most 22, or at most 21 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol.

In some embodiments, the beverage comprises one or more hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, methyl geranate, 2-undecanone, 2-decanone, 2-nonanone, 6-methyl-5-hepten-2-one, methyl nonanoate, beta-limonene, terpinolene, terpineol, and nerol.

In some embodiments, the beverage comprises at least 1, at least 2, at least 3, at least 4, at least 5, at least 6, at least 7, at least 8, at least 9, at least 10, at least 11, at least 12, at least 13, at least 14, at least 15, at least 16, at least 17, at least 18, at least 19, or at least 20 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, methyl geranate, 2-undecanone, 2-decanone, 2-nonanone, 6-methyl-5-hepten-2-one, methyl nonanoate, beta-limonene, terpinolene, terpineol, and nerol.

In some embodiments, the beverage comprises one or more hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, methyl geranate, 2-undecanone, 2-decanone, 2-nonanone, and beta-limonene.

In some embodiments, the beverage comprises at least 1, at least 2, at least 3, at least 4, at least 5, at least 6, at least 7, at least 8, at least 9, at least 10, at least 11, at least 12, at least 13, at least 14, or at least 15 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, methyl geranate, 2-undecanone, 2-decanone, 2-nonanone, and beta-limonene.

In some embodiments, the beverage comprises one or more hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, methyl geranate, 2-undecanone, and beta-limonene.

In some embodiments, the beverage comprises at least 1, at least 2, at least 3, at least 4, at least 5, at least 6, at least 7, at least 8, at least 9, at least 10, at least 11, at least 12, or at least 13 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, methyl geranate, 2-undecanone, and beta-limonene.

In some embodiments, the beverage comprises one or more hop-based flavoring agents selected from the group consisting of myrcene, linalool, humulene, beta-pinene, and 2-methylbutyl isobutyrate.

In some embodiments, the beverage comprises at least 1, at least 2, at least 3, at least 4, or at least 5 hop-based flavoring agents selected from the group consisting of myrcene, linalool, humulene, beta-pinene, and 2-methylbutyl isobutyrate.

In some embodiments, the beverage comprises one or more hop-based flavoring agents selected from the group consisting of myrcene, linalool, and humulene.

In some embodiments, the beverage comprises at least 1, at least 2, or at least 3 hop-based flavoring agents selected from the group consisting of myrcene, linalool, and humulene.

In some embodiments, the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage is in a range of from 0.1 to 20 mg/L, for example from 0.2 to 15 mg/L, from 0.5 to 10 mg/L, from 1.0 to 7.5 mg/L, from 1.2 to 5.0 mg/L, from 1.5 to 4.0 mg/L, from 1.7 to 3.5 mg/L, from 1.9 to 3.0 mg/L, or from 2.0 to 2.4 mg/L. In some embodiments, the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage is at least 0.1 mg/L, for example at least 0.2 mg/L, at least 0.5 mg/L, at least 1.0 mg/L, at least 1.2 mg/L, at least 1.5 mg/L, at least 1.7 mg/L, at least 1.9 mg/L, or at least 2.0 mg/L. In some embodiments, the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage is at most 20 mg/L, for example at most 15 mg/L, at most 10 mg/L, at most 7.5 mg/L, at most 5.0 mg/L, at most 4.0 mg/L, at most 3.5 mg/L, at most 3.0 mg/L, or at most 2.4 mg/L.

In some embodiments, the total concentration of myrcene, linalool, humulene, beta-pinene and 2-methylbutyl isobutyrate in the beverage is in a range of from 0.1 to 15 mg/L, for example from 0.2 to 10 mg/L, from 0.5 to 7.5 mg/L, from 1.0 to 5.0 mg/L, from 1.5 to 2.5 mg/L. In some embodiments, the total concentration of myrcene, linalool, humulene, beta-pinene and 2-methylbutyl isobutyrate in the beverage is at least 0.1 mg/L, for example at least 0.2 mg/L, at least 0.5 mg/L, at least 1.0 mg/L, or at least 1.5 mg/L. In some embodiments, the total concentration of myrcene, linalool, humulene, beta-pinene and 2-methylbutyl isobutyrate in the beverage is at most 15 mg/L, for example at most 10 mg/L, at most 7.5 mg/L, at most 5.0 mg/L, or at most 2.5 mg/L.

In some embodiments, the total concentration of myrcene, linalool and humulene in the beverage is in a range of from 0.1 to 12 mg/L, for example from 0.2 to 10 mg/L, from 0.5 to 8.0 mg/L, from 1.0 to 4.0 mg/L, from 1.5 to 2.0 mg/L. In some embodiments, the total concentration of myrcene, linalool and humulene in the beverage is at least 0.1 mg/L, for example at least 0.2 mg/L, at least 0.5 mg/L, at least 1.0 mg/L, or at least 1.5 mg/L. In some embodiments, the total concentration of myrcene, linalool and humulene in the beverage is at most 12 mg/L, for example at most 10 mg/L, at most 8.0 mg/L, at most 4.0 mg/L, or at most 2.0 mg/L.

In some embodiments, the total concentration of myrcene, linalool and humulene in the beverage is in a range of from 25% to 100% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol in the beverage, for example from >50% to 95%, from 65% to 90%, or from 75% to 85%. In some embodiments, the total concentration of myrcene, linalool and humulene in the beverage is at least 25% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage, for example more than 50%, at least 65%, or at least 75%. In some embodiments, the total concentration of myrcene, linalool and humulene in the beverage is at most 95% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage, for example at most 90%, or at most 85%. In some embodiments, the total concentration of myrcene, linalool and humulene in the beverage is 100% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage. In some embodiments myrcene, linalool and humulene are the only hop-based flavoring agents in the beverage.

In some embodiments, the concentration of myrcene in the beverage is in a range of from 10 to 7500 µg/L, for example from 50 to 6000 µg/L, from 100 to 5000 µg/L, from 200 to 4000 µg/L, from 500 to 3000 µg/L, from 750 to 2000 µg/L, or from 1000 to 1500 µg/L. In some embodiments, the concentration of myrcene in the beverage is at least 10 µg/L, for example at least 50 µg/L, at least 100 µg/L, at least 200 µg/L, at least 500 µg/L, at least 750 µg/L, or at least 1000 µg/L. In some embodiments, the concentration of myrcene in the beverage is at most 7500 µg/L, for example at most 6000 µg/L, at most 5000 µg/L, at most 4000 µg/L, at most 3000 µg/L, at most 2000 µg/L, or at least 1500 µg/L.

In some embodiments, the concentration of linalool in the beverage is in a range of from 15 to 5000 µg/L, for example from 30 to 4000 µg/L, from 50 to 2500 µg/L, from 100 to 1000 µg/L, from 200 to 750 µg/L, or from 300 to 500 µg/L. In some embodiments, the concentration of linalool in the beverage is at least 15 µg/L, for example at least 30 µg/L, at least 50 µg/L, at least 100 µg/L, at least 200 µg/L, or at least 300 µg/L. In some embodiments, the concentration of linalool in the beverage is at most 5000 µg/L, for example at most 4000 µg/L, at most 2500 µg/L, at most 1000 µg/L, at most 750 µg/L, or at most 500 µg/L.

In some embodiments, the concentration of humulene in the beverage is in a range of from 10 to 2000 µg/L, for example from 15 to 1500 µg/L, from 20 to 1000 µg/L, from 30 to 750 µg/L, from 50 to 500 µg/L, from 75 to 300 µg/L, or from 100 to 200 µg/L. In some embodiments, the concentration of humulene in the beverage is at least 10 µg/L, for example at least 15 µg/L, at least 20 µg/L, at least 30 µg/L, at least 50 µg/L, at least 75 µg/L, or at least 100 µg/L. In some embodiments, the concentration of humulene in the beverage is at most 2000 µg/L, for example at most 1500 µg/L, at most 1000 µg/L, at most 750 µg/L, at most 500 µg/L, at most 300 µg/L, or at most 200 µg/L.

In some embodiments, the concentration of beta-pinene in the beverage is in a range of from 5.0 to 1500 µg/L, for example from 10 to 1000 µg/L, from 20 to 500 µg/L, from 50 to 250 µg/L, or from 75 to 125 µg/L. In some embodiments, the concentration of beta-pinene in the beverage is at least 5.0 µg/L, for example at least 10 µg/L, at least 20 µg/L, at least 50 µg/L, or at least 75 µg/L. In some embodiments, the concentration of beta-pinene in the beverage is at most 1500 µg/L, for example at most 1000 µg/L, at most 500 µg/L, at most 250 µg/L, or at most 125 µg/L.

In some embodiments, the concentration of 2-methylbutyl isobutyrate in the beverage is in a range of from 5.0 to 1000 µg/L, for example from 10 to 500 µg/L, from 20 to 250 µg/L, or from 50 to 100 µg/L. In some embodiments, the concentration of 2-methylbutyl isobutyrate in the beverage is at least 5.0 µg/L, for example at least 10 µg/L, at least 20 µg/L, or at least 50 µg/L. In some embodiments, the concentration of 2-methylbutyl isobutyrate in the beverage is at most 1000 µg/L, for example at most 500 µg/L, at most 250 µg/L, or at most 100 µg/L.

In some embodiments, the concentration of beta-limonene in the beverage is in a range of from 2.0 to 500 µg/L, for example from 5.0 to 250 µg/L, from 10 to 125 µg/L, from 20 to 80 µg/L, or from 30 to 50 µg/L. In some embodiments, the concentration of beta-limonene in the beverage is at least 2.0 µg/L, for example at least 5.0 µg/L, at least 10 µg/L, at least 20 µg/L, or at least 30 µg/L. In some embodiments, the concentration of beta-limonene in the beverage is at most 500 µg/L, for example at most 250 µg/L, at most 125 µg/L, at most 80 µg/L, or at most 50 µg/L.

In some embodiments, the concentration of isobutyl isobutyrate in the beverage is in a range of from 2.0 to 500 µg/L, for example from 5.0 to 250 µg/L, from 10 to 125 µg/L, from 20 to 80 µg/L, or from 30 to 50 µg/L. In some embodiments, the concentration of isobutyl isobutyrate in the beverage is at least 2.0 µg/L, for example at least 5.0 µg/L, at least 10 µg/L, at least 20 µg/L, or at least 30 µg/L. In some embodiments, the concentration of isobutyl isobutyrate in the beverage is at most 500 µg/L, for example at most 250 µg/L, at most 125 µg/L, at most 80 µg/L, or at most 50 µg/L.

In some embodiments, the concentration of beta-caryophyllene in the beverage is in a range of from 1.0 to 250 µg/L, for example from 2.0 to 125 µg/L, from 5.0 to 75 µg/L, from 10 to 50 µg/L, from 15 to 35 µg/L, or from 20 to 30 µg/L. In some embodiments, the concentration of beta-caryophyllene in the beverage is at least 1.0 µg/L, for example at least 2.0 µg/L, at least 5.0 µg/L, at least 10 µg/L, at least 15 µg/L, or at least 20 µg/L. In some embodiments, the concentration of beta-caryophyllene in the beverage is at most 250 µg/L, for example at most 125 µg/L, at most 75 µg/L, at most 50 µg/L, at most 35 µg/L, or at most 30 µg/L.

In some embodiments, the concentration of alpha-pinene in the beverage is in a range of from 1.0 to 250 µg/L, for example from 2.0 to 125 µg/L, from 5.0 to 75 µg/L, from 10 to 50 µg/L, from 15 to 35 µg/L, or from 20 to 30 µg/L. In some embodiments, the concentration of alpha-pinene in the beverage is at least 1.0 µg/L, for example at least 2.0 µg/L, at least 5.0 µg/L, at least 10 µg/L, at least 15 µg/L, or at least 20 µg/L. In some embodiments, the concentration of alpha-pinene in the beverage is at most 250 µg/L, for example at most 125 µg/L, at most 75 µg/L, at most 50 µg/L, at most 35 µg/L, or at most 30 µg/L.

In some embodiments, the concentration of 3-methylbutyl isobutyrate in the beverage is in a range of from 1.0 to 250 µg/L, for example from 2.0 to 125 µg/L, from 5.0 to 75 µg/L, from 10 to 50 µg/L, from 15 to 35 µg/L, or from 20 to 30 µg/L. In some embodiments, the concentration of 3-methylbutyl isobutyrate in the beverage is at least 1.0 µg/L, for example at least 2.0 µg/L, at least 5.0 µg/L, at least 10 µg/L, at least 15 µg/L, or at least 20 µg/L. In some embodiments, the concentration of 3-methylbutyl isobutyrate in the beverage is at most 250 µg/L, for example at most 125 µg/L, at most 75 µg/L, at most 50 µg/L, at most 35 µg/L, or at most 30 µg/L.

In some embodiments, the concentration of geraniol in the beverage is in a range of from 1.0 to 250 µg/L, for example from 2.0 to 125 µg/L, from 5.0 to 75 µg/L, from 10 to 50 µg/L, from 15 to 35 µg/L, or from 20 to 30 µg/L. In some embodiments, the concentration of geraniol in the beverage is at least 1.0 µg/L, for example at least 2.0 µg/L, at least 5.0 µg/L, at least 10 µg/L, at least 15 µg/L, or at least 20 µg/L. In some embodiments, the concentration of geraniol in the beverage is at most 250 µg/L, for example at most 125 µg/L, at most 75 µg/L, at most 50 µg/L, at most 35 µg/L, or at most 30 µg/L.

In some embodiments, the concentration of methyl geranate in the beverage is in a range of from 1.0 to 250 µg/L, for example from 2.0 to 125 µg/L, from 5.0 to 75 µg/L, from 10 to 50 µg/L, from 15 to 35 µg/L, or from 20 to 30 µg/L. In some embodiments, the concentration of methyl geranate in the beverage is at least 1.0 µg/L, for example at least 2.0 µg/L, at least 5.0 µg/L, at least 10 µg/L, at least 15 µg/L, or at least 20 µg/L. In some embodiments, the concentration of methyl geranate in the beverage is at most 250 µg/L, for example at most 125 µg/L, at most 75 µg/L, at most 50 µg/L, at most 35 µg/L, or at most 30 µg/L.

In some embodiments, the concentration of 2-undecanone in the beverage is in a range of from 1.0 to 250 µg/L, for example from 2.0 to 125 µg/L, from 5.0 to 75 µg/L, from 10 to 50 µg/L, from 15 to 35 µg/L, or from 20 to 30 µg/L. In some embodiments, the concentration of 2-undecanone in the beverage is at least 1.0 µg/L, for example at least 2.0 µg/L, at least 5.0 µg/L, at least 10 µg/L, at least 15 µg/L, or at least 20 µg/L. In some embodiments, the concentration of 2-undecanone in the beverage is at most 250 µg/L, for example at most 125 µg/L, at most 75 µg/L, at most 50 µg/L, at most 35 µg/L, or at most 30 µg/L.

In some embodiments, the concentration of 2-decanone in the beverage is in a range of from 0.5 to 100 µg/L, for example from 1.0 to 75 µg/L, from 2.0 to 50 µg/L, from 5.0 to 25 µg/L, or from 7.5 to 15 µg/L. In some embodiments, the concentration of 2-decanone in the beverage is at least 0.5 µg/L, for example at least 1.0 µg/L, at least 2.0 µg/L, at least 5.0 µg/L, or at least 7.5 µg/L. In some embodiments, the concentration of 2-decanone in the beverage is at most 100 µg/L, for example at most 75 µg/L, at most 50 µg/L, at most 25 µg/L, or at most 15 µg/L.

In some embodiments, the concentration of 2-nonanone in the beverage is in a range of from 0.5 to 100 µg/L, for example from 1.0 to 75 µg/L, from 2.0 to 50 µg/L, from 5.0 to 25 µg/L, or from 7.5 to 15 µg/L. In some embodiments, the concentration of 2-nonanone in the beverage is at least 0.5 µg/L, for example at least 1.0 µg/L, at least 2.0 µg/L, at least 5.0 µg/L, or at least 7.5 µg/L. In some embodiments, the concentration of 2-nonanone in the beverage is at most 100 µg/L, for example at most 75 µg/L, at most 50 µg/L, at most 25 µg/L, or at most 15 µg/L.

In some embodiments, the concentration of 6-methyl-5-hepten-2-one in the beverage is in a range of from 0.2 to 75 µg/L, for example from 0.5 to 50 µg/L, from 1.0 to 25 µg/L, from 2.0 to 15 µg/L, or from 5.0 to 10 µg/L. In some embodiments, the concentration of 6-methyl-5-hepten-2-one in the beverage is at least 0.2 µg/L, for example at least 0.5 µg/L, at least 1.0 µg/L, at least 2.0 µg/L, or at least 5.0 µg/L. In some embodiments, the concentration of 6-methyl-5-hep-ten-2-one in the beverage is at most 75 µg/L, for example at most 50 µg/L, at most 25 µg/L, at most 15 µg/L, or at most 10 µg/L.

In some embodiments, the concentration of methyl nonanoate in the beverage is in a range of from 0.2 to 75 µg/L, for example from 0.5 to 50 µg/L, from 1.0 to 25 µg/L, from 2.0 to 15 µg/L, or from 5.0 to 10 µg/L. In some embodiments, the concentration of methyl nonanoate in the beverage is at least 0.2 µg/L, for example at least 0.5 µg/L, at least 1.0 µg/L, at least 2.0 µg/L, or at least 5.0 µg/L. In some embodiments, the concentration of methyl nonanoate in the beverage is at most 75 µg/L, for example at most 50 µg/L, at most 25 µg/L, at most 15 µg/L, or at most 10 µg/L.

In some embodiments, the concentration of terpinolene in the beverage is in a range of from 0.2 to 75 µg/L, for example from 0.5 to 50 µg/L, from 1.0 to 25 µg/L, from 2.0 to 15 µg/L, or from 5.0 to 10 µg/L. In some embodiments, the concentration of terpinolene in the beverage is at least 0.2 µg/L, for example at least 0.5 µg/L, at least 1.0 µg/L, at least 2.0 µg/L, or at least 5.0 µg/L. In some embodiments, the concentration of terpinolene in the beverage is at most 75 µg/L, for example at most 50 µg/L, at most 25 µg/L, at most 15 µg/L, or at most 10 µg/L.

In some embodiments, the concentration of terpineol in the beverage is in a range of from 0.2 to 75 µg/L, for example from 0.5 to 50 µg/L, from 1.0 to 25 µg/L, from 2.0 to 15 µg/L, or from 5.0 to 10 µg/L. In some embodiments, the concentration of terpineol in the beverage is at least 0.2 µg/L, for example at least 0.5 µg/L, at least 1.0 µg/L, at least 2.0 µg/L, or at least 5.0 µg/L. In some embodiments, the concentration of terpineol in the beverage is at most 75 µg/L, for example at most 50 µg/L, at most 25 µg/L, at most 15 µg/L, or at most 10 µg/L.

In some embodiments, the concentration of nerol in the beverage is in a range of from 0.2 to 75 µg/L, for example from 0.5 to 50 µg/L, from 1.0 to 25 µg/L, from 2.0 to 15 µg/L, or from 5.0 to 10 µg/L. In some embodiments, the concentration of nerol in the beverage is at least 0.2 µg/L, for example at least 0.5 µg/L, at least 1.0 µg/L, at least 2.0 µg/L, or at least 5.0 µg/L. In some embodiments, the concentration of nerol in the beverage is at most 75 µg/L, for example at most 50 µg/L, at most 25 µg/L, at most 15 µg/L, or at most 10 µg/L.

In some embodiments, the concentration of isoamyl propanoate in the beverage is in a range of from 0 to 25 µg/L, for example from 0 to 10 µg/L, from 0 to 7.5 µg/L, from 0 to 5.0 µg/L, from 0.1 to <5.0 µg/L, from 0.2 to 2.5 µg/L, or from 0.5 to 1.0 µg/L. In some embodiments, the concentration of isoamyl propanoate in the beverage is at least 0.1 µg/L, for example at least 0.2 µg/L, or at least 0.5 µg/L. In some embodiments, the concentration of isoamyl propanoate in the beverage is at most 25 µg/L, for example at most 10 µg/L, at most 7.5 µg/L, at most 5.0 µg/L, less than 5.0 µg/L, at most 2.5 µg/L, at most 1.0 µg/L at most 0.5 µg/L, at most 0.4 µg/L, at most 0.3 µg/L, or at most 0.2 µg/L. In some embodiments, the beverage is essentially free of isoamyl propanoate.

In some embodiments, the concentration of terpinene-4-ol in the beverage is in a range of from 0 to 25 µg/L, for example from 0 to 10 µg/L, from 0 to 7.5 µg/L, from 0 to 5.0 µg/L, from 0.1 to <5.0 µg/L, from 0.2 to 2.5 µg/L, or from 0.5 to 1.0 µg/L. In some embodiments, the concentration of terpinene-4-ol in the beverage is at least 0.1 µg/L, for example at least 0.2 µg/L, or at least 0.5 µg/L. In some embodiments, the concentration of terpinene-4-ol in the beverage is at most 25 µg/L, for example at most 10 µg/L, at most 7.5 µg/L, at most 5.0 µg/L, less than 5.0 µg/L, at most 2.5 µg/L, at most 1.0 µg/L at most 0.5 µg/L, at most 0.4 µg/L, at most 0.3 µg/L, or at most 0.2 µg/L. In some embodiments, the beverage is essentially free of terpinene-4-ol.

In some embodiments, the concentration of 2-dodecanone in the beverage is in a range of from 0 to 25 µg/L, for example from 0 to 10 µg/L, from 0 to 7.5 µg/L, from 0 to 5.0 µg/L, from 0.1 to <5.0 µg/L, from 0.2 to 2.5 µg/L, or from 0.5 to 1.0 µg/L. In some embodiments, the concentration of 2-dodecanone in the beverage is at least 0.1 µg/L, for example at least 0.2 µg/L, or at least 0.5 µg/L. In some embodiments, the concentration of 2-dodecanone in the beverage is at most 25 µg/L, for example at most 10 µg/L, at most 7.5 µg/L, at most 5.0 µg/L, less than 5.0 µg/L, at most 2.5 µg/L, at most 1.0 µg/L at most 0.5 µg/L, at most 0.4 µg/L, at most 0.3 µg/L, or at most 0.2 µg/L. In some embodiments, the beverage is essentially free of 2-dodecanone.

In some embodiments, the concentration of ethyl-2-methyl butanoate in the beverage is in a range of from 0 to 25 µg/L, for example from 0 to 10 µg/L, from 0 to 7.5 µg/L, from 0 to 5.0 µg/L, from 0 to <5.0 µg/L, from 0 to 2.5 µg/L, from 0 to 1.0 µg/L, from 0 to 0.5 µg/L, from 0 to 0.4 µg/L, from 0 to 0.3 µg/L, or from 0 to 0.2 µg/L. In some embodiments, the concentration of ethyl-2-methyl butanoate in the beverage is at most 25 µg/L, for example at most 10 µg/L, at most 7.5 µg/L, at most 5.0 µg/L, less than 5.0 µg/L, at most 2.5 µg/L, at most 1.0 µg/L at most 0.5 µg/L, at most 0.4 µg/L, at most 0.3 µg/L, or at most 0.2 µg/L. In some embodiments, the beverage is essentially free of ethyl-2-methyl butanoate.

In some embodiments, the concentration of farnesene in the beverage is in a range of from 0 to 25 µg/L, for example from 0 to 10 µg/L, from 0 to 7.5 µg/L, from 0 to 5.0 µg/L, from 0 to <5.0 µg/L, from 0 to 2.5 µg/L, from 0 to 1.0 µg/L, from 0 to 0.5 µg/L, from 0 to 0.4 µg/L, from 0 to 0.3 µg/L, or from 0 to 0.2 µg/L. In some embodiments, the concentration of farnesene in the beverage is at most 25 µg/L, for example at most 10 µg/L, at most 7.5 µg/L, at most 5.0 µg/L, less than 5.0 µg/L, at most 2.5 µg/L, at most 1.0 µg/L at most 0.5 µg/L, at most 0.4 µg/L, at most 0.3 µg/L, or at most 0.2 µg/L. In some embodiments, the beverage is essentially free of farnesene.

In some embodiments, the concentration of citronellyl acetate in the beverage is in a range of from 0 to 25 µg/L, for example from 0 to 10 µg/L, from 0 to 7.5 µg/L, from 0 to 5.0 µg/L, from 0 to <5.0 µg/L, from 0 to 2.5 µg/L, from 0 to 1.0 µg/L, from 0 to 0.5 µg/L, from 0 to 0.4 µg/L, from 0 to 0.3 µg/L, or from 0 to 0.2 µg/L. In some embodiments, the concentration of citronellyl acetate in the beverage is at most 25 µg/L, for example at most 10 µg/L, at most 7.5 µg/L, at most 5.0 µg/L, less than 5.0 µg/L, at most 2.5 µg/L, at most 1.0 µg/L at most 0.5 µg/L, at most 0.4 µg/L, at most 0.3 µg/L, or at most 0.2 µg/L. In some embodiments, the beverage is essentially free of citronellyl acetate.

In some embodiments, the concentration of citronellol in the beverage is in a range of from 0 to 25 µg/L, for example from 0 to 10 µg/L, from 0 to 7.5 µg/L, from 0 to 5.0 µg/L, from 0 to <5.0 µg/L, from 0 to 2.5 µg/L, from 0 to 1.0 µg/L, from 0 to 0.5 µg/L, from 0 to 0.4 µg/L, from 0 to 0.3 µg/L, or from 0 to 0.2 µg/L. In some embodiments, the concentration of citronellol in the beverage is at most 25 µg/L, for example at most 10 µg/L, at most 7.5 µg/L, at most 5.0 µg/L, less than 5.0 µg/L, at most 2.5 µg/L, at most 1.0 µg/L at most 0.5 µg/L, at most 0.4 µg/L, at most 0.3 µg/L, or at most 0.2 µg/L. In some embodiments, the beverage is essentially free of citronellol.

In some embodiments, the concentration of geranyl acetate in the beverage is in a range of from 0 to 25 µg/L, for example from 0 to 10 µg/L, from 0 to 7.5 µg/L, from 0 to 5.0 µg/L, from 0 to <5.0 µg/L, from 0 to 2.5 µg/L, from 0 to 1.0 µg/L, from 0 to 0.5 µg/L, from 0 to 0.4 µg/L, from 0 to 0.3 µg/L, or from 0 to 0.2 µg/L. In some embodiments, the concentration of geranyl acetate in the beverage is at most 25 µg/L, for example at most 10 µg/L, at most 7.5 µg/L, at most 5.0 µg/L, less than 5.0 µg/L, at most 2.5 µg/L, at most 1.0 µg/L at most 0.5 µg/L, at most 0.4 µg/L, at most 0.3 µg/L, or at most 0.2 µg/L. In some embodiments, the beverage is essentially free of geranyl acetate.

The concentration of individual hop-based flavoring agents may in particular be determined by gas chromatography-mass spectrometry (GC-MS), in particular by GC-MS/MS (GC-tandem MS). The total concentration of hop-based flavoring agents can be determined as the sum of the concentrations of the individual hop-based flavoring agents.

In some embodiments, the beverage of the present disclosure comprises a total amount of iso-alpha acids in a range of from 0.1 to 100 mg/L, for example from 0.2 to 50 mg/L, from 0.3 to 25 mg/L, from 0.5 to 15 mg/L, from 0.8 to 10 mg/L, from 1.0 to 7.5 mg/L, from 1.2 to 5.0 mg/L, from 1.5 to 3.0 mg/L, or from 1.7 to 2.0 mg/L. In some embodiments, the beverage of the present disclosure comprises a total amount of iso-alpha acids of at least 0.1 mg/L, for example at least 0.2 mg/L, at least 0.3 mg/L, at least 0.5 mg/L, at least 0.8 mg/L, at least 1.0 mg/L, at least 1.1 mg/L, at least 1.2 mg/L, at least 1.3 mg/L, at least 1.5 mg/L, at least 1.6 mg/L, or at least 1.7 mg/L. In some embodiments, the beverage of the present disclosure comprises a total amount of iso-alpha acids of at most 100 mg/L, for example at most 75 mg/L, at most 65 mg/L, at most 50 mg/L, at most 35 mg/L, at most 25 mg/L, at most 20 mg/L, at most 15 mg/L, at most 10 mg/L, at most 7.5 mg/L, at most 5.0 mg/L, at most 3.0 mg/L, or at most 2.0 mg/L.

In some embodiments, the beverage of the present disclosure comprises a total amount of humilinone in a range of from 0.1 to 100 mg/L, for example from 0.2 to 75 mg/L, from 0.5 to 65 mg/L, from 1.0 to 50 mg/L, from 2.0 to 35 mg/L, from 3.0 to 25 mg/L, from 4.0 to 20 mg/L, from 5.0 to 15 mg/L, or from 9.0 to 13 mg/L. In some embodiments, the beverage of the present disclosure comprises a total amount of humilinone of at least 0.1 mg/L, for example at least 0.2 mg/L, at least 0.5 mg/L, at least 1.0 mg/L, at least 2.0 mg/L, at least 3.0 mg/L, at least 4.0 mg/L, at least 5.0 mg/L, at least 6.0 mg/L, or at least 9.0 mg/L. In some embodiments, the beverage of the present disclosure comprises a total amount of humilinone of at most 100 mg/L, for example at most 75 mg/L, at most 65 mg/L, at most 50 mg/L, at most 35 mg/L, at most 25 mg/L, at most 20 mg/L, at most 15 mg/L, or at most 13 mg/L.

In some embodiments, the beverage of the present disclosure comprises a total amount of alpha acids in a range of from 0.1 to 175 mg/L, for example from 0.2 to 80 mg/L, from 0.3 to 40 mg/L, from 0.4 to 20 mg/L, from 0.5 to 10 mg/L, from 0.6 to 5.0 mg/L, from 0.7 to 2.5 mg/L, from 0.8 to 1.5 mg/L, or from 0.9 to 1.0 mg/L. In some embodiments, the beverage of the present disclosure comprises a total amount of alpha acids of at least 0.1 mg/L, for example at least 0.2 mg/L, at least 0.3 mg/L, at least 0.4 mg/L, at least 0.5 mg/L, at least 0.6 mg/L, at least 0.7 mg/L, at least 0.8 mg/L, or at least 0.9 mg/L. In some embodiments, the beverage of the present disclosure comprises a total amount of alpha acids of at most 175 mg/L, for example at most 80 mg/L, at most 40 mg/L, at most 20 mg/L, at most 10 mg/L, at most 5.0 mg/L, at most 2.5 mg/L, at most 1.5 mg/L, or at most 1.0 mg/L.

In some embodiments, the ratio of the total amount of humilinone (in mg/L) and the total amount of iso-alpha acids (in mg/L) in the beverage is in a range of from 0.1 to 100, for example from 0.2 to 50, from 0.5 to 25, from 1.0 to 20, from 2.0 to 15, from 3.0 to 10, from 4.0 to 8.5, or from 5.0 to 7.5. In some embodiments, the ratio of the total amount of humilinone (in mg/L) and the total amount of iso-alpha acids (in mg/L) in the beverage is at least 0.1, for example at least 0.2, at least 0.5, at least 1.0, at least 2.0, at least 3.0, at least 4.0, or at least 5.0. In some embodiments, the ratio of the total amount of humilinone (in mg/L) and the total amount of iso-alpha acids (in mg/L) in the beverage is at most 100, for example at most 50, at most 25, at most 20, at most 15, at most 10, at most 8.5, or at most 7.5.

In some embodiments, the ratio of the total amount of humilinone (in mg/L) and the total amount of alpha acids (in mg/L) in the beverage is in a range of from 0.5 to 100, for example from 1.0 to 75, from 2.0 to 50, from 5.0 to 25, from 7.5 to 20, or from 10 to 15. In some embodiments, the ratio of the total amount of humilinone (in mg/L) and the total amount of alpha acids (in mg/L) in the beverage is at least 0.5, for example at least 1.0, at least 2.0, at least 5.0, at least 7.5, or at least 10. In some embodiments, the ratio of the total amount of humilinone (in mg/L) and the total amount of alpha acids (in mg/L) in the beverage is at most 100, for example at most 75, at most 50, at most 25, at most 20, or at most 15.

In some embodiments, the ratio of the total amount of iso-alpha acids (in mg/L) and the total amount of alpha acids (in mg/L) in the beverage is in a range of from 0.1 to 25, for example from 0.2 to 15, from 0.5 to 10, from 1.0 to 5.0, or from 1.5 to 3.0. In some embodiments, the ratio of the total amount of iso-alpha acids (in mg/L) and the total amount of alpha acids (in mg/L) in the beverage is at least 0.1, for example at least 0.2, at least 0.5, at least 1.0, or at least 1.5. In some embodiments, the ratio of the total amount of iso-alpha acids (in mg/L) and the total amount of alpha acids (in mg/L) in the beverage is at most 25, for example at most 15, at most 10, at most 5.0, or at most 3.0.

Within the scope of the present disclosure, the total amount of iso-alpha acids in the beverage or beverage concentrate can be measured by spectrophotometry. After reduction of the pH by adding acid for increasing the hydrophobicity of the iso-alpha acids, the iso-alpha acids are extracted by an organic solvent (in particular iso-octane). The concentration of iso-alpha acids in the beer is determined based on absorbance of the extract at a wavelength of 275 nm.

In some embodiments, the beverage is essentially free of fermentation by-products, such as esters of acetic acid, succinic acid, malic acid, lactic acid and/or diacetyl. In some embodiments, the concentration of one or more of esters of acetic acid, succinic acid, malic acid, lactic acid and diacetyl in the beverage is less than 100 ppm (w/w). In some embodiments, the concentration of each of esters of acetic acid, succinic acid, malic acid, lactic acid and diacetyl in the beverage is less than 100 ppm (w/w). In some embodiments, the concentration of one or more of esters of acetic acid, succinic acid, malic acid, lactic acid and diacetyl in the beverage is less than 0.1 mg/L. In some embodiments, the concentration of each of esters of acetic acid, succinic acid, malic acid, lactic acid and diacetyl in the beverage is less than 0.1 mg/L.

In some embodiments, the concentration of esters of acetic acid in the beverage is less than 0.1 mg/L or less than 100 ppm (w/w). In some embodiments, the concentration of succinic acid in the beverage is less than 0.1 mg/L or less than 100 ppm (w/w). In some embodiments, the concentration of malic acid in the beverage is less than 0.1 mg/L or less than 100 ppm (w/w). In some embodiments, the concentration of lactic acid in the beverage is less than 0.1 mg/L or less than 100 ppm (w/w). In some embodiments, the concentration of diacetyl in the beverage is less than 0.1 mg/L or less than 100 ppm (w/w).

In some embodiments, the concentration of vicinal dicarbonyls in the beverage is less than 1.50 mg/kg, in particular less than 1.00 mg/kg, less than 0.50 mg/kg, less than 0.15 mg/kg, less than 0.10 mg/kg, less than 0.08 mg/kg, at most 0.07 mg/kg, or at most 0.06 mg/kg. In some embodiments, the concentration of diacetyl in the beverage is less than 1.50 mg/kg, in particular less than 1.00 mg/kg, less than 0.50 mg/kg, less than 0.15 mg/kg, less than 0.10 mg/kg, less than 0.08 mg/kg, at most 0.07 mg/kg, or at most 0.06 mg/kg. In some embodiments, the concentration of 2,3-pentanedione in the beverage is less than 1.50 mg/kg, in particular less than 1.00 mg/kg, less than 0.50 mg/kg, less than 0.15 mg/kg, less than 0.10 mg/kg, less than 0.08 mg/kg, at most 0.07 mg/kg, or at most 0.06 mg/kg. In some embodiments, the concentration of diacetyl and/or 2,3-pentanedione in the beverage is less than 1.50 mg/kg, in particular less than 1.00 mg/kg, less than 0.50 mg/kg, less than 0.15 mg/kg, less than 0.10 mg/kg, less than 0.08 mg/kg, at most 0.07 mg/kg, or at most 0.06 mg/kg. In some embodiments, the total concentration of diacetyl and 2,3-pentanedione in the beverage is less than 1.50 mg/kg, in particular less than 1.00 mg/kg, less than 0.50 mg/kg, less than 0.15 mg/kg, less than 0.10 mg/kg, less than 0.08 mg/kg, at most 0.07 mg/kg, or at most 0.06 mg/kg. In some embodiments, the concentration of each of diacetyl and 2,3-pentanedione in the beverage is less than 1.50 mg/kg, in particular less than 1.00 mg/kg, less than 0.50 mg/kg, less than 0.15 mg/kg, less than 0.10 mg/kg, less than 0.08 mg/kg, at most 0.07 mg/kg, or at most 0.06 mg/kg. The concentration of vicinal dicarbonyls such as diacetyl and 2,3-pentanedione can be determined by using standard EBC method Mebak Volume II 2.23.

In some embodiments, the concentration of malic acid and/or lactic acid in the beverage is at most 0.10 g/100ml, in particular at most 0.08 g/100ml, at most 0.06 g/100ml, at most 0.04 g/100ml, at most 0.02 g/100ml, or at most 0.01 g/100ml. In some embodiments, the concentration of malic acid in the beverage is at most 0.10 g/100ml, in particular at most 0.08 g/100ml, at most 0.06 g/100ml, at most 0.04 g/100ml, at most 0.02 g/100ml, or at most 0.01 g/100ml. In some embodiments, the concentration of lactic acid in the beverage is at most 0.10 g/100ml, in particular at most 0.08 g/100ml, at most 0.06 g/100ml, at most 0.04 g/100ml, at most 0.02 g/100ml, or at most 0.01 g/100ml. In some embodiments, the total concentration of malic acid and lactic acid in the beverage is at most 0.10 g/100ml, in particular at most 0.08 g/100ml, at most 0.06 g/100ml, at most 0.04 g/100ml, at most 0.02 g/100ml, or at most 0.01 g/100ml. In some embodiments, the concentration of each of malic acid and lactic acid in the beverage is at most 0.10 g/100ml, in particular at most 0.08 g/100ml, at most 0.06 g/100ml, at most 0.04 g/100ml, at most 0.02 g/100ml, or at most 0.01 g/100ml. The concentration of malic acid and lactic acid can be determined by using standard methods, in particular enzymatically with a test system by R-Biopharm.

In some embodiments, the concentration of isoamyl acetate in the beverage is in a range of from 0 to 4000 µg/L, for example from 0 to 2000 µg/L, from 0 to 1000 µg/L, from 0 to 500 µg/L, from 0 to 250 µg/L, from 0 to 150 µg/L, from 0 to 125 µg/L, from 0 to 100 µg/L, from 0 to 75 µg/L, from 0 to 50 µg/L, from 0 to from 0 to 25 µg/L, from 0 to 10 µg/L, from 0 to 7.5 µg/L, from 0 to 5.0 µg/L, from 0 to <5.0 µg/L, from 0 to 2.5 µg/L, from 0 to 1.0 µg/L, from 0 to 0.5 µg/L, from 0 to 0.4 µg/L, from 0 to 0.3 µg/L, or from 0 to 0.2 µg/L. In some embodiments, the concentration of isoamyl acetate in the beverage is at most 4000 µg/L, for example at most 2000 µg/L, at most 1000 µg/L, at most 500 µg/L, at most 250 µg/L, at most 150 µg/L, at most 125 µg/L, at most 100 µg/L, at most 75 µg/L, at most 50 µg/L, at most 25 µg/L, at most 10 µg/L, at most 7.5 µg/L, at most 5.0 µg/L, less than 5.0 µg/L, at most 2.5 µg/L, at most 1.0 µg/L at most 0.5 µg/L, at most 0.4 µg/L, at most 0.3 µg/L, or at most 0.2 µg/L. In some embodiments, the beverage is essentially free of isoamyl acetate.

In some embodiments, the concentration of damascenone in the beverage is in a range of from 0 to 5.0 µg/L, for example from 0 to 4.0 µg/L, from 0 to 3.0 µg/L, from 0 to 2.0 µg/L, from 0 to 1.0 µg/L, from 0 to <1.0 µg/L, from 0 to 0.9 µg/L, from 0 to 0.8 µg/L, from 0 to 0.7 µg/L, from 0 to 0.6 µg/L, 0 to 0.5 µg/L, from 0 to 0.4 µg/L, or from 0.1 to 0.3 µg/L. In some embodiments, the concentration of damascenone in the beverage is at least 0.1 µg/L. In some embodiments, the concentration of damascenone in the beverage is at most 5.0 µg/L, for example at most 4.0 µg/L, at most 3.0 µg/L, at most 2.0 µg/L, at most 1.0 µg/L, less than 1.0 µg/L, at most 0.9 µg/L, at most 0.8 µg/L, at most 0.7 µg/L, at most 0.6 µg/L, at most 0.5 µg/L, at most 0.4 µg/L, at most 0.3 µg/L, or at most 0.2 µg/L. In some embodiments, the beverage is essentially free of damascenone.

In some embodiments, the beverage of the present disclosure has a bitterness in the range of from 0.1 to 100 IBU, for example from 0.2 to 75 IBU, from 0.5 to 65 IBU, from 1.0 to 50 IBU, from 2.0 to 35 IBU, from 3.0 to 25 IBU, from 4.0 to 20 IBU, from 5.0 to 15 IBU, or from 8.0 to 10 IBU. In some embodiments, the beverage of the present disclosure has a bitterness of at least 0.1 IBU, for example at least 0.2 IBU, at least 0.5 IBU, at least 1.0 IBU, at least 2.0 IBU, at least 3.0 IBU, at least 4.0 IBU, at least 5.0 IBU, at least 6.0 IBU, or at least 8.0 IBU. In some embodiments, the beverage of the present disclosure has a bitterness of at most 100 IBU, for example at most 75 IBU, at most 65 IBU, at most 50 IBU, at most 35 IBU, at most 25 IBU, at most 20 IBU, at most 15 IBU, or at most 10 IBU.

In some embodiments, the beverage of the present disclosure has a bitterness in the range of from 1.0 to 175 IBU, for example from 2.0 to 150 IBU, from 5.0 to 125 IBU, from 10 to 110 IBU, from 20 to 100 IBU, from 30 to 95 IBU, from 40 to 90 IBU, from 50 to 85 IBU, or from 60 to 80 IBU. In some embodiments, the beverage of the present disclosure has a bitterness of at least 1.0 IBU, for example at least 2.0 IBU, at least 5.0 IBU, at least 10 IBU, at least 20 IBU, at least 30 IBU, at least 40 IBU, at least 50 IBU, at least 60 IBU, or at least 70 IBU. In some embodiments, the beverage of the present disclosure has a bitterness of at most 175 IBU, for example at most 150 IBU, at most 125 IBU, at most 110 IBU, at most 100 IBU, at most 95 IBU, at most 90 IBU, at most 85 IBU, or at most 80 IBU.

In some embodiments, the beverage of the present disclosure has a bitterness in the range of from 1.0 to 175 IBU, for example from 2.0 to 150 IBU, from 5.0 to 125 IBU, from 10 to 100 IBU, from 15 to 80 IBU, from 20 to 70 IBU, from 30 to 60 IBU, or from 40 to 50 IBU. In some embodiments, the beverage of the present disclosure has a bitterness of at least 1.0 IBU, for example at least 2.0 IBU, at least 5.0 IBU, at least 10 IBU, at least 15, at least 20 IBU, at least 30 IBU, or at least 40 IBU. In some embodiments, the beverage of the present disclosure has a bitterness of at most 175 IBU, for example at most 150 IBU, at most 125 IBU, at most 100 IBU, at most 80 IBU, at most 70 IBU, at most 60 IBU, or at most 50 IBU.

In some embodiments, the beverage of the present disclosure has a bitterness in the range of from 0.1 to 100 EBC, for example from 0.2 to 75 EBC, from 0.5 to 65 EBC, from 1.0 to 50 EBC, from 2.0 to 35 EBC, from 3.0 to 25 EBC, from 4.0 to 20 EBC, from 5.0 to 15 EBC, or from 8.0 to 10 EBC. In some embodiments, the beverage of the present disclosure has a bitterness of at least 0.1 EBC, for example at least 0.2 EBC, at least 0.5 EBC, at least 1.0 EBC, at least 2.0 EBC, at least 3.0 EBC, at least 4.0 EBC, at least 5.0 EBC, at least 6.0 EBC, or at least 8.0 EBC. In some embodiments, the beverage of the present disclosure has a bitterness of at most 100 EBC, for example at most 75 EBC, at most 65 EBC, at most 50 EBC, at most 35 EBC, at most 25 EBC, at most 20 EBC, at most 15 EBC, or at most 10 EBC.

In some embodiments, the beverage of the present disclosure has a bitterness in the range of from 1.0 to 175 EBC, for example from 2.0 to 150 EBC, from 5.0 to 125 EBC, from 10 to 110 EBC, from 20 to 100 EBC, from 30 to 95 EBC, from 40 to 90 EBC, from 50 to 85 EBC, or from 60 to 80 EBC. In some embodiments, the beverage of the present disclosure has a bitterness of at least 1.0 EBC, for example at least 2.0 EBC, at least 5.0 EBC, at least 10 EBC, at least 20 EBC, at least 30 EBC, at least 40 EBC, at least 50 EBC, at least 60 EBC, or at least 70 EBC. In some embodiments, the beverage of the present disclosure has a bitterness of at most 175 EBC, for example at most 150 EBC, at most 125 EBC, at most 110 EBC, at most 100 EBC, at most 95 EBC, at most 90 EBC, at most 85 EBC, or at most 80 EBC.

In some embodiments, the beverage of the present disclosure has a bitterness in the range of from 1.0 to 175 EBC, for example from 2.0 to 150 EBC, from 5.0 to 125 EBC, from 10 to 100 EBC, from 15 to 80 EBC, from 20 to 70 EBC, from 30 to 60 EBC, or from 40 to 50 EBC. In some embodiments, the beverage of the present disclosure has a bitterness of at least 1.0 EBC, for example at least 2.0 EBC, at least 5.0 EBC, at least 10 EBC, at least 15, at least 20 EBC, at least 30 EBC, or at least 40 EBC. In some embodiments, the beverage of the present disclosure has a bitterness of at most 175 EBC, for example at most 150 EBC, at most 125 EBC, at most 100 EBC, at most 80 EBC, at most 70 EBC, at most 60 EBC, or at most 50 EBC.

The EBC values can be determined using the standard method EBC 9.8 /HPLC in the version valid on November 1, 2024.

In some embodiments, the beverage of the invention has a sugar content in a range of from 0.5 to 10 wt.-%, for example from 0.6 to 8.0 wt.-%, from 0.7 to 6.0 wt.-%, from 0.8 to 5.5 wt.-%, from 0.9 to 5.0 wt.-%, from 1.0 to 4.5 wt.-%, from 1.2 to 4.0 wt.-%, or from 1.5 to 2.0 wt.-%. In some embodiments, the beverage of the invention has a sugar content of at least 0.5 wt.-%, for example at least 0.6 wt.-%, at least 0.7 wt.-%, at least 0.8 wt.-%, at least 0.9 wt.-%, at least 1.0 wt.-%, at least 1.2 wt.-%, or at least 1.5 wt.-%. In some embodiments, the beverage of the invention has a sugar content of at most 10 wt.-%, for example at most 8.0 wt.-%, at most 6.0 wt.-%, at most 5.5 wt.-%, at most 5.0 wt.-%, at most 4.5 wt.-%, at most 4.0 wt.-%, at most 3.5 wt.-%, at most 3.0 wt.-%, at most 2.5 wt.-%, or at most 2.0 wt.-%.

In some embodiments, the beverage of the invention has a sugar content in a range of from 0.5 to 10 g per 100 mL, for example 0.6 to 8.0 g per 100 mL, from 0.7 to 6.0 g per 100 mL, from 0.8 to 5.5 g per 100 mL, from 0.9 to 5.0 g per 100 mL, from 1.0 to 4.5 g per 100 mL, from 1.2 to 4.0 g per 100 mL, or from 1.5 to 2.0 g per 100 mL. In some embodiments, the beverage of the invention has a sugar content of at least 0.5 g per 100 mL, for example at least 0.6 g per 100 mL, at least 0.7 g per 100 mL, at least 0.8 g per 100 mL, at least 0.9 g per 100 mL, at least 1.0 g per 100 mL, at least 1.2 g per 100 mL, or at least 1.5 g per 100 mL. In some embodiments, the beverage of the invention has a sugar content of at most 10 g per 100 mL, for example at most 8.0 g per 100 mL, at most 6.0 g per 100 mL, at most 5.5 g per 100 mL, at most 5.0 g per 100 mL, at most 4.5 g per 100 mL, at most 4.0 g per 100 mL, at most 3.5 g per 100 mL, at most 3.0 g per 100 mL, at most 2.5 g per 100 mL, or at most 2.0 g per 100 mL.

In some embodiments, the beverage has a specific gravity at 20°C in a range of from 1.002 to 1.050, for example from 1.005 to 1.040, from 1.008 to 1.030, from 1.010 to 1.025, from 1.012 to 1.020, or from 1.014 to 1.018. In some embodiments, the beverage has a specific gravity at 20°C of at least 1.002, for example at least 1.050, at least 1.080, at least 1.010, at least 1.012, or at least 1.014. In some embodiments, the beverage has a specific gravity at 20°C of at most 1.050, for example at most 1.040, at most 1.030, at most 1.025, at most 1.020, or at most 1.018.

In some embodiments, the ratio of the sugar content (in g/L) and the total concentration of hop-based flavoring agents (in g/L) in the beverage is in a range of from 50 to 75,000, for example from 100 to 50,000, from 200 to 40,000, from 500 to 35,000, from 1,000 to 30,000, from 2,000 to 25,000, from 3,000 to 20,000, from 4,000 to 15,000, or from 5,000 to 10,000. In some embodiments, the ratio of the sugar content (in g/L) and the total concentration of hop-based flavoring agents (in g/L) in the beverage is at least 50, for example at least 100, at least 200, at least 500, at least 1,000, at least 2,000, at least 3,000, at least 4,000, or at least 5,000. In some embodiments, the ratio of the sugar content (in g/L) and the total concentration of hop-based flavoring agents (in g/L) in the beverage is at most 75,000, for example at most 60,000, at most 50,000, at most 45,000, at most 40,000, at most 35,000, at most 30,000, at most 25,000, at most 20,000, at most 15,000, or at most 10,000.

In some embodiments, the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 50 to 75,000, for example from 100 to 50,000, from 200 to 40,000, from 500 to 35,000, from 1,000 to 30,000, from 2,000 to 25,000, from 3,000 to 20,000, from 4,000 to 15,000, or from 5,000 to 10,000. In some embodiments, the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is at least 50, for example at least 100, at least 200, at least 500, at least 1,000, at least 2,000, at least 3,000, at least 4,000, or at least 5,000. In some embodiments, the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in g/L) in the beverage is at most 75,000, for example at most 60,000, at most 50,000, at most 45,000, at most 40,000, at most 35,000, at most 30,000, at most 25,000, at most 20,000, at most 15,000, or at most 10,000.

In some embodiments, the ratio of the sugar content (in g/L) and the total concentration of myrcene, linalool and humulene (in g/L) in the beverage is in a range of from 100 to 75,000, for example from 200 to 50,000, from 500 to 45,000, from 1,000 to 40,000, from 2,000 to 35,000, from 3,000 to 30,000, from 4,000 to 25,000, from 5,000 to 20,000, or from 6,000 to 12,000. In some embodiments, the ratio of the sugar content (in g/L) and the total concentration of myrcene, linalool and humulene (in g/L) in the beverage is at least 100, for example at least 200, at least 500, at least 1,000, at least 2,000, at least 3,000, at least 4,000, at least 5,000, or at least 6,000. In some embodiments, the ratio of the sugar content (in g/L) and the total concentration of myrcene, linalool and humulene (in g/L) in the beverage is at most 75,000, for example at most 60,000, at most 55,000, at most 50,000, at most 45,000, at most 40,000, at most 35,000, at most 30,000, at most 25,000, at most 20,000, at most 15,000, or at most 12,000.

In some embodiments, the ratio of the total amount of iso-alpha acids (in mg/L) to the total amount of hop-based flavoring agents (in mg/L) in the beverage is in a range of from 0.1 to 15.0, for example from 0.2 to 10.0, from 0.3 to 5.0, from 0.4 to 2.5, from 0.5 to 1.5, from 0.6 to 1.0, or from 0.7 to 0.9. In some embodiments, the ratio of the total amount of iso-alpha acids (in mg/L) to the total amount of hop-based flavoring agents (in mg/L) in the beverage is at least 0.1, for example at least 0.2, at least 0.3, at least 0.4, at least 0.5, at least 0.6, or at least 0.7. In some embodiments, the ratio of the total amount of iso-alpha acids (in mg/L) to the total amount of hop-based flavoring agents (in mg/L) in the beverage is at most 15.0, for example at most 12.5, at most 10.0, at most 7.5, at most 6.0, at most 5.0, at most 4.5, at most 2.5, at most 1.5, at most 1.0, or at most 0.9.

In some embodiments, the ratio of the total amount of alpha acids (in mg/L) to the total amount of hop-based flavoring agents (in mg/L) in the beverage is in a range of from 0.05 to 7.50, for example from 0.10 to 5.00, from 0.15 to 2.50, from 0.20 to 1.25, from 0.25 to 0.75, from 0.30 to 0.50, or from 0.35 to 0.45. In some embodiments, the ratio of the total amount of alpha acids (in mg/L) to the total amount of hop-based flavoring agents (in mg/L) in the beverage is at least 0.05, for example at least 0.10, at least 0.15, at least 0.20, at least 0.25, at least 0.30, or at least 0.35. In some embodiments, the ratio of the total amount of alpha acids (in mg/L) to the total amount of hop-based flavoring agents (in mg/L) in the beverage is at most 150, for example at most 125, at most 100, at most 75, at most 50, at most 40, at most 35, at most 7.50, at most 5.00, at most 2.50, at most 1.25, at most 0.75, at most 0.50, or at most 0.45.

In some embodiments, the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is in a range of from 0.1 to 15.0, for example from 0.2 to 10.0, from 0.3 to 5.0, from 0.4 to 2.5, from 0.5 to 1.5, from 0.6 to 1.0, or from 0.7 to 0.9. In some embodiments, the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at least 0.1, for example at least 0.2, at least 0.3, at least 0.4, at least 0.5, at least 0.6, or at least 0.7. In some embodiments, the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0, for example at most 12.5, at most 10.0, at most 7.5, at most 6.0, at most 5.0, at most 4.5, at most 2.5, at most 1.5, at most 1.0, or at most 0.9.

In some embodiments, the ratio of the total amount of alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is in a range of from 0.05 to 7.50, for example from 0.10 to 5.00, from 0.15 to 2.50, from 0.20 to 1.25, from 0.25 to 0.75, from 0.30 to 0.50, or from 0.35 to 0.45. In some embodiments, the ratio of the total amount of alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at least 0.05, for example at least 0.10, at least 0.15, at least 0.20, at least 0.25, at least 0.30, or at least 0.35. In some embodiments, the ratio of the total amount of alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 150, for example at most 125, at most 100, at most 75, at most 50, at most 40, at most 35, at most 7.50, at most 5.00, at most 2.50, at most 1.25, at most 0.75, at most 0.50, or at most 0.45.

In some embodiments, the ratio of the total amount of iso-alpha acids (in mg/L) to the total amount of myrcene, linalool and humulene (in mg/L) in the beverage is in a range of from 0.1 to 15.0, for example from 0.2 to 10.0, from 0.3 to 7.0, from 0.4 to 5.0, from 0.5 to 2.5, from 0.6 to 1.5, or from 0.8 to 1.1. In some embodiments, the ratio of the total amount of iso-alpha acids (in mg/L) to the total amount of hop-based flavoring agents (in mg/L) in the beverage is at least 0.1, for example at least 0.2, at least 0.3, at least 0.4, at least 0.5, at least 0.6, or at least 0.8. In some embodiments, the ratio of the total amount of iso-alpha acids (in mg/L) to the total amount of hop-based flavoring agents (in mg/L) in the beverage is at most 15.0, for example at most 12.5, at most 10.0, at most 8.0, at most 7.0, at most 6.0, at most 5.0, at most 2.5, at most 1.5, or at most 1.1.

In some embodiments, the ratio of the total amount of alpha acids (in mg/L) to the total amount of myrcene, linalool and humulene (in mg/L) in the beverage is in a range of from 0.05 to 7.50, for example from 0.10 to 5.0, from 0.15 to 3.50, from 0.20 to 2.50, from 0.25 to 1.25, from 0.30 to 0.75, or from 0.40 to 0.55. In some embodiments, the ratio of the total amount of alpha acids (in mg/L) to the total amount of hop-based flavoring agents (in mg/L) in the beverage is at least 0.05, for example at least 0.10, at least 0.15, at least 0.20, at least 0.25, at least 0.30, or at least 0.40. In some embodiments, the ratio of the total amount of alpha acids (in mg/L) to the total amount of hop-based flavoring agents (in mg/L) in the beverage is at most 150, for example at most 125, at most 100, at most 75, at most 60, at most 50, at most 45, at most 7.50, at most 5.00, at most 3.50, at most 2.50, at most 1.25, at most 0.75, or at most 0.55.

In some embodiments, the ratio of the sugar content (in g/L) and the total amount of iso-alpha acids (in g/L) in the beverage is in a range of from 100 to 100,000, for example from 500 to 50,000, from 1,000 to 40,000, from 2,000 to 30,000, from 3,500 to 20,000, from 5,000 to 15,000, or from 7,000 to 12,000. In some embodiments, the ratio of the sugar content (in g/L) and the total amount of iso-alpha acids (in g/L) in the beverage is at least 100, for example at least 200, at least 500, at least 1,000, at least 2,000, at least 2,750, at least 3,500, at least 5,000, or at least 7,000. In some embodiments, the ratio of the sugar content (in g/L) and the total amount of iso-alpha acids (in g/L) in the beverage is at most 100,000, for example at most 50,000, at most 40,000, at most 30,000, at most 20,000, at most 15,000, or at most 12,000.

In some embodiments, the ratio of the sugar content (in g/L) and the total amount of alpha acids (in g/L) in the beverage is in a range of from 200 to 200,000, for example from 1,000 to 100,000, from 2,000 to 75,000, from 5,000 to 50,000, from 7,500 to 35,000, from 10,000 to 30,000, or from 15,000 to 25,000. In some embodiments, the ratio of the sugar content (in g/L) and the total amount of alpha acids (in g/L) in the beverage is at least 10, for example at least 20, at least 50, at least 100, at least 200, at least 325, at least 450, at least 1,000, at least 2,000, at least 5,000, at least 7,500, at least 10,000, or at least 15,000. In some embodiments, the ratio of the sugar content (in g/L) and the total amount of alpha acids (in g/L) in the beverage is at most 200,000, for example at most 100,000, at most 75,000, at most 50,000, at most 35,000, at most 30,000, or at most 25,000.

In some embodiments, the beverage has a pH in a range of from 3.0 to 6.0, for example from 3.5 to 5.5, or from 4.0 to 5.0. In some embodiments, the beverage has a pH of at least 3.0, for example at least 3.5, or at least 4.0. In some embodiments, the beverage has a pH of at most 6.0, for example at most 5.5, or at most 5.0.

In some embodiments, the beverage is carbonated with a carbonation degree in a range of from 1.0 g/L to 10 g/L, for example from 2.0 g/L to 8.0 g/L, from 3.0 g/L to 7.5 g/L, from 4.0 to 7.0 g/L, or from 4.5 g/L to 6.5 g/L. In some embodiments, the carbonation degree of the beverage is at least 1.0 g/L, for example at least 2.0 g/L, at least 3.0 g/L, at least 4.0 g/L, or at least 4.5 g/L. In some embodiments, the carbonation degree of the beverage is at most 10 g/L, for example at most 8.0 g/L, at most 7.5 g/L, at most 7.0 g/L, or at most 6.5 g/L.

In some embodiments, the beverage comprises yeast (in particular deactivated yeast), for example in an amount ranging from 0.01 to 1.00 g/hl, such as from 0.02 to 0.50 g/hl or from 0.05 to 0.20 g/hl. In some embodiments, the amount of yeast in the beverage is at least 0.01 g/hl, for example at least 0.02 g/hl or at least 0.05 g/hl. In some embodiments, the amount of yeast in the beverage is at most 1.00 g/hl, for example at most 0.50 g/hl or at most 0.20 g/hl.

In some embodiments of the disclosure, the beverage contains ascorbic acid in an amount of from 10 g/hl to 1000 g/hl, for example from 20 g/hl to 500 g/hl, from 50 g/hl to 200 g/hl, or from 75 g/hl to 150 g/hl. In some embodiments, the amount of ascorbic acid in the beverage is at least 10 g/hl, for example at least 20 g/hl, at least 50 g/hl, or at least 75 g/hl. In some embodiments, the amount of ascorbic acid in the beverage is at most 1000 g/hl, for example at most 500 g/hl, at most 200 g/hl, or at most 150 g/hl. In some embodiments, the amount of ascorbic acid is at most 100 g/hl, for example at most 50 g/hl, at most 10 g/hl, or at most 1 g/hl. In some embodiments, the beverage are essentially free of ascorbic acid.

In some embodiments of the disclosure, the beverage comprises carbon dioxide in an amount of from 1.0 g/L to 10 g/L, for example from 2.0 g/L to 8.0 g/L, from 3.0 g/L to 7.5 g/L, from 4.0 to 7.0 g/L, or from 4.5 g/L to 6.5 g/L. In some embodiments, the beverage comprises carbon dioxide in an amount of at least 1.0 g/L, for example at least 2.0 g/L, at least 3.0 g/L, at least 4.0 g/L, or at least 4.5 g/L. In some embodiments, the beverage comprises carbon dioxide in an amount of at most 10 g/L, for example at most 8.0 g/L, at most 7.5 g/L, at most 7.0 g/L, or at most 6.5 g/L.

The beverages of the disclosure comprise less than 0.02% ethanol (v/v), in particular less than 0.01% ethanol (v/v). In some embodiments, the beverages are essentially free of ethanol.

In some embodiments, the beverages comprise less than 500 ppm (w/w)ethylene glycol. In some embodiments, the beverages are essentially free of ethylene glycol.

In some embodiments, the beverage comprises capsaicin, in particular in an amount of from 500 ppm (w/w) to 5000 ppm (w/w). Capsaicin may sensorially mimic the taste of ethanol.

As used herein, the term "mash" refers to a mixture of a grain product comprising long chain carbohydrates, such as malt, and water. A mash is prepared in beer brewing to extract ingredients from the grain product and to break down the long chain carbohydrates into smaller units to make them accessible to yeast fermentation. In many cases, this requires elevated temperatures.

The term "wort" refers to the water-soluble parts of the mash, obtainable by removing the solid parts from the mash.

Referring to hops, the term "oil content" means the total content of essential oils in the hops. The oil content can be determined using the standard method EBC 7.10 in the version valid on November 1, 2024. The content of individual essential oils in the hops (such as myrcene, linalool, caryophyllene, humulene and/or farnesene) can be determined using the standard method EBC 7.12 in the version valid on November 1, 2024.

The term "sugar content" as used herein refers to the total content of monosaccharides and disaccharides. The sugar content can be determined using standard method ASU L 31.00-11 in the version valid on November 1, 2024.

In this disclosure, "room temperature" means about 25°C.

The term "IBU" as used herein refers to the International Bitterness Unit. 1 IBU corresponds to a concentration of 1 mg iso-alpha acids per liter of beverage.

The "specific gravity" of the beverage as used herein is the ratio of the density of the beverage of the invention to the density of water at 20°C and a pressure 1013.25 hPa. The density of the beverage is measured at 20°C and referenced to the density of water at 20°C. The specific density of the beverage can be measured with a hydrometer.

The original gravity of the wort is given herein in °P. The original gravity is the specific gravity measured before fermentation. It can be determined using standard method WBBM 2.9.2.3.

The "free of" as used herein means that the content of the respective compound is below the detection limit.

In particular free of isoamyl acetate refers to a content of less than 5 µg/L, free of isoamyl propanoate refers to a content of less than 5 µg/L, free of terpinene-4-ol refers to a content of less than 5 µg/L, free of 2-dodecanone refers to a content of less than 5 µg/L, free of ethyl-2-methyl butanoate refers to a content of less than 5 µg/L, free of farnesene refers to a content of less than 5 µg/L, free of citronellyl acetate refers to a content of less than 5 µg/L, free of citronellol refers to a content of less than 5 µg/L, free of geranyl acetate refers to a content of less than 5 µg/L, free of damascenone refers to a content of less than 0.1 µg/L.

### Exemplary Embodiments

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the beverage has a bitterness in the range of from 20 to 70 EBC or from 30 to 60 EBC.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the beverage comprises a total amount of humilinone of at least 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the beverage comprises a total amount of humilinone of at least 3.0 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the ratio of the total amount of humilinone (in mg/L) and the total amount of iso-alpha acids (in mg/L) in the beverage is at least 0.1.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the ratio of the total amount of humilinone (in mg/L) and the total amount of iso-alpha acids (in mg/L) in the beverage is at least 2.0.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the beverage comprises a total amount of humilinone of at least 0.1 mg/L, and wherein the ratio of the total amount of humilinone (in mg/L) and the total amount of iso-alpha acids (in mg/L) in the beverage is at least 0.1.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the beverage comprises a total amount of humilinone of at least 3.0 mg/L, and wherein the ratio of the total amount of humilinone (in mg/L) and the total amount of iso-alpha acids (in mg/L) in the beverage is at least 2.0.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the beverage comprises a total amount of humilinone of at least 0.1 mg/L, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the beverage comprises a total amount of humilinone of at least 3.0 mg/L, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the beverage has a pH of from 3.0 to 6.0.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the beverage has a pH of from 3.0 to 6.0, and wherein the beverage has a bitterness in the range of from 20 to 70 EBC or from 30 to 60 EBC.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the beverage has a pH of from 3.5 to 5.5.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the total amount of myrcene, linalool and humulene in the beverage is in a range of from 0.1 to 12 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the total amount of myrcene, linalool and humulene in the beverage is in a range of from 0.1 to 12 mg/L, and wherein the beverage has a bitterness in the range of from 20 to 70 EBC or from 30 to 60 EBC.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the total amount of myrcene, linalool and humulene in the beverage is in a range of from 0.5 to 8.0 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the total amount of iso-alpha acid in the beverage is in a range of from 0.1 to 100 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the total amount of iso-alpha acid in the beverage is in a range of from 0.8 to 10 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the total amount of iso-alpha acid in the beverage is in a range of from 0.8 to 10 mg/L, and wherein the beverage has a bitterness in the range of from 20 to 70 EBC or from 30 to 60 EBC.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the total amount of iso-alpha acid in the beverage is in a range of from 0.1 to 100 mg/L, and wherein the beverage comprises a total amount of humilinone of at least 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the total amount of iso-alpha acid in the beverage is in a range of from 0.8 to 10 mg/L, and wherein the beverage comprises a total amount of humilinone of at least 2.0 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the total amount of iso-alpha acid in the beverage is in a range of from 0.1 to 100 mg/L, and wherein the ratio of the total amount of humilinone (in mg/L) and the total amount of iso-alpha acids (in mg/L) in the beverage is at least 0.1.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the total amount of iso-alpha acid in the beverage is in a range of from 0.8 to 10 mg/L, and wherein the ratio of the total amount of humilinone (in mg/L) and the total amount of iso-alpha acids (in mg/L) in the beverage is at least 1.0.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the total amount of iso-alpha acid in the beverage is in a range of from 0.1 to 100 mg/L, wherein the beverage comprises a total amount of humilinone of at least 0.1 mg/L, and wherein the ratio of the total amount of humilinone (in mg/L) and the total amount of iso-alpha acids (in mg/L) in the beverage is at least 0.1.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the total amount of iso-alpha acid in the beverage is in a range of from 0.8 to 10 mg/L, wherein the beverage comprises a total amount of humilinone of at least 2.0 mg/L, and wherein the ratio of the total amount of humilinone (in mg/L) and the total amount of iso-alpha acids (in mg/L) in the beverage is at least 1.0.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the total amount of iso-alpha acid in the beverage is in a range of from 0.1 to 100 mg/L, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the total amount of iso-alpha acid in the beverage is in a range of from 0.8 to 10 mg/L, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the total amount of iso-alpha acid in the beverage is in a range of from 0.1 to 100 mg/L, wherein the beverage comprises a total amount of humilinone of at least 0.1 mg/L, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the total amount of iso-alpha acid in the beverage is in a range of from 0.8 to 10 mg/L, wherein the beverage comprises a total amount of humilinone of at least 2.0 mg/L, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0, wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol, and wherein the total concentration of hop-based flavoring agents in the beverage is in a range of from 0.1 to 20 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol, wherein the total concentration of hop-based flavoring agents in the beverage is in a range of from 0.1 to 20 mg/L, and wherein the beverage has a bitterness in the range of from 20 to 70 EBC or from 30 to 60 EBC.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol, and wherein the total concentration of hop-based flavoring agents in the beverage is in a range of from 0.5 to 10 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the concentration of myrcene in the beverage is at least 10 µg/L, wherein the concentration of linalool in the beverage is at least 15 µg/L, and wherein the concentration of humulene in the beverage is at least 10 µg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the concentration of myrcene in the beverage is at least 10 µg/L, wherein the concentration of linalool in the beverage is at least 15 µg/L, wherein the concentration of humulene in the beverage is at least 10 µg/L, and wherein the beverage has a bitterness in the range of from 20 to 70 EBC or from 30 to 60 EBC.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the concentration of myrcene in the beverage is at least 200 µg/L, wherein the concentration of linalool in the beverage is at least 50 µg/L, and wherein the concentration of humulene in the beverage is at least 30 µg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the total concentration of myrcene, linalool and humulene in the beverage is at least 25% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the total concentration of myrcene, linalool and humulene in the beverage is more than 50% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the beverage comprises (in particular deactivated) yeast in an amount ranging from 0.01 to 1.00 g/hl.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the beverage comprises (in particular deactivated) yeast in an amount ranging from 0.02 to 0.50 g/hl.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0, and wherein the sugar content of the beverage is in a range of from 0.5 to 10 wt.-%.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the sugar content of the beverage is in a range of from 0.5 to 10 wt.-%, and wherein the beverage has a bitterness in the range of from 20 to 70 EBC or from 30 to 60 EBC.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the sugar content of the beverage is in a range of from 1.0 to 4.5 wt.-%.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the sugar content of the beverage is in a range of from 0.5 to 10 wt.-%, and wherein the beverage comprises a total amount of humilinone of at least 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the sugar content of the beverage is in a range of from 1.0 to 4.5 wt.-%, and wherein the beverage comprises a total amount of humilinone of at least 2.0 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0, and wherein the sugar content of the beverage is in a range of from 0.5 to 10 wt.-%, and wherein the ratio of the total amount of humilinone (in mg/L) and the total amount of iso-alpha acids (in mg/L) in the beverage is at least 0.1.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the sugar content of the beverage is in a range of from 1.0 to 4.5 wt.-%, and wherein the ratio of the total amount of humilinone (in mg/L) and the total amount of iso-alpha acids (in mg/L) in the beverage is at least 1.0.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the sugar content of the beverage is in a range of from 1.0 to 4.5 wt.-%, wherein the ratio of the total amount of humilinone (in mg/L) and the total amount of iso-alpha acids (in mg/L) in the beverage is at least 1.0, and wherein the beverage has a bitterness in the range of from 20 to 70 EBC or from 30 to 60 EBC.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the sugar content of the beverage is in a range of from 0.5 to 10 wt.-%, wherein the beverage comprises a total amount of humilinone of at least 0.1 mg/L, and wherein the ratio of the total amount of humilinone (in mg/L) and the total amount of iso-alpha acids (in mg/L) in the beverage is at least 0.1.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the sugar content of the beverage is in a range of from 1.0 to 4.5 wt.-%, wherein the beverage comprises a total amount of humilinone of at least 2.0 mg/L, and wherein the ratio of the total amount of humilinone (in mg/L) and the total amount of iso-alpha acids (in mg/L) in the beverage is at least 1.0.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the sugar content of the beverage is in a range of from 0.5 to 10 wt.-%, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the sugar content of the beverage is in a range of from 1.0 to 4.5 wt.-%, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the sugar content of the beverage is in a range of from 0.5 to 10 wt.-%, wherein the beverage comprises a total amount of humilinone of at least 0.1 mg/L, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the sugar content of the beverage is in a range of from 1.0 to 4.5 wt.-%, wherein the beverage comprises a total amount of humilinone of at least 2.0 mg/L, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 50 to 75,000.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 3,000 to 20,000.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the ratio of the sugar content (in g/L) and the total amount of iso-alpha acids (in g/L) in the beverage is in a range of from 10 to 100,000, or from 100 to 100,000.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the ratio of the sugar content (in g/L) and the total amount of iso-alpha acids (in g/L) in the beverage is in a range of from 3,500 to 20,000.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0, wherein the ratio of the sugar content (in g/L) and the total amount of iso-alpha acids (in g/L) in the beverage is in a range of from 10 to 100,000, or from 100 to 100,000, and wherein the beverage comprises a total amount of humilinone of at least 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the ratio of the sugar content (in g/L) and the total amount of iso-alpha acids (in g/L) in the beverage is in a range of from 3,500 to 20,000, and wherein the beverage comprises a total amount of humilinone of at least 2.0 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the ratio of the sugar content (in g/L) and the total amount of iso-alpha acids (in g/L) in the beverage is in a range of from 3,500 to 20,000, wherein the beverage comprises a total amount of humilinone of at least 2.0 mg/L, and wherein the beverage has a bitterness in the range of from 20 to 70 EBC or from 30 to 60 EBC.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the ratio of the sugar content (in g/L) and the total amount of iso-alpha acids (in g/L) in the beverage is in a range of from 10 to 100,000, or from 100 to 100,000, and wherein the ratio of the total amount of humilinone (in mg/L) and the total amount of iso-alpha acids (in mg/L) in the beverage is at least 0.1.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the ratio of the sugar content (in g/L) and the total amount of iso-alpha acids (in g/L) in the beverage is in a range of from 3,500 to 20,000, and wherein the ratio of the total amount of humilinone (in mg/L) and the total amount of iso-alpha acids (in mg/L) in the beverage is at least 1.0.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the ratio of the sugar content (in g/L) and the total amount of iso-alpha acids (in g/L) in the beverage is in a range of from 10 to 100,000, or from 100 to 100,000, wherein the beverage comprises a total amount of humilinone of at least 0.1 mg/L, and wherein the ratio of the total amount of humilinone (in mg/L) and the total amount of iso-alpha acids (in mg/L) in the beverage is at least 0.1.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the ratio of the sugar content (in g/L) and the total amount of iso-alpha acids (in g/L) in the beverage is in a range of from 3,500 to 20,000, wherein the beverage comprises a total amount of humilinone of at least 2.0 mg/L, and wherein the ratio of the total amount of humilinone (in mg/L) and the total amount of iso-alpha acids (in mg/L) in the beverage is at least 1.0.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the ratio of the sugar content (in g/L) and the total amount of iso-alpha acids (in g/L) in the beverage is in a range of from 10 to 100,000, or from 100 to 100,000, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the ratio of the sugar content (in g/L) and the total amount of iso-alpha acids (in g/L) in the beverage is in a range of from 3,500 to 20,000, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the ratio of the sugar content (in g/L) and the total amount of iso-alpha acids (in g/L) in the beverage is in a range of from 10 to 100,000, or from 100 to 100,000, wherein the beverage comprises a total amount of humilinone of at least 0.1 mg/L, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the ratio of the sugar content (in g/L) and the total amount of iso-alpha acids (in g/L) in the beverage is in a range of from 3,500 to 20,000, wherein the beverage comprises a total amount of humilinone of at least 2.0 mg/L, and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the beverage contains ascorbic acid in an amount of from 10 g/hl to 1000 g/hl.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the beverage contains ascorbic acid in an amount of from 20 g/hl to 500 g/hl.

In some embodiments, the beverage comprises
- less than 0.02% ethanol (v/v),
- carbon dioxide in an amount of from 1.0 g/L to 10 g/L,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0.

In some embodiments, the beverage comprises
- less than 0.02% ethanol (v/v),
- carbon dioxide in an amount of from 1.0 g/L to 10 g/L,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the beverage has a bitterness in the range of from 20 to 70 EBC or from 30 to 60 EBC.

In some embodiments, the beverage comprises
- less than 0.02% ethanol (v/v),
- carbon dioxide in an amount of from 1.0 g/L to 10 g/L,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, and wherein the beverage has a specific gravity at 20°C in a range of from 1.002 to 1.050.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, and wherein the beverage has a specific gravity at 20°C in a range of from 1.008 to 1.030.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0, wherein the beverage has a pH of from 3.0 to 6.0, wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate, and citronellol, and wherein the total concentration of hop-based flavoring agents in the beverage is in a range of from 0.1 to 20 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the beverage has a pH of from 3.5 to 5.5, wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate, and citronellol, and wherein the total concentration of hop-based flavoring agents in the beverage is in a range of from 0.5 to 10 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the beverage has a pH of from 3.0 to 6.0, wherein the total amount of myrcene, linalool and humulene in the beverage is in a range of from 0.1 to 12 mg/L, and wherein the total amount of iso-alpha acid in the beverage is in a range of from 0.1 to 100 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the beverage has a pH of from 3.5 to 5.5, wherein the total amount of myrcene, linalool and humulene in the beverage is in a range of from 0.5 to 8.0 mg/L, and wherein the total amount of iso-alpha acid in the beverage is in a range of from 0.8 to 10 mg/L.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0, wherein the beverage has a pH of from 3.5 to 5.5, wherein the total amount of myrcene, linalool and humulene in the beverage is in a range of from 0.5 to 8.0 mg/L, wherein the total amount of iso-alpha acid in the beverage is in a range of from 0.8 to 10 mg/L, and wherein the beverage has a bitterness in the range of from 20 to 70 EBC or from 30 to 60 EBC.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the beverage has a pH of from 3.0 to 6.0, wherein the concentration of myrcene in the beverage is at least 10 µg/L, wherein the concentration of linalool in the beverage is at least 15 µg/L, wherein the concentration of humulene in the beverage is at least 10 µg/L, and wherein the total concentration of myrcene, linalool and humulene in the beverage is at least 25% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 15.0, wherein the beverage has a pH of from 3.0 to 6.0, wherein the concentration of myrcene in the beverage is at least 10 µg/L, wherein the concentration of linalool in the beverage is at least 15 µg/L, wherein the concentration of humulene in the beverage is at least 10 µg/L, wherein the total concentration of myrcene, linalool and humulene in the beverage is at least 25% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage, and wherein the beverage has a bitterness in the range of from 20 to 70 EBC or from 30 to 60 EBC.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, ter-pinene-4-ol, nerol, farnesene, citronellyl acetate and citronellol (in mg/L) in the beverage is at most 5.0, wherein the beverage has a pH of from 3.5 to 5.5, wherein the concentration of myrcene in the beverage is at least 200 µg/L, wherein the concentration of linalool in the beverage is at least 50 µg/L, wherein the concentration of humulene in the beverage is at least 30 µg/L, and wherein the total concentration of myrcene, linalool and humulene in the beverage is more than 50% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0, wherein the beverage has a pH of from 3.0 to 6.0, wherein the sugar content of the beverage is in a range of from 0.5 to 10 wt.-%, wherein the ratio of the sugar content (in g/L) and the total amount of iso-alpha acids (in g/L) in the beverage is in a range of from 10 to 100,000 or from 100 to 100,000, and wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 50 to 75,000.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0, wherein the beverage has a pH of from 3.5 to 5.5, wherein the sugar content of the beverage is in a range of from 1.0 to 4.5 wt.-%, wherein the ratio of the sugar content (in g/L) and the total amount of iso-alpha acids (in g/L) in the beverage is in a range of from 3,500 to 20,000, and wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 3,000 to 20,000.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0, wherein the beverage has a pH of from 3.0 to 6.0, and wherein the beverage has a specific gravity at 20°C in a range of from 1.002 to 1.050.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0, wherein the beverage has a pH of from 3.5 to 5.5, and wherein the beverage has a specific gravity at 20°C in a range of from 1.008 to 1.030.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0, wherein the beverage has a pH of from 3.0 to 6.0, wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol, and wherein the total concentration of myrcene, linalool and humulene in the beverage is at least 25% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0, wherein the beverage has a pH of from 3.5 to 5.5, wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol, and wherein the total concentration of myrcene, linalool and humulene in the beverage is more than 50% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0, wherein the beverage has a pH of from 3.0 to 6.0, wherein the total amount of myrcene, linalool and humulene in the beverage is in a range of from 0.1 to 12 mg/L, wherein the total amount of iso-alpha acid in the beverage is in a range of from 0.1 to 100 mg/L, and wherein the sugar content of the beverage is in a range of from 0.5 to 10 wt.-%.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0, wherein the beverage has a pH of from 3.5 to 5.5, wherein the total amount of myrcene, linalool and humulene in the beverage is in a range of from 0.5 to 8.0 mg/L, wherein the total amount of iso-alpha acid in the beverage is in a range of from 0.8 to 10 mg/L, and wherein the sugar content of the beverage is in a range of from 1.0 to 4.5 wt.-%.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0, wherein the beverage has a pH of from 3.0 to 6.0, wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol, wherein the total concentration of hop-based flavoring agents in the beverage is in a range of from 0.1 to 20 mg/L, wherein the total amount of iso-alpha acid in the beverage is in a range of from 0.1 to 100 mg/L, and wherein the sugar content of the beverage is in a range of from 0.5 to 10 wt.-%.

In some embodiments, the beverage comprises
- less than 0.02% ethanol (v/v),
- carbon dioxide,
- water,
wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0, wherein the beverage has a pH of from 3.5 to 5.5, wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol, wherein the total concentration of hop-based flavoring agents in the beverage is in a range of from 0.5 to 10 mg/L, wherein the total amount of iso-alpha acid in the beverage is in a range of from 0.8 to 10 mg/L, and wherein the sugar content of the beverage is in a range of from 1.0 to 4.5 wt.-%.

In some embodiments, the beverage comprises
- less than 0.02% ethanol (v/v),
- carbon dioxide,
- water,

wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0,
wherein the beverage has a pH of from 3.0 to 6.0,
wherein the total amount of myrcene, linalool and humulene in the beverage is in a range of from 0.1 to 12 mg/L,
wherein the total amount of iso-alpha acid in the beverage is in a range of from 0.1 to 100 mg/L,
wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol,
wherein the total concentration of hop-based flavoring agents in the beverage is in a range of from 0.1 to 20 mg/L,
wherein the concentration of myrcene in the beverage is at least 10 µg/L, wherein the concentration of linalool in the beverage is at least 15 µg/L, wherein the concentration of humulene in the beverage is at least 10 µg/L,
wherein the total concentration of myrcene, linalool and humulene in the beverage is at least 25% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage,
wherein the sugar content of the beverage is in a range of from 0.5 to 10 wt.-%,
wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 50 to 75,000, and
wherein the ratio of the sugar content (in g/L) and the total amount of iso-alpha acids (in g/L) in the beverage is in a range of from 10 to 100,000, or from 100 to 100,000.

In some embodiments, the beverage comprises
- less than 0.02% ethanol (v/v),
- carbon dioxide,
- water,

wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0,
wherein the beverage has a pH of from 3.5 to 5.5,
wherein the total amount of myrcene, linalool and humulene in the beverage is in a range of from 0.5 to 8.0 mg/L,
wherein the total amount of iso-alpha acid in the beverage is in a range of from 0.8 to 10 mg/L,
wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol,
wherein the total concentration of hop-based flavoring agents in the beverage is in a range of from 0.5 to 10 mg/L,
wherein the concentration of myrcene in the beverage is at least 200 µg/L, wherein the concentration of linalool in the beverage is at least 50 µg/L, wherein the concentration of humulene in the beverage is at least 30 µg/L,
wherein the total concentration of myrcene, linalool and humulene in the beverage is more than 50% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage,
wherein the sugar content of the beverage is in a range of from 1.0 to 4.5 wt.-%,
wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 3,000 to 20,000, and
wherein the ratio of the sugar content (in g/L) and the total amount of iso-alpha acids (in g/L) in the beverage is in a range of from 3,500 to 20,000.

In some embodiments, the beverage comprises
- less than 0.02% ethanol (v/v),
- carbon dioxide,
- water,

wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0,
wherein the beverage has a pH of from 3.0 to 6.0,
wherein the total amount of myrcene, linalool and humulene in the beverage is in a range of from 0.1 to 12 mg/L,
wherein the total amount of iso-alpha acid in the beverage is in a range of from 0.1 to 100 mg/L,
wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol,
wherein the total concentration of hop-based flavoring agents in the beverage is in a range of from 0.1 to 20 mg/L,
wherein the concentration of myrcene in the beverage is at least 10 µg/L, wherein the concentration of linalool in the beverage is at least 15 µg/L, wherein the concentration of humulene in the beverage is at least 10 µg/L,
wherein the total concentration of myrcene, linalool and humulene in the beverage is at least 25% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage,
wherein the sugar content of the beverage is in a range of from 0.5 to 10 wt.-%,
wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 50 to 75,000,
wherein the ratio of the sugar content (in g/L) and the total amount of iso-alpha acids (in g/L) in the beverage is in a range of from 10 to 100,000, or from 100 to 100,000,
wherein the beverage comprises a total amount of humilinone of at least 0.1 mg/L,
and wherein the ratio of the total amount of humilinone (in mg/L) and the total amount of iso-alpha acids (in mg/L) in the beverage is at least 0.1.

In some embodiments, the beverage comprises
- less than 0.02% ethanol (v/v),
- carbon dioxide,
- water,

wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0,
wherein the beverage has a pH of from 3.5 to 5.5,
wherein the total amount of myrcene, linalool and humulene in the beverage is in a range of from 0.5 to 8.0 mg/L,
wherein the total amount of iso-alpha acid in the beverage is in a range of from 0.8 to 10 mg/L,
wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol,
wherein the total concentration of hop-based flavoring agents in the beverage is in a range of from 0.5 to 10 mg/L,
wherein the concentration of myrcene in the beverage is at least 200 µg/L, wherein the concentration of linalool in the beverage is at least 50 µg/L, wherein the concentration of humulene in the beverage is at least 30 µg/L,
wherein the total concentration of myrcene, linalool and humulene in the beverage is more than 50% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage,
wherein the sugar content of the beverage is in a range of from 1.0 to 4.5 wt.-%,
wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 3,000 to 20,000,
wherein the ratio of the sugar content (in g/L) and the total amount of iso-alpha acids (in g/L) in the beverage is in a range of from 3,500 to 20,000,
wherein the beverage comprises a total amount of humilinone of at least 2.0 mg/L,
and wherein the ratio of the total amount of humilinone (in mg/L) and the total amount of iso-alpha acids (in mg/L) in the beverage is at least 1.0.

In some embodiments, the beverage comprises
- less than 0.02% ethanol (v/v),
- carbon dioxide,
- water,

wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0,
wherein the beverage has a pH of from 3.0 to 6.0,
wherein the total amount of myrcene, linalool and humulene in the beverage is in a range of from 0.1 to 12 mg/L,
wherein the total amount of iso-alpha acid in the beverage is in a range of from 0.1 to 100 mg/L,
wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol,
wherein the total concentration of hop-based flavoring agents in the beverage is in a range of from 0.1 to 20 mg/L,
wherein the concentration of myrcene in the beverage is at least 10 µg/L, wherein the concentration of linalool in the beverage is at least 15 µg/L, wherein the concentration of humulene in the beverage is at least 10 µg/L,
wherein the total concentration of myrcene, linalool and humulene in the beverage is at least 25% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage,
wherein the sugar content of the beverage is in a range of from 0.5 to 10 wt.-%,
wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 50 to 75,000,
wherein the ratio of the sugar content (in g/L) and the total amount of iso-alpha acids (in g/L) in the beverage is in a range of from 10 to 100,000, or from 100 to 100,000,
wherein the beverage comprises a total amount of humilinone of at least 0.1 mg/L,
wherein the ratio of the total amount of humilinone (in mg/L) and the total amount of iso-alpha acids (in mg/L) in the beverage is at least 0.1,
and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,

wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0,
wherein the beverage has a pH of from 3.5 to 5.5,
wherein the total amount of myrcene, linalool and humulene in the beverage is in a range of from 0.5 to 8.0 mg/L,
wherein the total amount of iso-alpha acid in the beverage is in a range of from 0.8 to 10 mg/L,
wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol,
wherein the total concentration of hop-based flavoring agents in the beverage is in a range of from 0.5 to 10 mg/L,
wherein the concentration of myrcene in the beverage is at least 200 µg/L, wherein the concentration of linalool in the beverage is at least 50 µg/L, wherein the concentration of humulene in the beverage is at least 30 µg/L,
wherein the total concentration of myrcene, linalool and humulene in the beverage is more than 50% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage,
wherein the sugar content of the beverage is in a range of from 1.0 to 4.5 wt.-%,
wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 3,000 to 20,000,
wherein the ratio of the sugar content (in g/L) and the total amount of iso-alpha acids (in g/L) in the beverage is in a range of from 3,500 to 20,000,
wherein the beverage comprises a total amount of humilinone of at least 2.0 mg/L,
wherein the ratio of the total amount of humilinone (in mg/L) and the total amount of iso-alpha acids (in mg/L) in the beverage is at least 1.0,
and wherein the concentration of one or more of (in particular each of) esters of acetic acid, succinic acid, malic acid, lactic acid and diacetyl in the beverage is less than 0.1 mg/L.

In some embodiments, the beverage comprises
- less than 0.02% ethanol (v/v),
- carbon dioxide,
- water,

wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0,
wherein the beverage has a pH of from 3.5 to 5.5,
wherein the total amount of myrcene, linalool and humulene in the beverage is in a range of from 0.5 to 8.0 mg/L,
wherein the total amount of iso-alpha acid in the beverage is in a range of from 0.8 to 10 mg/L,
wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol,
wherein the total concentration of hop-based flavoring agents in the beverage is in a range of from 0.5 to 10 mg/L,
wherein the concentration of myrcene in the beverage is at least 200 µg/L, wherein the concentration of linalool in the beverage is at least 50 µg/L, wherein the concentration of humulene in the beverage is at least 30 µg/L,
wherein the total concentration of myrcene, linalool and humulene in the beverage is more than 50% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage,
wherein the sugar content of the beverage is in a range of from 1.0 to 4.5 wt.-%,
wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 3,000 to 20,000,
wherein the ratio of the sugar content (in g/L) and the total amount of iso-alpha acids (in g/L) in the beverage is in a range of from 3,500 to 20,000,
wherein the beverage comprises a total amount of humilinone of at least 2.0 mg/L,
wherein the ratio of the total amount of humilinone (in mg/L) and the total amount of iso-alpha acids (in mg/L) in the beverage is at least 1.0,
wherein the concentration of one or more of (in particular each of) esters of acetic acid, succinic acid, malic acid, lactic acid and diacetyl in the beverage is less than 0.1 mg/L,
and wherein the beverage has a bitterness in the range of from 20 to 70 EBC or from 30 to 60 EBC.

In some embodiments, the beverage comprises
- less than 0.02% ethanol (v/v),
- carbon dioxide,
- water,

wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0,
wherein the beverage has a pH of from 3.5 to 5.5,
wherein the total amount of myrcene, linalool and humulene in the beverage is in a range of from 0.5 to 8.0 mg/L,
wherein the total amount of iso-alpha acid in the beverage is in a range of from 0.8 to 10 mg/L,
wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol,
wherein the total concentration of hop-based flavoring agents in the beverage is in a range of from 0.5 to 10 mg/L,
wherein the concentration of myrcene in the beverage is at least 200 µg/L, wherein the concentration of linalool in the beverage is at least 50 µg/L, wherein the concentration of humulene in the beverage is at least 30 µg/L,
wherein the total concentration of myrcene, linalool and humulene in the beverage is more than 50% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage,
wherein the sugar content of the beverage is in a range of from 1.0 to 4.5 wt.-%,
wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 3,000 to 20,000,
wherein the ratio of the sugar content (in g/L) and the total amount of iso-alpha acids (in g/L) in the beverage is in a range of from 3,500 to 20,000,
wherein the beverage comprises a total amount of humilinone of at least 2.0 mg/L,
wherein the ratio of the total amount of humilinone (in mg/L) and the total amount of iso-alpha acids (in mg/L) in the beverage is at least 1.0,
wherein the concentration of esters of acetic acid is less than 0.1 mg/L or less than 100 ppm (w/w),
and wherein the beverage has a bitterness in the range of from 20 to 70 EBC or from 30 to 60 EBC.

In some embodiments, the beverage comprises
- less than 0.02% ethanol (v/v),
- carbon dioxide,
- water,

wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0,
wherein the beverage has a pH of from 3.5 to 5.5,
wherein the total amount of myrcene, linalool and humulene in the beverage is in a range of from 0.5 to 8.0 mg/L,
wherein the total amount of iso-alpha acid in the beverage is in a range of from 0.8 to 10 mg/L,
wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol,
wherein the total concentration of hop-based flavoring agents in the beverage is in a range of from 0.5 to 10 mg/L,
wherein the concentration of myrcene in the beverage is at least 200 µg/L, wherein the concentration of linalool in the beverage is at least 50 µg/L, wherein the concentration of humulene in the beverage is at least 30 µg/L,
wherein the total concentration of myrcene, linalool and humulene in the beverage is more than 50% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage,
wherein the sugar content of the beverage is in a range of from 1.0 to 4.5 wt.-%,
wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 3,000 to 20,000,
wherein the ratio of the sugar content (in g/L) and the total amount of iso-alpha acids (in g/L) in the beverage is in a range of from 3,500 to 20,000,
wherein the beverage comprises a total amount of humilinone of at least 2.0 mg/L,
wherein the ratio of the total amount of humilinone (in mg/L) and the total amount of iso-alpha acids (in mg/L) in the beverage is at least 1.0,
wherein the concentration of succinic acid in the beverage is less than 0.1 mg/L or less than 100 ppm (w/w),
and wherein the beverage has a bitterness in the range of from 20 to 70 EBC or from 30 to 60 EBC.

In some embodiments, the beverage comprises
- less than 0.02% ethanol (v/v),
- carbon dioxide,
- water,

wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0,
wherein the beverage has a pH of from 3.5 to 5.5,
wherein the total amount of myrcene, linalool and humulene in the beverage is in a range of from 0.5 to 8.0 mg/L,
wherein the total amount of iso-alpha acid in the beverage is in a range of from 0.8 to 10 mg/L,
wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol,
wherein the total concentration of hop-based flavoring agents in the beverage is in a range of from 0.5 to 10 mg/L,
wherein the concentration of myrcene in the beverage is at least 200 µg/L, wherein the concentration of linalool in the beverage is at least 50 µg/L, wherein the concentration of humulene in the beverage is at least 30 µg/L,
wherein the total concentration of myrcene, linalool and humulene in the beverage is more than 50% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage,
wherein the sugar content of the beverage is in a range of from 1.0 to 4.5 wt.-%,
wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 3,000 to 20,000,
wherein the ratio of the sugar content (in g/L) and the total amount of iso-alpha acids (in g/L) in the beverage is in a range of from 3,500 to 20,000,
wherein the beverage comprises a total amount of humilinone of at least 2.0 mg/L,
wherein the ratio of the total amount of humilinone (in mg/L) and the total amount of iso-alpha acids (in mg/L) in the beverage is at least 1.0,
wherein the concentration of malic acid in the beverage is less than 0.1 mg/L or less than 100 ppm (w/w),
and wherein the beverage has a bitterness in the range of from 20 to 70 EBC or from 30 to 60 EBC.

In some embodiments, the beverage comprises
- less than 0.02% ethanol (v/v),
- carbon dioxide,
- water,

wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0,
wherein the beverage has a pH of from 3.5 to 5.5,
wherein the total amount of myrcene, linalool and humulene in the beverage is in a range of from 0.5 to 8.0 mg/L,
wherein the total amount of iso-alpha acid in the beverage is in a range of from 0.8 to 10 mg/L,
wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol,
wherein the total concentration of hop-based flavoring agents in the beverage is in a range of from 0.5 to 10 mg/L,
wherein the concentration of myrcene in the beverage is at least 200 µg/L, wherein the concentration of linalool in the beverage is at least 50 µg/L, wherein the concentration of humulene in the beverage is at least 30 µg/L,
wherein the total concentration of myrcene, linalool and humulene in the beverage is more than 50% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage,
wherein the sugar content of the beverage is in a range of from 1.0 to 4.5 wt.-%,
wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 3,000 to 20,000,
wherein the ratio of the sugar content (in g/L) and the total amount of iso-alpha acids (in g/L) in the beverage is in a range of from 3,500 to 20,000,
wherein the beverage comprises a total amount of humilinone of at least 2.0 mg/L,
wherein the ratio of the total amount of humilinone (in mg/L) and the total amount of iso-alpha acids (in mg/L) in the beverage is at least 1.0,
wherein the concentration of lactic acid in the beverage is less than 0.1 mg/L or less than 100 ppm (w/w),
and wherein the beverage has a bitterness in the range of from 20 to 70 EBC or from 30 to 60 EBC.

In some embodiments, the beverage comprises
- less than 0.02% ethanol (v/v),
- carbon dioxide,
- water,

wherein the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 5.0,
wherein the beverage has a pH of from 3.5 to 5.5,
wherein the total amount of myrcene, linalool and humulene in the beverage is in a range of from 0.5 to 8.0 mg/L,
wherein the total amount of iso-alpha acid in the beverage is in a range of from 0.8 to 10 mg/L,
wherein the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol,
wherein the total concentration of hop-based flavoring agents in the beverage is in a range of from 0.5 to 10 mg/L,
wherein the concentration of myrcene in the beverage is at least 200 µg/L, wherein the concentration of linalool in the beverage is at least 50 µg/L, wherein the concentration of humulene in the beverage is at least 30 µg/L,
wherein the total concentration of myrcene, linalool and humulene in the beverage is more than 50% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage,
wherein the sugar content of the beverage is in a range of from 1.0 to 4.5 wt.-%,
wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 3,000 to 20,000,
wherein the ratio of the sugar content (in g/L) and the total amount of iso-alpha acids (in g/L) in the beverage is in a range of from 3,500 to 20,000,
wherein the beverage comprises a total amount of humilinone of at least 2.0 mg/L,
wherein the ratio of the total amount of humilinone (in mg/L) and the total amount of iso-alpha acids (in mg/L) in the beverage is at least 1.0,
wherein the concentration of diacetyl in the beverage is less than 0.1 mg/L or less than 100 ppm (w/w),
and wherein the beverage has a bitterness in the range of from 20 to 70 EBC or from 30 to 60 EBC.

### Detailed Description of the Figures

Figure 1 shows a flow chart of a method of making a beverage according to this disclosure. The method comprises the following steps
110 → Preparing a mash,
120 → Holding step,
130 → Separating liquid fraction,
140 → Thermal treatment,
160 → Hops addition (high temperature, HT),
170 → Cooling step
173 → Hops addition (low temperature, LT).

The mash prepared at step 110 comprises malt and water. In holding step 120, the mash is in particular held at a temperature range of from 20°C to 90°C. In step 130, the liquid fraction is separated from the mash to obtain a wort. In step 140, the wort is in particular thermally treated at a temperature of from >90°C to 110°C. In step 160, HT hops (and/or HT hops extract) is in particular added to the wort after optional adding of yeast and at a wort temperature in a range of from 35°C to 90°C. In step 170, the wort is cooled to room temperature or below. In step 173, LT hops (and/or LT hops extract) is added. The method includes a step of holding the wort after adding the low temperature hops (and/or low temperature hops extract) at a holding temperature of at most 25°C for a holding time of at least 12 hours (not shown).

The method optionally comprises additional steps shown in Figure 1.
132 → Fining step,
134, 135, 136 → Addition of calcium sulfate, calcium chloride, potassium sorbate,
150 → Adding yeast to the wort, in particular at a temperature of >90°C,
174 → Cooling down,
175 → Colored malt extract addition,
176 → Storage in the cold,
177 → Filtration
178 → Pasteurization,
179 → Carbonation.

Pasteurization does not necessarily take place between filtration and carbonation. Rather, pasteurization can be done at various positions within the method workflow. In particular, pasteurization can be done alternatively or additionally prior to filtration 177 and/or subsequent to carbonation 179, for example prior to bottling and/or subsequent to bottling. The beverage can be bottled into cans or into bottles or the like.

### Examples

### Production method

### Example 1 (non-alcoholic IPA)

### • Preparing a mash comprising malt and water

600 kg barley malt, 25 kg sour malt, and 25 kg pointed malt were crushed and combined with water to obtain a mash.

### • Holding the mash at a temperature

The mash was held for 20 to 40 minutes at 72°C until the iodine normality was reached.

### • Separating liquid fraction from the mash to obtain a wort

The mash was transferred to a fining vessel and subjected to a fining step. After the fining step, the wort had an original gravity of 3.5°P.

0.2 g/l calcium sulfate, 0.15 g/l calcium chloride, and 0.2 g/l potassium sorbate were added to the wort.

### • Thermal treating the wort

The wort was subject to thermal treatment at a temperature of >95°C for 30 minutes.

### • Adding yeast to the wort

During the thermal treatment step, 0.1g/hl bottom-fermenting yeast was added to the wort.

### • Adding hops to the wort

When the wort reached a temperature of below 80°C, 300 g of Solero hop pellets were added to the wort. Lactic acid was added to the wort so that the wort reached a pH value of 4.5.

After adding the hops, the wort was held for at least 20 min in order to allow the suspended solids to sediment at the bottom of the wort.

### • Cooling wort and adding LT hops

The wort was cooled to a temperature of 16°C, achieving a better dissolving of the pellets in the wort.

3 to 5 g/l Callista hop pellets were added to the wort and kept in continuous suspension in order to maximize the contact surface between the hops and the wort.

The continuous circulation of the wort was maintained for at least 3 days. After the third day, the wort was cooled down until it reached a temperature of about 1°C. After the wort had reached a temperature of about 1°C, 7 kg/100 hl of Sinamar^{®} colored malt extract were added to the wort.

After about 3 days of storage in the cold, the wort was subject to a filtration step. During this filtration step, the wort was sterilized and pasteurized.

The wort was carbonated with CO₂ so that the concentration of CO₂ in the wort reached 6.5 g/l CO₂.

### Example 2 (non-alcoholic Pilsner)

### • Preparing a mash comprising malt and water

550 kg barley malt, 25 kg sour malt, and 25 kg pointed malt were crushed and combined with water (<6° dH) to obtain a mash.

### • Holding the mash at a temperature

The mash is held for 20 to 40 minutes at 72°C until the iodine normality was reached.

### • Separating liquid fraction from the mash to obtain a wort

When reaching a temperature of 78°C, the mash was transferred to a fining vessel and subjected to a fining step.

### • Thermal treating the wort

The wort was subject to thermal treatment at a temperature of >95°C for 30 minutes.

0.2 g/l calcium sulfate, 0.15 g/l calcium chloride, and 0.2 g/l potassium sorbate were added to the wort. The wort reached an original gravity of 3.5°P.

### • Adding yeast to the wort

During the thermal treatment step, 0.001g/l yeast was added to the wort.

### • Adding hops to the wort

When the wort reached a temperature of below 80°C, 3 kg Perle hops with an increased content of essential oils was added to the wort. Lactic acid was added to the wort so that the wort reaches a pH value of less than 5.0.

After adding the hops, the wort was held for 20 min.

### • Cooling wort and adding LT hops

The wort was cooled at a temperature of 24°C.

3-5 g/l Perle hops were added to the wort.

The continuous circulation of the wort was maintained for 2-3 days. The wort was cooled down with a cooling rate of 5 K per day until it reaches a temperature of 1°C. After the wort reached a temperature of 1°C, 7 kg/100 hl colored malt extract was added to the wort.

The wort was subject to a filtration step.

The wort was pasteurized at >50 PE.

The wort was carbonated with CO₂ so that the concentration of CO₂ in the wort reached about 5.2 g/l CO₂.

### Example 3 (non-alcoholic Dark Lager)

### • Preparing a mash comprising malt and water

300 kg barley malt, 250 kg Munich malt, 25 kg sour malt, and 25 kg pointed malt were crushed and combined with water (<6° dH) to obtain a mash.

### • Holding the mash at a temperature

The mash was held for 20-40 minutes at 72°C until the iodine normality was reached.

### • Separating liquid fraction from the mash to obtain a wort

When reaching a temperature of 78°C, the mash was transferred to a fining vessel and subjected to a fining step.

### • Thermal treating the wort

The wort was subject to thermal treatment at a temperature of >95°C for 30 minutes.

0.2 g/l calcium sulfate, 0.15 g/l calcium chloride, and 0.2 g/l potassium sorbate were added to the wort. The wort reached an original gravity of 3.5°P.

### • Adding yeast to the wort

During the thermal treatment step, 0.001g/l yeast was added to the wort.

### • Adding hops to the wort

When the wort reached a temperature of below 80°C, 2.5 kg Perle hops with an increased content of essential oils was added to the wort. Lactic acid was added to the wort so that the wort reached a pH value of less than 5.0.

After adding the hops, the wort was held for 20 min.

### • Cooling wort and adding LT hops

The wort was cooled at a temperature of 24°C.

5 g/l Perle hops were added to the wort.

The continuous circulation of the wort was maintained for 2-3 days. The wort was cooled down with a cooling rate of 5 K per day until it reached a temperature of 1°C. After the wort reached a temperature of 1°C, 10 kg/100 hl colored malt extract was added to the wort.

The wort was subject to a filtration step.

The wort was pasteurized at >50 PE.

The wort was carbonated with CO₂ so that the concentration of CO₂ in the wort reached about 4.8 g/l CO₂.

### Example 4 (non-alcoholic Weizen)

### • Preparing a mash comprising malt and water

250 kg barley malt, 250 kg wheat malt, 50 kg Munich malt, 25 kg sour malt, and 25 kg pointed malt were crushed and combined with water (<6° dH) to obtain a mash.

### • Holding the mash at a temperature

The mash was held for 20-40 minutes at 72°C until the iodine normality was reached.

### • Separating liquid fraction from the mash to obtain a wort

When reaching a temperature of 78°C, the mash was transferred to a fining vessel and subjected to a fining step.

### • Thermal treating the wort

The wort was subject to thermal treatment at a temperature of >95°C for 30 minutes.

0.2 g/l calcium sulfate, 0.15 g/l calcium chloride, and 0.2 g/l potassium sorbate were added to the wort. The wort reached an original gravity of 3.5°P.

### • Adding yeast to the wort

During the thermal treatment step, 0.001 g/l top-fermenting yeast was added to the wort.

### • Adding hops to the wort

When the wort reached a temperature of below 80°C, 2.5 kg Tettnanger hops with an increased content of essential oils was added to the wort. Lactic acid was added to the wort so that the wort reached a pH value of less than 5.0.

After adding the hops, the wort was held for 20 min.

### • Cooling wort and adding LT hops

The wort was cooled at a temperature of 24°C.

3 g/l Tettnanger hops were added to the wort.

The continuous circulation of the wort was maintained for 2-3 days. The wort was cooled down with a cooling rate of 5 K per day until it reached a temperature of 1°C. After the wort reached a temperature of 1°C, 7 kg/100 hl colored malt extract was added to the wort.

The wort was pasteurized at >50 PE.

The wort was carbonated with CO₂ so that the concentration of CO₂ in the wort reached about 6 g/l CO₂.

### Example 5 (non-alcoholic Stout)

### • Preparing a mash comprising malt and water

200 kg barley malt, 300 kg Munich malt, 25 kg roasted barley malt, 25 kg sour malt, and 50 kg pointed malt were crushed and combined with water (<6° dH) to obtain a mash.

### • Holding the mash at a temperature

The mash was held for 20-40 minutes at 72°C until the iodine normality was reached.

### • Separating liquid fraction from the mash to obtain a wort

When reaching a temperature of 78°C, the mash was transferred to a fining vessel and subjected to a fining step.

### • Thermal treating the wort

The wort was subject to thermal treatment at a temperature of >95°C for 30 minutes.

0.2 g/l calcium sulfate, 0.15 g/l calcium chloride, and 0.2 g/l potassium sorbate were added to the wort. The wort reached an original gravity of 3.5°P.

### • Adding yeast to the wort

During the thermal treatment step, 0.001 g/l yeast was added to the wort.

### • Adding hops to the wort

When the wort reached a temperature of below 80°C, 2.5 kg East Kent Goldings hops with an increased content of essential oils was added to the wort. Lactic acid was added to the wort so that the wort reached a pH value of less than 5.0.

After adding the hops, the wort was held for 20 min.

### • Cooling wort and adding LT hops

The wort was cooled at a temperature of 24°C.

3 g/l East Kent Goldings hops were added to the wort.

The continuous circulation of the wort was maintained for 2-3 days. The wort was cooled down with a cooling rate of 5 K per day until it reached a temperature of 1°C. After the wort reached a temperature of 1°C, 15 kg/100 hl colored malt extract was added to the wort.

The wort was subject to a filtration step.

The wort was pasteurized at >50 PE.

The wort was carbonated with CO₂ so that the concentration of CO₂ in the wort reached about 4.8 g/l CO₂.

### Sensory Panel

The taste of the non-alcoholic refreshing beer-flavored beverages provided by the present disclosure (non-alcoholic IPA) was evaluated by ten sensory panelists in the context of a sensory test.

The beverages were rated with scores ranging from "1" to "5" according to specific criteria. Disclosed below are the results of the sensory test, showing the average of the sensory panelists' ratings, as well as their interpretations:

### i. Comparison with alcoholic beer

| | | |
|---|---|---|
| Sweetness | 3.5 | where "1": less, "3": comparable, "5": more intense |
| Bitterness | 2.6 | where "1": less, "3": comparable, "5": more intense |
| Sparkling sensation | 2.6 | where "1": less, "3": comparable, "5": more intense |
| Freshness | 2.8 | where "1": less, "3": comparable, "5": more intense |

### ii. Comparison with non-alcoholic refreshing beer-flavored beverages produced by conventional methods

| | | |
|---|---|---|
| Sweetness | 3.5 | where "1": less, "3": comparable, "5": more intense |
| Bitterness | 2.6 | where "1": less, "3": comparable, "5": more intense |
| Sparkling sensation | 2.4 | where "1": less, "3": comparable, "5": more intense |
| Freshness | 2.9 | where "1": less, "3": comparable, "5": more intense |

The data show that the beverages of the present disclosure manage to achieve comparable results in taste when compared to non-alcoholic refreshing beer-flavored beverages produced by conventional methods.

The data shows that beverages of the present disclosure manage to achieve comparable results in taste when compared to alcoholic beer.

As the beverages of the present disclosure are optionally produced by a method of the present disclosure, which is more cost-efficient and more energy-efficient than conventional methods for producing non-alcoholic refreshing beer-flavored beverages, the data of the sensory test show that the beverages of the present disclosure achieve the goal of providing comparable results to conventional non-alcoholic refreshing beer-flavored beverages while optionally reducing the costs and energy required for production.

### Analysis of the beverages

The beverages (non-alcoholic IPA) were subjected to laboratory analysis.

### General analysis of the beverages of the disclosure

| **Parameter** | **Measured value** | **Unit** |
|---|---|---|
| Original gravity | 4.04 | wt.-% |
| Alcohol content | 0.00 | wt.-% |
| Alcohol content | 0.00 | vol.-% |
| Specific gravity at 20°C | 1.0158 | |
| pH | 4.64 | |

Original gravity was determined using standard method WBBM 2.9.2.3. The pH was determined using standard method WBBM 2.13.

Sugar content was determined using standard method ASU L 31.00-11. The sugar content was 1.7 g per 100 mL. The total carbohydrate content was 3.5 g per 100 mL.

### Analysis of alpha acids, iso-alpha acids and humilinones in the beverages of the disclosure

| **Parameter** | **Measured value** | **Unit** |
|---|---|---|
| Alpha acids | 0.9 | mg/l |
| Iso-alpha acids | 1.8 | mg/l |
| Humilinone | 11.0 | mg/l |

Determined using standard method EBC9:47/ICS-14/ICE-4

### Analysis of EBC bitter units in the beverages of the disclosure

| **Parameter** | **Measured value** | **Unit** |
|---|---|---|
| EBC bitter units | 45.4 | EBC |

Determined using standard method EBC 9.8 /HPLC.

### Analysis of esters of acetic acid in the beverages of the disclosure

| **Parameter** | **Measured value** | **Unit** |
|---|---|---|
| Esters of acetic acid | < LOQ* | mg/100g |

| | | |
|---|---|---|
| * LOQ = limit of quantification | | |

### Analysis of individual essential oils in the beverages of the disclosure

| **Essential oil** | **Amount (µg/L)** |
|---|---|
| Ethyl-2-methyl butanoate | n.d. |
| Isoamyl acetate | n.d. |
| alpha-pinene | 28.1 |
| Isobutyl isobutyrate | 37.6 |
| beta-pinene | 96.5 |
| Myrcene | 1331 |
| Isoamyl propanoate | <5 |
| beta-limonene | 44.9 |
| 3-Methylbutyl isobutyrate | 20.8 |
| 2-Methylbutyl isobutyrate | 82.0 |
| 6-M ethyl-5-hepten-2-one | 9.9 |
| Terpinolene | 7.1 |
| 2-Nonanone | 10.2 |
| Linalool | 413.3 |
| Terpinene-4-ol | <5 |
| 2-Decanone | 13.3 |
| Methyl nonanoate | 5.0 |
| Terpineol | 9.2 |
| Citronellol | n.d. |
| Nerol | 5.0 |
| Geraniol | 22.7 |
| 2-Undecanone | 23.0 |
| Methyl geranate | 22.0 |
| Citronellyl acetate | n.d. |
| Geranyl acetate | n.d. |
| beta-caryophyllene | 22.7 |
| Farnesene | n.d. |
| 2-Dodecanone | <5 |
| Damascenone | 0.2 |
| Humulene | 144.4 |

| | |
|---|---|
| n.d. = not detectable | |

LOQ was <0.1 µg/L for damascenone and <5 µg/L for all other analytes.

### Analysis of vicinal dicarbonyls (diacetyl; 2,3-pentanedione) in beverages of the disclosure

| **Parameter** | **Measured value** | **Unit** |
|---|---|---|
| Vicinal dicarbonyls | 0.060 | mg/kg |

Determined using standard EBC method Mebak Volume II 2.23.

### Analysis of malic acid and lactic acid in beverages of the disclosure

| **Parameter** | **Measured value** | **Unit** |
|---|---|---|
| Malic acid | 0.01 | g/100ml |
| Lactic acid | 0.01 | g/100ml |

Determined using standard method (enzymatically with r-Biopharm).

### Comparative Examples

Commercially available non-alcoholic beers C1 to C5 were analyzed regarding the content of essential oils. C2-1 and C2-2 are different lots of beer C2. Likewise, C3-1 and C3-2 are different lots of beer C3. The results are shown in the table below (in µg/L).

| **Essential oil** | **C1** | **C2-1** | **C2-2** | **C3-1** | **C3-2** | **C4** | **C5** |
|---|---|---|---|---|---|---|---|
| Ethyl-2-methyl butanoate | n.d. | n.d. | n.d. | n.d. | n.d. | n.d. | n.d. |
| Isoamyl acetate | n.d. | 96.6 | 166.5 | n.d. | <5 | 4229 | 2445 |
| alpha-pinene | n.d. | n.d. | n.d. | n.d. | n.d. | n.d. | n.d. |
| Isobutyl isobutyrate | n.d. | n.d. | n.d. | n.d. | n.d. | n.d. | n.d. |
| beta-pinene | n.d. | n.d. | n.d. | n.d. | n.d. | n.d. | n.d. |
| Myrcene | n.d. | n.d. | n.d. | n.d. | n.d. | n.d. | n.d. |
| Isoamyl propanoate | n.d. | n.d. | n.d. | n.d. | n.d. | n.d. | n.d. |
| beta-limonene | n.d. | n.d. | n.d. | n.d. | n.d. | n.d. | n.d. |
| 3-Methylbutyl isobutyrate | n.d. | n.d. | n.d. | n.d. | n.d. | n.d. | n.d. |
| 2-Methylbutyl isobutyrate | n.d. | n.d. | n.d. | n.d. | n.d. | n.d. | n.d. |
| 6-M ethyl-5-hepten-2-one | n.d. | n.d. | n.d. | n.d. | n.d. | n.d. | n.d. |
| Terpinolene | n.d. | n.d. | n.d. | n.d. | n.d. | n.d. | n.d. |
| 2-Nonanone | n.d. | n.d. | n.d. | n.d. | n.d. | n.d. | n.d. |
| Linalool | <5 | 7.5 | 7.6 | <5 | <5 | <5 | 7.7 |
| Terpinene-4-ol | n.d. | n.d. | n.d. | n.d. | n.d. | n.d. | n.d. |
| 2-Decanone | n.d. | n.d. | n.d. | n.d. | n.d. | n.d. | n.d. |
| Methyl nonanoate | n.d. | n.d. | n.d. | n.d. | n.d. | n.d. | n.d. |
| Terpineol | n.d. | <5 | <5 | <5 | n.d. | n.d. | <5 |
| Citronellol | n.d. | n.d. | n.d. | n.d. | n.d. | n.d. | n.d. |
| Nerol | n.d. | n.d. | n.d. | n.d. | n.d. | n.d. | n.d. |
| Geraniol | n.d. | <5 | <5 | n.d. | n.d. | n.d. | n.d. |
| 2-Undecanone | n.d. | n.d. | n.d. | n.d. | n.d. | n.d. | n.d. |
| Methyl geranate | n.d. | n.d. | n.d. | n.d. | n.d. | n.d. | n.d. |
| Citronellyl acetate | n.d. | n.d. | n.d. | n.d. | n.d. | n.d. | n.d. |
| Geranyl acetate | n.d. | n.d. | n.d. | n.d. | n.d. | n.d. | n.d. |
| beta-caryophyllene | n.d. | n.d. | n.d. | n.d. | n.d. | n.d. | n.d. |
| Farnesene | n.d. | n.d. | n.d. | n.d. | n.d. | n.d. | n.d. |
| 2-Dodecanone | n.d. | n.d. | n.d. | n.d. | n.d. | n.d. | n.d. |
| Damascenone | 1.6 | 3.1 | 2.8 | 1.3 | 1.0 | 1.9 | 3.8 |
| Humulene | n.d. | <5 | <5 | n.d. | n.d. | n.d. | n.d. |

| | | | | | | | |
|---|---|---|---|---|---|---|---|
| n.d. = not detectable | | | | | | | |

LOQ was <0.1 µg/L for damascenone and <5 µg/L for all other analytes.

## Claims

1. A method of making a beverage comprising
A. preparing a mash comprising malt (and/or malt extract) and water,
B. holding the mash at a temperature range of from 20°C to 90°C,
C. separating liquid fraction from the mash to obtain a wort,
D. thermal treating the wort at a temperature of at least 90°C such as of from 90°C to 110°C, and subsequently cooling the wort,
wherein the method comprises
- optionally adding yeast to the wort at a temperature of >90°C,
- adding high temperature hops (and/or high temperature hops extract) to the wort after step D. at a wort temperature in a range of from 35°C to 90°C,
- cooling the wort to a temperature of at most 25°C after adding the high temperature hops,
- adding low temperature hops (and/or low temperature hops extract) after cooling,
- optionally holding the wort after adding the low temperature hops (and/or low temperature hops extract) at a holding temperature of at most 25°C for a holding time of at least 12 hours,
- obtaining the beverage.

2. The method according to claim 1, wherein the holding step B is performed for a period of from 15 to 45 minutes.

3. The method according to one of the preceding claims, wherein the thermal treating step D is performed for a period of from 10 to 120 minutes.

4. The method according to at least one of the preceding claims, wherein the holding time of the holding step after adding the low temperature hops is at least 48 hours and/or the holding temperature is at most 10°C.

5. The method according to at least one of the preceding claims, wherein the low temperature hops have an oil content of from 0.1 to 8.0 mL/100g.

6. The method according to at least one of the preceding claims, wherein the wort has an original gravity in a range of from 0.5 to 10 °P.

7. The method according to at least one of the preceding claims, wherein
- the method does not include any yeast fermentation,
- the beverage has an alcohol content of less than 0.02% ethanol (v/v), and/or

8. A beverage, optionally obtainable by a method according to one of the preceding claims, comprising
- less than 0.02% ethanol (v/v),
- carbon dioxide,
- water,
wherein the beverage is **characterized in that** the ratio of the total amount of iso-alpha acids (in mg/L) to the total amount of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in mg/L) in the beverage is at most 15.0.

9. The beverage according to claim 8, wherein the beverage has a pH of from 3.0 to 6.0.

10. The beverage according to at least one of claims 8 and 9, wherein the total amount of myrcene, linalool and humulene in the beverage is in a range of from 0.1 to 12 mg/L.

11. The beverage according to at least one of claims 8 to 10, wherein the total amount of iso-alpha acid in the beverage is in a range of from 0.1 to 175 mg/L, or from 1.00 to 100 mg/L.

12. The beverage according to at least one of claims 8 to 11, wherein the sugar content of the beverage is in a range of from 0.5 to 10 wt.-%.

13. The beverage according to one of claims 8 to 12, wherein the beverage is essentially free of fermentation by-products, such as esters of acetic acid, succinic acid, malic acid, lactic acid and/or diacetyl; and/or the beverage comprises less than 100 ppm (w/w) or less than 100 mg/L of esters of acetic acid, succinic acid, malic acid, lactic acid and/or diacetyl.

14. The beverage according to at least one of claims 8 to 13, wherein the ratio of the sugar content (in g/L) and the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol (in g/L) in the beverage is in a range of from 50 to 75,000.

15. The beverage according to at least one of claims 8 to 14, wherein
the ratio of the sugar content (in g/L) and the total amount of iso-alpha acids (in g/L) in the beverage is in a range of from 10 to 100,000, or from 100 to 100,000;
the beverage has a specific gravity at 20°C in a range of from 1.002 to 1.050;
the beverage comprises at least 3 hop-based flavoring agents selected from the group consisting of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate, and citronellol, and wherein the total concentration of hop-based flavoring agents in the beverage is in a range of from 0.1 to 20 mg/L;
the concentration of myrcene in the beverage is at least 10 µg/L, wherein the concentration of linalool in the beverage is at least 15 µg/L, and wherein the concentration of humulene in the beverage is at least 10 µg/L; and/or
the total concentration of myrcene, linalool and humulene in the beverage is at least 25% as compared to the total concentration of myrcene, linalool, humulene, beta-caryophyllene, alpha-pinene, beta-pinene, 2-methylbutyl isobutyrate, 3-methylbutyl isobutyrate, isobutyl isobutyrate, geraniol, geranyl acetate, methyl geranate, 2-undecanone, 2-decanone, 2-nonanone, 2-dodecanone, 6-methyl-5-hepten-2-one, methyl nonanoate, ethyl-2-methyl butanoate, isoamyl propanoate, beta-limonene, terpinolene, terpineol, terpinene-4-ol, nerol, farnesene, citronellyl acetate and citronellol in the beverage.
